# EUROPÄISCHE PATENTANMELDUNG

(11) **EP 4 843 534 A1**
(43) Veröffentlichungstag der Anmeldung: **25.11.2026**
(21) Anmeldenummer: 25177359.4
(22) Anmeldetag: 19.05.2025
(51) Int. Cl.: A61C 17/22, A61C 17/34

(54) **ELEKTRISCHES BÜRSTENHANDTEIL**

(71) Anmelder: Trisa Holding AG, 6234 Triengen (CH)
(72) Erfinder: Scherzinger, Stefan, 6130 Willisau (CH); Portmann, Stefan, 6262 Langnau b. Reiden (CH)
(74) Vertreter: Daub, Thomas

(57) **Zusammenfassung**

Elektrisches Bürstenhandteil (10a; 10b), insbesondere Zahnbürstenhandteil, mit zumindest einer Schnittstelle (18a; 18b) zu einer Kopplung mit einer Aufsteckbürste (12a; 12b), mit zumindest einem Gehäuse (14a; 14b), mit zumindest einer in dem Gehäuse (14a; 14b) aufgenommenen Einschubeinheit (67a; 67b) mit einer Antriebseinheit (58a; 58b) zu einem Antrieb der Aufsteckbürste (12a; 12b), welche zumindest einen Elektromotor (60a; 60b) umfasst, mit zumindest einem Energiespeicher (62a; 62b) zu einer Versorgung der Antriebseinheit (58a; 58b) mit Energie, und mit der Schnittstelle (18a; 18b), welche eine Welle (20a; 20b) mit einer Drehachse (54a; 54b) aufweist, welche sich zumindest im Wesentlichen parallel zu einer Haupterstreckungsrichtung des Gehäuses (14a; 14b) erstreckt.

Es wird vorgeschlagen, dass die Antriebseinheit (58a; 58b), insbesondere der Elektromotor (60a; 60b) der Antriebseinheit (58a; 58b), zu einem direkten Antrieb der Welle (20a; 20b) der Schnittstelle (18a; 18b) vorgesehen ist.

## Beschreibung

### Stand der Technik

Die Erfindung betrifft ein elektrisches Bürstenhandteil.

Es ist bereits ein elektrisches Bürstenhandteil, insbesondere Zahnbürstenhandteil, mit zumindest einer Schnittstelle zu einer Kopplung mit einer Aufsteckbürste, mit zumindest einem Gehäuse, mit zumindest einer in dem Gehäuse aufgenommenen Einschubeinheit mit einer Antriebseinheit zu einem Antrieb der Aufsteckbürste, welche zumindest einen Elektromotor umfasst, mit zumindest einem Energiespeicher zu einer Versorgung der Antriebseinheit mit Energie, und mit der Schnittstelle, welche eine Welle mit einer Drehachse aufweist, welche sich zumindest im Wesentlichen parallel zu einer Haupterstreckungsrichtung des Gehäuses erstreckt, vorgeschlagen worden.

Die Aufgabe der Erfindung besteht insbesondere darin, eine gattungsgemäße Vorrichtung mit verbesserten Eigenschaften hinsichtlich einer Laufruhe, hoher Reinigungsleistung, Variabilität bzw. Einstellbarkeit und/oder einer Kompaktheit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem elektrisches Bürstenhandteil, insbesondere Zahnbürstenhandteil, mit zumindest einer Schnittstelle zu einer Kopplung mit einer Aufsteckbürste, mit zumindest einem Gehäuse, mit zumindest einer in dem Gehäuse aufgenommenen Einschubeinheit mit einer Antriebseinheit zu einem Antrieb der Aufsteckbürste, welche zumindest einen Elektromotor umfasst, mit zumindest einem Energiespeicher zu einer Versorgung der Antriebseinheit mit Energie, und mit der Schnittstelle, welche eine Welle mit einer Drehachse aufweist, welche sich zumindest im Wesentlichen parallel zu einer Haupterstreckungsrichtung des Gehäuses erstreckt.

Es wird vorgeschlagen, dass die Antriebseinheit, insbesondere der Elektromotor der Antriebseinheit, zu einem direkten Antrieb der Welle vorgesehen ist. Die Welle ist vorzugsweise ein integraler Bestandteil der Antriebseinheit, insbesondere des Elektromotors. Die Welle interagiert direkt insbesondere unmittelbar mit der Aufsteckbürste. Die Welle bildet zumindest teilweise die Schnittstelle aus. Auf eine zusätzliche Abtriebswelle und/oder ein Getriebe zwecks Bewegungstransformation und/oder eine Über- oder Untersetzung innerhalb des Bürstenhandteils, insbesondere als Teil der Einschubeinheit, insbesondere als Teil der Antriebseinheit, kann vorzugsweise verzichtet werden. Die Bewegung der Welle der Antriebseinheit insbesondere des Elektromotors, wird somit im Bürstenhandteil unverändert, insbesondere unmittelbar, insbesondere direkt mit gleichem Drehwinkel und Frequenz mittels Schnittstelle auf die Aufsteckbürste übertragen.

Ferner wird vorgeschlagen, dass die Antriebseinheit, insbesondere der Elektromotor, zu einer direkten Erzeugung einer oszillierenden Bewegung der Welle vorgesehen ist, wobei eine Bewegung der Welle dazu vorgesehen ist, genau eine oszillierende Hin-und-Her-Bewegung des Bürstenkopfs zu erzeugen. Dies gilt sowohl für die Sonic - als auch für die oszillierende Anwendung. Beide Anwendungen werden in der Folge noch detaillierter beschrieben.

Das elektrische Bürstenhandteil ist insbesondere von einem elektrischen Körperpflegegerät gebildet. Bevorzugt ist das elektrische Bürstenhandteil von einem elektrischen Zahnbürstenhandteil gebildet. Dabei sind insbesondere verschiedene Bewegungsformen für die Aufsteckbürste, insbesondere deren Bürstenkopf denkbar, wie beispielsweise Oszillationen oder Überlagerungen davon. Die Oszillation der Aufsteckbürste und/oder der bewegten Teile - insbesondere eines Bürstenkopfs der Aufsteckbürste - kann im Wesentlichen um eine Achse parallel oder senkrecht zur Längsrichtung der Welle, insbesondere der Drehachse der Welle, erfolgen.

Unter einer "Schnittstelle" soll insbesondere ein Bereich des elektrischen Bürstenhandteils verstanden werden, der zu einer verliersicheren Kopplung mit einer Aufsteckbürste vorgesehen ist. Entsprechend den unterschiedlichen Aufsteckbürstenkonzepten sind mehrere Ausführungsformen der Schnittstelle denkbar. Die Schnittstelle ist für eine erste Ausführungsform (oszillierende Anwendung), die durch eine Drehachse des Bürstenkopfs im Wesentlichen senkrecht zu einer Längserstreckung des Bürstenhandteils, insbesondere zur Welle der Antriebseinheit, vorzugsweise des Elektromotors, charakterisiert ist, ausgebildet. Alternativ kann die Schnittstelle für eine zweite Ausführungsform (Sonic-Anwendung genannt), die durch eine Drehachse der Aufsteckbürste insbesondere des Bürstenkopfs parallel zu einer Längserstreckung des Bürstenhandteils, insbesondere parallel oder sogar kollinear zur Welle der Antriebseinheit, insbesondere des Elektromotors, charakterisiert ist, ausgebildet sein. Bevorzugt ist die Schnittstelle zu einer Verbindung mit einer Aufsteckbürste eingerichtet. Vorzugsweise umfasst die Schnittstelle zumindest eine aus einem Gehäuse des Bürstenhandteils hervorstehende Welle der Antriebseinheit, vorzugsweise des Elektromotors. Zur Kopplung mit der Schnittstelle weist eine Aufsteckbürste eine Schnittstellenaufnahme auf. Vorzugsweise ist die Schnittstellenaufnahme insbesondere zu einer kraft- und/oder formschlüssigen Aufnahme der Schnittstelle vorgesehen, um die Bewegung der Antriebseinheit, insbesondere des Elektromotors, auf die Aufsteckbürste zu übertragen. Die Schnittstellenaufnahme der Aufsteckbürste bildet insbesondere einen Aufnahmebereich aus, in welchen die Schnittstelle des Bürstenhandteils eingeschoben werden kann, wobei die Schnittstelle insbesondere ab einer definierten Einschubkraft in dem Aufnahmebereich kraft- und/oder formschlüssig verrastet und/oder verklemmt. Weiter kann die Schnittstelle an mehreren Positionen mit dem Aufnahmebereich auswechselbar verbunden werden (z.B. mittels Verrasten und/oder Verklemmen etc.), beispielsweise im Bereich der Welle und/oder auch im Bereich eines Zapfens. In einer Ausgestaltungsvariante bildet ausschließlich die Welle die Schnittstelle (Sonic-Anwendung). In einer anderen Ausgestaltungsvariante bildet die Welle und der Zapfen die Schnittstelle (oszillierende Anwendung).

Vorzugsweise ist die Schnittstellenaufnahme auf einer dem Bürstenkopf abgewandten Seite der Aufsteckbürste angeordnet. Die Bewegung der Welle wird vorzugsweise direkt, insbesondere getriebelos, auf die Aufsteckbürste übertragen. Die Bewegung der Welle wird dabei direkt an die Aufsteckbürste weitergegeben. Eine Umlenkung der Bewegung kann in der oszillierenden Anwendung außerhalb des Bürstenhandteils in der Aufsteckbürste vorgesehen sein, insbesondere von der Längsachse der Welle auf eine im Wesentlichen senkrecht dazu stehende Rotationsachse.

Das elektrische Bürstenhandteil weist ferner das Gehäuse mit einem abnehmbaren Deckel auf. Unter einem "Gehäuse" soll in diesem Zusammenhang insbesondere eine schützende Außenhülle des Bürstenhandteils verstanden werden. Vorzugsweise bildet das Gehäuse einen wesentlichen Teil des Bürstenhandteils.

Vorzugsweise weist das Gehäuse zumindest aus einer Hartkomponente bestehende Bauteile auf, welche eine strukturtragende Funktion erfüllen. Besonders bevorzugt besteht das Gehäuse insbesondere aus einer oder mehreren Hartkomponenten und optional einer oder mehreren Weichkomponenten. Aus Weichkomponenten können insbesondere Griffflächen zum Halten und Schaltflächen, insbesondere zur Betätigung von Schaltern, ausgebildet sein. Vorzugsweise bilden die Weichkomponenten eine Umspritzung der Hartkomponenten und/oder sie füllen Ausnehmungen im Randbereich des Gehäuses aus. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Bevorzugt weist das Gehäuse zudem einen Griffbereich auf. Vorzugsweise bildet das Gehäuse einen Griff des Bürstenhandteils aus. Das Gehäuse ist vorzugsweise von einem oder mehreren Kunststoffen (Hart- und/oder Weichkomponenten) gebildet. Grundsätzlich wäre jedoch auch denkbar, dass das Gehäuse aus einem anderen, einem Fachmann als sinnvoll erscheinenden Material gebildet ist.

An einem Ende des Gehäuses befindet sich eine Anbindung, welche strukturell zur Aufnahme des Deckels ausgelegt ist. Das Gehäuse kann einen Bajonett-Verschluss aufweisen, bei dem mehrere um den Umfang angeordnete Vorsprünge und/oder Vertiefungen eine formschlüssige Verbindung mit korrespondierenden Gegenstrukturen im Deckel eingehen. Das Zusammenspiel zwischen Gehäuse und Deckel ist so gestaltet, dass beim Aufdrehen oder Aufstecken des Deckels die Verbindungsstruktur formschlüssig und/oder kraftschlüssig einrastet. Die Verbindung erfolgt bevorzugt durch Drehen im Sinne eines Bajonett-Verschlusses, alternativ kann auch ein Steckmechanismus vorgesehen sein.

Das Bürstenhandteil weist eine erste Dichteinheit auf. Die erste Dichteinheit ist zu einer Abdichtung zwischen dem Gehäuse und dem Deckel eingerichtet. Die erste Dichteinheit ist vorzugsweise als ein O-Ring ausgebildet. Der O-Ring ist vorzugsweise in einer Nut in dem Deckel angeordnet. Der O-Ring liegt im montierten Zustand an dem Gehäuse an und bewirkt eine Abdichtung zwischen Gehäuse und Deckel.

Das Gehäuse weist insbesondere eine zumindest im Wesentlichen zylindrische Gehäusestruktur um eine Längserstreckungsrichtung des Bürstenhandteils auf. Im Inneren des Gehäuses sind weitere funktionale Elemente vorgesehen, insbesondere elektronische Bedieneinheiten wie Schalter und Anzeigeelemente. Die Schalter dienen insbesondere dem Ein-/Ausschalten des Bürstenhandteils sowie der Programmauswahl. Es kann/können ein einzelner Schalter oder auch mehrere Schalter vorgesehen sein, wobei bei mehreren Schaltern unterschiedliche Funktionen gesteuert werden können. Die Schalter sind vorzugsweise auf einer oder mehreren Printplatten angebracht. Die Schalter sind vorzugsweise von außerhalb des Gehäuses betätigbar. Dabei können Gehäusedurchbrüche, welche vorzugsweise mit Weichkomponente überdeckt sind, verwendet werden, um mit den Schaltern zu interagieren. Dabei ist die Anordnung vorzugsweise so gewählt, dass der jeweilige Schalter von außerhalb des Gehäuses, d.h. von einem Benutzer, betätigt werden kann, ohne dass ein direkter Eingriff in das Gehäuseinnere erforderlich ist. Die Schalter sind bevorzugt auf einer Seite des Gehäuses angeordnet, können aber ebenso auf mehreren Seiten gleichzeitig positioniert sein. Die Schalter sind bevorzugt auf der Vorderseite des Gehäuses und weniger bevorzugt auch auf der Rückseite des Gehäuses angeordnet. Alternativ können auch mit einem Schalter interagierende minimal bewegliche Zonen in der Hartkomponente des Gehäuses vorgesehen sein. Wiederum alternativ können im Innern des Gehäuses elektronische Mittel vorgesehen sein, welche als Schalter agieren und den Schaltvorgang ohne mechanische Interaktion detektieren (z.B. ein kapazitives Schaltelement). Am Gehäuse sind in diesem Fall für den Nutzer erkennbare Zonen vorgesehen, welche den Schaltvorgang bei bloßer Berührung auslösen.

Das Gehäuse kann auch Durchbrüche für optische Elemente aufweisen, insbesondere für LED-Anzeigen, Sichtfenster oder Displays.

Die Durchbrüche im Gehäuse müssen so gestaltet sein, dass sie mit auf der Printplatte angeordneten Anzeigeelementen korrelieren. Diese Durchbrüche können auf einer oder mehreren Seiten des Gehäuses realisiert sein. Die Anzeigeelemente können alternativ durch das Gehäuse durchscheinend ausgeführt sein oder durch transparente Gehäusebereiche sichtbar gemacht sein. Auch diese transparenten Gehäusebereiche sind vorzugsweise derart angeordnet, dass sie eine Ausrichtung zu der Printplatte aufweisen, an denen die betreffenden Anzeigeelemente verbaut sind. Das Gehäuse kann als einteiliges Bauteil aus einer Hartkomponente ausgeführt sein oder alternativ als Mehrkomponentenbauteil aus einer oder mehreren Hart- und/oder Weichkomponenten. Bei Mehrkomponentenvarianten können beispielsweise Weichkomponenten für Bedieneinheiten wie Schalter verwendet werden, während die übrigen Teile des Gehäuses aus einer Hartkomponente bestehen. Die Kombination harter und weicher Komponenten erlaubt insbesondere eine Optimierung von Bedienkomfort, Haptik und Schutz vor Feuchtigkeit. Die einzelnen Bauteile sind dabei bevorzugt so aufeinander abgestimmt, dass sie zusammen eine mechanisch stabile und elektronisch funktionssichere Einheit bilden.

Das Bürstenhandteil weist vorzugsweise am Bürstenkopf zugewandten Ende eine zweite Dichteinheit auf. Die zweite Dichteinheit ist vorzugsweise zu einem Abdichten des Bürstenhandteils im Bereich der Schnittstelle eingerichtet. Die zweite Dichteinheit erfüllt insbesondere die Aufgabe, das Eindringen von Feuchtigkeit, Schmutz oder anderen Verunreinigungen in ein Bürstenhandteilinneres zu verhindern. Die zweite Dichteinheit kann mehrteilig, beispielsweise dreiteilig, zweiteilig oder alternativ einteilig ausgebildet sein. In einer ersten Ausführungsform weist die zweite Dichteinheit eine Balgdichtung und eine Dichtkappe auf. Ferner kann die zweite Dichteinheit einen O-Ring aufweisen.

Die zweite Dichteinheit, insbesondere die Dichtkappe, kann ferner zu einer Längenkompensation der Einschubeinheit innerhalb des Gehäuses, beispielsweise durch Fertigungstoleranzen, beitragen. Dabei wird die Einschubeinheit zwischen Gehäuse und Deckel mit Vorspann fixiert und die Stirnfläche der Dichtkappe bildet dabei einen federnden Ausgleich. Dies kann insbesondere dienlich sein, falls die Einschubeinheit in unterschiedlichen Gehäusen verbaut wird. Die Materialstärke an der Stirnfläche beträgt zwischen 0.5 mm und 5 mm, vorzugsweise zwischen 0.75 mm und 3 mm.

Ferner dient die zweite Dichteinheit zu einer Schwingungsdämpfung. Die Dichtkappe bildet dabei vorzugsweise die wesentliche Berührungsfläche der Einschubeinheit mit dem Gehäuse. Wie beschrieben übt dann der Deckel einen Vorspann auf die Einschubeinheit aus. Beim Gebrauch des Geräts nimmt die Dichtkappe nicht nur unerwünschte Vibrationen auf, sondern dämpft, insbesondere federt, auch Längs-, Torsions- oder Biegekräfte, welche auf den Bürstenkopf und folglich auf die Einschubeinheit wirken, ab.

Die zweite Dichteinheit kann dabei so ausgeführt sein, dass gleichzeitig ein Dämpfen, Ausrichten, Halten und Abdichten ermöglicht wird.

Eine Motorgeometrie, über welche die zweite Dichteinheit, insbesondere die Dichtkappe gestülpt werden kann, ist dabei Teil der Ausrichtungsstruktur, sodass eine präzise Positionierung der Antriebseinheit, vorzugsweise des Elektromotors, insbesondere der Einschubeinheit relativ zu dem Gehäuse sichergestellt werden kann.

Der Energiespeicher dient vorzugsweise zur Versorgung der Antriebseinheit und gegebenenfalls weiterer elektrischer Komponenten mit elektrischer Energie. In einer bevorzugten Ausführungsform ist der Energiespeicher auswechselbar ausgestaltet. Der Energiespeicher ist vorzugsweise nicht fest verlötet oder dauerhaft verbunden, sondern wird lösbar in der Gehäusestruktur gehalten. Dies ermöglicht einen Austausch des Energiespeichers im Rahmen von Wartung, Erneuerung, oder Typumstellung. Zur mechanischen Fixierung dienen insbesondere seitliche, vorzugsweise federnde, Haltearme oder Klemmrippen, die eine form- und kraftschlüssige Lagerung ermöglichen. Der Energiespeicher wird dabei bevorzugt in einer kammerartigen Zone gehalten. Eine Längsverschiebung wird vorzugsweise durch Anschlagelemente vermieden. Diese Anschlagelemente können durch Wandbereiche oder federnde, insbesondere elastische, Vorsprünge realisiert sein. Eine Kontaktierung der Antriebseinheit zum Stromkreis erfolgt bevorzugt mittels ebenfalls vorzugsweise federnden Kontaktblechen im Bereich der Anschlagelemente, die im Bereich der Kontakte des Energiespeichers angeordnet sind. Die Kontaktbleche können als federelastische Stromabnehmer ausgestaltet sein und sind elektrisch leitend mit den weiteren elektrischen Komponenten des Bürstenhandteils verbunden. Als Energiespeicher können beispielsweise folgende Typen verwendet werden: Einwegbatterien, z. B. Alkali-Mangan-Zellen oder Zink-Luft-Zellen, Akkumulatoren, insbesondere Nickel-Metallhydrid- (NiMH) oder Lithium-Ionen-Akkus (Li-Ion). Die Konstruktion der kammerartigen Zone kann für beide Varianten angepasst sein, wobei insbesondere bei Akkus eine hohe mechanische Präzision zur Vermeidung von Spiel vorgesehen ist.

Das elektrische Bürstenhandteil weist bevorzugt eine Ladeschnittstelle auf, über welche der Energiespeicher mit elektrischer Energie versorgbar ist. Je nach Ausführungsform sind unterschiedliche Ladevarianten vorgesehen, welche eine Anpassung an Ladeinfrastruktur, Wasserschutz, Wartbarkeit oder Einwegverwendung erlauben. In einer bevorzugten Variante umfasst die Ladeschnittstelle eine Ladespule, welche zur induktiven Energieübertragung von einer äußeren Ladeeinrichtung (beispielsweise einem Ladegerät) vorgesehen ist. Die Ladespule ist dabei so ausgestaltet, dass sie um den Spulenträger herumgewickelt ist. Bevorzugt ist die Ladespule in ihrer Positionierung auf den Energiespeicher abgestimmt, sodass ein optimaler Energietransfer zwischen Ladegerät und Energiespeicher möglich ist. Hierzu weist der Deckel eine strukturierte Geometrie auf, insbesondere eine Vertiefung für das Ladegerät. Die Vertiefung steht im Eingriff mit der Ladeeinrichtung. Die Vertiefung bildet auf der Gegenseite eine Erhebung. Diese Erhebung ist im montierten Zustand des Deckels in die Spule eingeführt.

In einer weiteren Variante umfasst die Ladeschnittstelle einen Stecker und eine Buchse, welche zu einer Ladung mittels direkter Energieübertragung, insbesondere Direktladung (anstelle der vorgängig beschriebenen induktiven Energieübertragung), vorgesehen sind. Der Stecker ist über ein Kabel mit einem Netzgerät verbunden. Die Abdichtung der Ladeschnittstelle ist als Presspassung vorzugsweise ohne zusätzliches Dichtmittel ausgebildet. Zur Gewährleistung eines geschlossenen Gehäuses kann der Deckel des Bürstenhandteils eine Ausnehmung für einen Stecker-Zugang enthalten. Bei dieser Lösung ist die Abdichtung mehrteiliger als bei der induktiven Ladelösung. Die genutzte Buchse ist derart aufgebaut, dass eine Abdichtung gewährleistet ist. Zusätzlich kann sie aber mit weiteren Dichtmitteln ausgestattet sein, beispielsweise mit einer zusätzlichen Klappe oder mit einem Stopfen, welche zum Laden entfernt oder geöffnet werden müssen und welche die Buchse an sich abdichten oder schützen sollen. In einer weiteren Ausführungsform kann eine magnetische Kontaktkupplung vorgesehen sein, dabei wird der Stecker magnetisch so in Position gehalten, dass die elektrischen Kontakte sichergestellt werden und Strom- und ggf. Datensignale übertragen werden können.

Die Ausgestaltung kann gemäß aus der WO 2024/223867 A1 bekannten Prinzipien erfolgen, z. B. mit automatischem Ausrichten der Kontakte des Steckers beim Anlegen des Steckers an die Ladekontakte.

In einem alternativen Ausführungsbeispiel kann das Bürstenhandteil ohne wiederaufladbare Batterie betrieben werden, z. B. mit Einwegbatterien. In dieser Ausgestaltung entfällt die Ladeschnittstelle vollständig. Die Vielfalt der möglichen Ladeschnittstellen ermöglicht eine flexible Anpassung an Marktsegmente, Schutzarten und Nutzerverhalten. Insbesondere die anklickbare Ausgestaltung und Ladespulenintegration erlaubt eine robuste, wasserdichte und wartungsarme Ladefunktion, während eine Direktladung eine kostengünstige und energieeffiziente Umsetzung für einfache Bürstenhandteile ermöglicht.

Unter einem "direkten Antrieb" soll insbesondere verstanden werden, dass ein Antrieb der Welle frei von einer Bewegungstransformation und/oder Über- und Untersetzung durch die Antriebseinheit erfolgt. Auf ein Getriebe kann daher in der Antriebseinheit vorzugsweise verzichtet werden. Unter einer Bewegungstransformation verstehen wir Mittel in der Antriebseinheit, welche die Bewegung der Welle der Antriebseinheit, bevorzugt des Elektromotors, in eine andere Bewegung einer zusätzlichen Abtriebswelle umformen. Wie aus dem Stand der Technik bekannt werden beispielsweise kontinuierliche Drehbewegungen der Antriebseinheit, bevorzugt des Elektromotors, in eine rotierend - oder translatorisch oszillierende Bewegung der Abtriebswelle der Antriebseinheit transformiert.

Die Bewegung der Welle der Antriebseinheit, bevorzugt des Elektromotors, wird somit von innerhalb des Bürstenhandteils, insbesondere der Einschubeinheit, insbesondere von dessen Antriebseinheit, insbesondere von dessen Elektromotor unverändert, insbesondere unmittelbar, insbesondere direkt auf die Aufsteckbürste übertragen.

Vorzugsweise ist die Drehbewegung der Welle der Antriebseinheit, bevorzugt des Elektromotors eine oszillierende Rotationsbewegung, d.h. die Welle der Antriebseinheit, insbesondere des Elektromotors, wechselt die Rotationsrichtung dauernd und führt damit vorzugsweise keine 360° Drehbewegung aus. Bevorzugt ist die Welle als ein integraler Bestandteil der Antriebseinheit, insbesondere als eine Welle der Antriebseinheit, insbesondere des Elektromotors, ausgebildet.

Dabei soll unter "zumindest im Wesentlichen parallel" insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° (Winkelgrad) und besonders vorteilhaft kleiner als 2° aufweist. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Durch die erfindungsgemäße Ausgestaltung des elektrischen Bürstenhandteils kann insbesondere ein vorteilhaft kompaktes, handliches und kostengünstiges Bürstenhandteil bereitgestellt werden. Es kann insbesondere auf ein Getriebe verzichtet werden, wodurch Baugröße und Montageschritte eingespart werden können. Ferner kann dadurch insbesondere eine vorteilhaft variable insbesondere flexible Ansteuerung der Antriebseinheit ermöglicht werden welche viele verschiedene Bewegungsmuster der Aufsteckbürste erlaubt.

Ferner wird vorgeschlagen, dass das elektrische Bürstenhandteil zumindest die, in dem Gehäuse angeordnete, insbesondere einstückig ausgeführte, Einschubeinheit insbesondere eine Rahmeneinheit aufweist, welche zumindest teilweise die Antriebseinheit und den Energiespeicher aufnimmt. Die Rahmeneinheit bildet die Basis, insbesondere die Grundstruktur, für die Einschubeinheit. Die vollständig bestückte Rahmeneinheit (insbesondere mit Antriebseinheit, Spulenträger) bildet die Einschubeinheit. Die Rahmeneinheit als solche berührt den Innenbereich des Gehäuses vorzugsweise nicht direkt.

Die Verbindung zwischen der Einschubeinheit und dem Gehäuse erfolgt bevorzugt an zwei Zonen, nämlich den einander gegenüberliegenden Enden der Einschubeinheit. Der Einschubeinheit ist im Bereich des Wellenaustritts und im Bereich des Deckels in dem Gehäuse gelagert. Das Gehäuse ist so ausgestaltet, dass im montierten Zustand die Einschubeinheit im Gehäuse gehalten und geführt, insbesondere positioniert, wird. Die Einschubeinheit ist insbesondere dazu vorgesehen, in einem montierten Zustand in dem Gehäuse angeordnet zu sein.

Vorzugsweise erstreckt sich die Einschubeinheit axial über die gesamte Länge der Antriebseinheit. Vorzugsweise nimmt die Rahmeneinheit zumindest einen Teil der Antriebseinheit auf. Vorzugsweise bildet die Rahmeneinheit eine Aufnahme für Teile der Antriebseinheit.

Ferner soll in diesem Zusammenhang unter einer "Rahmeneinheit" insbesondere eine Stützstruktur ausbildende Einheit verstanden werden, die einstückig ausgeführt ist und/oder zumindest im Wesentlichen aus fest miteinander verbundenen Teilen besteht. Die Rahmeneinheit ist insbesondere von mehreren voneinander getrennten Einzelrahmen verschieden. Vorzugsweise bildet die Rahmeneinheit mehrere Aufnahmebereiche aus, insbesondere zumindest für die Antriebseinheit und den Energiespeicher, welche fest zueinander angeordnet sind. Die Rahmeneinheit ist als ein vorgefertigtes Modul ausgebildet, welches an einem Stück in das Gehäuse eingebaut/eingebracht werden kann.

Das Gehäuse und/oder die Einschubeinheit sind derart ausgelegt, dass in dem Gehäuse verschieden aufgebaute, insbesondere verschiedene Ausführungsformen von Einschubeinheiten, aufgenommen werden können. Dadurch kann insbesondere ein vorteilhaft montagefreundliches und für verschiedene Aufsteckbürsten dienendes elektrisches Bürstenhandteil erreicht werden. Es kann insbesondere ein vorteilhaft kompakter und modularer Aufbau bereitgestellt werden. Ferner kann insbesondere eine vorteilhaft einfache und zuverlässige Montage erreicht werden.

Die Rahmeneinheit ist bevorzugt als einstückiges Spritzgussteil ausgebildet. Es kann vorteilhaft eine hohe Maßhaltigkeit, Reproduzierbarkeit und Integration von Funktionselementen erreicht werden. In einer bevorzugten Ausführung besteht die Rahmeneinheit und weitere Bauteile der Einschubeinheit wie der Zapfen, Spulenträger aus einer Hartkomponente. Als Material für diese Hartkomponente ist vorzugsweise ein Polyoxymethylen (POM) vorgesehen. Diese Materialwahl ermöglicht eine präzise und mechanisch belastbare Umsetzung von geometrischen Schnittstellen, etwa zur Aufnahme von Printplatten, Antriebseinheit, Dichteinheiten oder Aufsteckbürsten. Die Rahmeneinheit ist bevorzugt so ausgelegt, dass sie in funktionale Zonen unterteilt ist, welche jeweils zur Aufnahme bestimmter Baugruppen oder Komponenten dienen. Diese Zonen ermöglichen eine strukturierte Anordnung der elektrischen, mechanischen und energetischen Elemente im Inneren des elektrischen Bürstenhandteils.

Die Einschubeinheit weist vorzugsweise eine Ladespulenzone auf, welche zur Montage der Ladespule vorgesehen ist und insbesondere vom Spulenträger gebildet ist. Die Ladespulenzone befindet sich in Längsrichtung in einem vom Wellenaustritt aus betrachtet gegenüberliegenden Endbereich der Einschubeinheit. Der Spulenträger der Ladespule ist vorzugsweise nicht einstückig mit der Rahmeneinheit hergestellt. Der Spulenträger ist vorzugsweise als ein separates Bauteil ausgebildet und wird mechanisch an die Rahmeneinheit verbunden, insbesondere in diese eingeklickt. Dazu weist der Spulenträger bevorzugt Klemmnasen, Raststrukturen oder elastische Federarme auf. Diese Trennung ermöglicht eine materialoptimierte Fertigung (z. B. unterschiedliche Kunststoffe für Spulenträger, Rahmeneinheit und Gehäuse oder ein einfacheres Aufbringen der Spule auf den Spulenträger) sowie eine vereinfachte Wartung oder Reparatur.

Die Rahmeneinheit weist eine Akkuzone auf, welche zur Aufnahme des Energiespeichers, insbesondere des Akkumulators, vorgesehen ist. Diese Akkuzone ist in der Rahmeneinheit anschließend an die Ladespulenzone angeordnet. Die Akkuzone ist so ausgestaltet, dass ein auswechselbarer Energiespeicher aufnehmbar ist. Dies bedeutet, dass der Energiespeicher nicht fest vergossen, verlötet oder verklebt, sondern lösbar in der Akkuzone fixierbar ist. Dadurch wird der Austausch des Akkus im Rahmen von einer Wartung, Reparatur oder Erneuerung zur Lebensdauerverlängerung ermöglicht. Die Akkuzone weist vorzugsweise die federnden Kontaktbleche auf, welche den Akku elektrisch leitend verbindet und zugleich axial fixieren. Zusätzlich wird der Akku in Querrichtung durch Klemmrippen in Position gehalten.

Diese Kombination aus Klemmung und federnden Kontakten ermöglicht eine spielfreie, lötfreie und zuverlässige Fixierung des Akkus, ohne dass zusätzliche Gehäuseteile verschraubt oder mittels Schnappverbindung verbunden werden müssen. Die Kontaktbleche können z. B. als Blattfedern, als U-förmige Bügel oder als elastische Laschen mit Löt- oder Steckanschluss ausgeführt sein.

Die Rahmeneinheit weist bevorzugt eine Service-Zone auf, welche zwischen der Akkuzone und einer Antriebszone angeordnet ist. Die Service-Zone ist insbesondere dazu vorgesehen, einen Längenausgleich innerhalb der Rahmeneinheit zu ermöglichen. Die Service-Zone kann einfach verkürzt, oder verlängert werden, damit die Einschubeinheit in verschiedene Gehäuse passt. Darüber hinaus kann die Service-Zone auch für automatisiertes Handling im Fertigungsprozess genutzt werden. Die Service-Zone kann z. B. Greifhilfen, Führungsrillen oder Ausnehmungen aufweisen, die von Handling-, Robotergreifern oder Positioniereinheiten in der automatisierten Montage verwendet werden. In einer bevorzugten Ausgestaltung ist die Service-Zone frei von aktiven elektronischen oder mechanischen Funktionselementen, sodass sie als Pufferzone flexibel gestaltbar bleibt. Alternativ kann sie zusätzlich als Montagezone für Testpunkte, Serienkennzeichnung oder Qualitätsmerkmale genutzt werden.

Die Rahmeneinheit weist die Antriebszone auf, welche zur Aufnahme und Lagerung der Antriebseinheit vorgesehen ist. Die Antriebseinheit ist innerhalb der Antriebszone nicht komplett gekapselt, sondern über offene Stellen zugänglich, was eine vereinfachte Montage sowie den Austritt der Welle ermöglicht. Die Antriebszone ist bevorzugt so ausgestaltet, dass sie zur Vorderseite und zur Rückseite eine durchgehende, formstabile Wandstruktur aufweist, die zur Abstützung auf beiden Seiten des Motors dient. Diese Wandstruktur ist oben und unten vorzugsweise flach, bzw. eben ausgestaltet, da die jeweilige Wandstruktur auf der jeweils anderen Seite an der jeweiligen Printplatte anliegt. Zur seitlichen Fixierung der Antriebseinheit sind mehrere Anlageflächen und Anschlagstrukturen vorgesehen. Diese Anlageflächen und Anschlagstrukturen folgen im Wesentlichen der Form der Antriebseinheit, bevorzugt des Elektromotors.

Der am Wellenaustritt angeordnete Endbereich der Antriebseinheit ist zum einen an den beiden Wandstrukturen und zum anderen seitlich auf einer Anlagefläche abgestützt. Der dem Wellenaustritt gegenüberliegende Endbereich der Antriebseinheit weist seitlich ebenfalls eine Anlagefläche auf, diese liegt der Anlagefläche auf der Seite des Wellenaustritts diagonal gegenüber, sodass die Antriebseinheit beidseitig abgestützt ist. Zusätzlich kann auf der dem Wellenaustritt gegenüberliegenden Seite der Antriebseinheit im Endbereich seitlich eine weitere Anlagefläche vorgesehen sein, um eine stabile Abstützung der Antriebseinheit an mindestens drei Anlageflächen zu gewährleisten.

Die Anlageflächen sind vorzugsweise an eine Außengeometrie der Antriebseinheit, insbesondere des Elektromotors, angepasst, sodass dieser selbstzentrierend in die Antriebszone eingelegt werden kann. Am Ende der Antriebszone, gegenüberliegend der Wellenaustrittsseite, ist eine Anschlagstruktur, beispielsweise in Form einer Fläche orthogonal zur Längsachse der Welle, vorgesehen, z. B. als Rückhalteanschlag oder zur Lastverteilung. Wenn das Bürstenhandteil fertig montiert ist und sich die Einschubeinheit im Gehäuse befindet, wird eine Längsverschiebung der Antriebseinheit, insbesondere des Elektromotors, damit verhindert. Auf der Wellenaustrittsseite der Antriebseinheit liegt die Antriebseinheit physisch via Zapfen und/oder Dichtungskappe am Gehäuse an. Auf der dem Wellenaustritt gegenüberliegenden Seite der Antriebseinheit liegt die Antriebseinheit an der Anschlagstruktur an.

Weiter ist es möglich, die Anschlagstruktur durch Anschlagrippen oder andere Form- und/oder Spannelemente zu ersetzen, die an Anlageflächen vorgesehen sind, jedoch keine durchgehende Fläche senkrecht zur Längsachse der Welle bilden.

Die offene Ausgestaltung erleichtert eine automatisierte Montage, erlaubt eine visuelle Inspektion und verbessert eine thermische Entkopplung.

Die Rahmeneinheit weist eine, bevorzugt zwei separate Print-Zonen auf, die jeweils zur Aufnahme mindestens einer Printplatte (Leiterplatte) eingerichtet sind. Die erste Print-Zone ist in Längsrichtung der Rahmeneinheit angeordnet und erstreckt sich über alle weiteren Zonen, insbesondere über die Akkuzone, die Service-Zone sowie die Antriebszone. Die erste Print-Zone beinhaltet eine erste Printplatte, diese ist insbesondere zur Aufnahme einer Hauptplatine oder Funktionsplatine vorgesehen, auf der beispielsweise elektronische Komponenten, Widerstände, Transistoren, Steuerchip, Bedieneinheit/Schalter, Sensoren, Displays wie LED-Anzeigen, Leuchten wie LED's oder Kommunikationsmodule (z. B. Bluetooth, NFC) etc. angeordnet sein können. Die Printplatte wird in Führungsstrukturen eingeschoben oder eingerastet. Zusätzlich kann eine zweite Print-Zone mit einer zweiten Printplatte vorgesehen sein, die sich auf der der ersten Print-Zone gegenüberliegenden Seite der Rahmeneinheit befindet. Grundsätzlich können die für die erste Printplatte genannten elektronischen Komponenten auch auf der zweiten Printplatte angebracht werden z. B. eine Versorgungsplatine, eine Display-Steuerung oder sekundäre Funktionseinheiten aufnehmen.

Die Printplatten können jeweils lösbar oder unlösbar auf der Print-Zone montiert sein. Lösbare Befestigungen können beispielsweise durch Hinterschnitte oder Rastnasen an der Rahmeneinheit erfolgen. Alternativ kann eine Klemmung der Printplatte an der Rahmeneinheit vorgesehen sein. Auch ein Schnapp- insbesondere Klickmechanismus zur lösbaren Fixierung ist denkbar. Bei unlösbaren Montagen können vorspringende Zapfen, auch Rastnasen genannt, der Rahmeneinheit durch entsprechende Aussparungen in der Printplatte geführt und anschließend mittels Nieten (mittels Wärme, Druck, Ultraschall oder dergleichen) gesichert werden. Die Anzahl der Fixierpositionen kann abhängig von einer Länge der Printplatte variieren. Bei Verwendung von Nieten sind abhängig von der Länge der Printplatte vorzugsweise mindestens drei Befestigungspunkte oder mindestens zwei Befestigungspunkte vorgesehen, um eine stabile Lagerung zu gewährleisten. Die Printplatte dient der elektrischen Verbindung von Komponenten wie Steuerungen, Sensoren, Energieversorgung und Signalverarbeitung. Auf der Printplatte befinden sich typischerweise Leitungen, Widerstände, LEDs, Steuereinheiten, Schalter, Displays sowie Kommunikationsschnittstellen wie NFC oder Bluetooth. Die elektrischen Anschlüsse erfolgen vorzugsweise über Lötstellen, die in gleicher Richtung ausgerichtet sind.

Je nach Komplexität können grundsätzlich eine oder zwei Printplatten integriert sein. Dabei können verschiedene Varianten von Anordnungen von Printplatten realisiert sein. Eine Printplatte kann in der ersten Print-Zone oder in der zweiten Print-Zone angebracht sein. Werden zwei Printplatten realisiert, so sind diese in beiden Print-Zonen - d.h. in der ersten und der zweiten Print-Zone angeordnet.

Das elektrische Bürstenhandteil ist in seinen äußeren Abmessungen so gestaltet, dass es kompakt, ergonomisch und funktional optimiert ist.

Die nachfolgenden Maßangaben beziehen sich auf die komplette Einschubeinheit einschließlich der mittels Schnappverbindung verbundenen Ladespulenzone, insbesondere Spulenträger, bis zum Austritt der Welle. Die Gesamtlänge beträgt bevorzugt zwischen 130 mm und 200 mm, bevorzugt 140 mm bis 170 mm. Die Breite beträgt bevorzugt zwischen 10 mm und 30 mm, vorzugsweise im Bereich von 13 mm bis 25 mm. Die Höhe ist vorzugsweise analog zur Breite ausgestaltet und liegt bevorzugt im Bereich von 10 mm bis 30 mm, vorzugsweise von 13 mm bis 25 mm. In einer bevorzugten Ausführung ergibt sich dadurch ein symmetrisch oder leicht elliptisch geformter Querschnitt. Die definierten Abmessungen erlauben für die Dimensionen des umgebenden Gehäuses eine optimale Balance zwischen Ergonomie, Batteriekapazität, Funktionsträgern und Haptik.

Des Weiteren wird vorgeschlagen, dass der Elektromotor der Antriebseinheit von einem Schwinganker-Elektromotor, einem bipolaren Elektromotor oder einem Servomotor, gebildet ist. Besonders bevorzugt kann der Elektromotor insbesondere als bipolarer Servomotor ausgeführt sein. Diese Elektromotoren sind insbesondere dazu geeignet, bei entsprechender Ansteuerung mit der Welle eine oszillierende Drehbewegung auszuführen. Dabei kann die Welle unterschiedliche Bewegungsmuster ausführen.

Es ist denkbar, dass der Elektromotor eine kompakte Einheit aus Antrieb und Steuerelektronik aufweist. Alternativ ist die Steuerelektronik, insbesondere deren elektronische Komponenten, auf der Printplatte vorgesehen. Vorzugsweise ist der Elektromotor zu einer genauen Positionierung der Welle insbesondere durch eine Rückkopplung und/oder eine elektronische Steuerung eingerichtet. Der Elektromotor ist insbesondere für wechselnde Betriebszustände oder gezielte Bewegungsmuster eingerichtet. Insbesondere ist der Elektromotor derart ausgebildet, dass er zu einer direkten, insbesondere getriebelosen, Übertragung einer Bewegung auf die Welle, insbesondere mittels der Welle, auf die Aufsteckbürste eingerichtet ist. Der Elektromotor ist insbesondere zur getriebelosen Übertragung einer Bewegung direkt auf die Aufsteckbürste eingerichtet. Der Elektromotor ist insbesondere dazu eingerichtet, die Bewegung der Welle ohne eine Bewegungstransformation und/oder Über- oder. Untersetzung unmittelbar, insbesondere direkt, auf die Aufsteckbürste zu übertragen. Der Elektromotor, insbesondere dessen Welle, verfügt insbesondere über ein entsprechendes Drehmoment, einen Winkelbereich und Bewegungsmuster, welche ohne eine Bewegungstransformation und/oder Über- oder. Untersetzung dem bestimmungsgemäßen Drehmoment, Winkelbereich und Bewegungsmuster der Aufsteckbürste entspricht.

Ferner ist der Elektromotor vorzugsweise zusätzlich auch zu einer Übertragung einer überlagerten Bewegung eingerichtet. Der Elektromotor ist ferner zur getriebelosen Übertragung variierender Bewegungen eingerichtet.

Insbesondere kann der Elektromotor so angesteuert werden, dass eine bestimmte Bewegungsfrequenz und/oder -amplitude eingehalten wird, auch bei schwankender Last. Insbesondere können Bewegungen übertragen werden, die eine Amplituden-Modulation aufweisen. Ferner können Bewegungen übertragen werden, die eine Frequenz-Modulation aufweisen. Der Elektromotor ist insbesondere zur Erzeugung und getriebelosen Übertragung, einer oszillierenden Bewegung eingerichtet. Insbesondere kann eine oszillierende Bewegung des Elektromotors unmittelbar, insbesondere getriebelos, auf die Welle, insbesondere mittels der Welle, ebenfalls getriebelos an die Aufsteckbürste übertragen werden. Alternativ kann eine hochfrequente Bewegung des Elektromotors unmittelbar, insbesondere getriebelos, auf die Welle der Schnittstelle, insbesondere mittels der Welle, ebenfalls getriebelos an die Aufsteckbürste übertragen werden. Vorzugsweise ist die Welle ein integraler Bestandteil des Elektromotors.

Insbesondere weist der Elektromotor einen oder mehrere Permanentmagneten auf, welche vorzugsweise auf einem Rotor angeordnet sind. Insbesondere weist der Elektromotor mehrere Pole auf, vorzugsweise kann die Polarisierung und/oder das Magnetfeld eines Poles angesteuert werden. Vorzugsweise weist der Elektromotor mit Rückstellfeder mit und ohne Last einen Stromverbrauch von 200 mA bis 800 mA, vorzugsweise von 300 mA bis 600 mA, auf. Vorzugsweise weist der Elektromotor ohne Rückstellfeder mit und ohne Last einen Stromverbrauch von 500 mA bis 1200 mA, vorzugsweise von 600 mA bis 1000 mA, auf. Vorzugsweise weist der Elektromotor eine Nennspannung auf, die vorzugsweise der Nennspannung des Energiespeichers entspricht und vorzugsweise 3 V bis 4,2 V, bevorzugt 3,7 V, beträgt. In einer Ausgestaltungsvariante ist der Elektromotor als ein Schwingankermotor, insbesondere als ein Schwingankermotor mit Feder, ausgebildet.

Der direkte Antrieb der Aufsteckbürste mittels Welle, d.h. ohne eine Bewegungstransformation und/oder Über- oder Untersetzung ermöglicht vorteilhaft eine präzise Steuerung der Schwingungsfrequenz in Echtzeit durch Anpassung der Motorelektronik mittels Steuerungsparameter. Weitere Vorteile ergeben sich aus der kompakten und kostengünstigen Montage sowie dem leisen Betrieb gegenüber einer Antriebseinheit mit Bewegungstransformation und/oder Über- oder Untersetzung.

Bei der Montage wird die Antriebseinheit vorzugsweise seitlich in einen vorgesehenen Aufnahmebereich der Rahmeneinheit eingeführt und anschließend an einem Anschlag positioniert. Die Welle wird dabei insbesondere parallel zur Längsachse der Rahmeneinheit ausgerichtet. Um eine exakte Orientierung zu gewährleisten, wird die Antriebseinheit während des Einführvorgangs geschwenkt. Eine Kontaktverdrahtung der Antriebseinheit erfolgt vorzugsweise durch zwei separate Öffnungen in der Rahmeneinheit. Nach der Ausrichtung und Verdrahtung wird die Antriebseinheit in Richtung ihrer von dem Wellenaustritt abgewandten Seite weiter in die Rahmeneinheit hineingedrückt, bis sie an der Rahmeneinheit und zusätzlich an zumindest einem Punkt entlang der Längserstreckung der Antriebseinheit an der Rahmeneinheit anliegt.

Zur Fixierung der Antriebseinheit in der Rahmeneinheit sind verschiedene Varianten vorgesehen:
In einer ersten Ausführungsform schlägt ein Fortsatz der Antriebseinheit an einem Anschlag der Rahmeneinheit, der Anschlagfläche, an. Zusätzlich erfolgt eine partielle Klemmung der Antriebseinheit auf zumindest vier Seiten, um eine formschlüssige und/oder kraftschlüssige Halterung zu gewährleisten. Der Wellenaustritt, bleibt dabei frei, um eine unbeeinträchtigte Bewegung die Welle zu ermöglichen. Ein Teil der Antriebseinheit inkl. Welle ragen über die der Aufsteckbürste zugewandten Seite der Rahmeneinheit hinaus.

In einer alternativen Ausführungsform liegt die Antriebseinheit an einer strukturellen Anschlagrippe der Rahmeneinheit an, welche als Anschlag dient. Auch in dieser Variante ist eine Klemmung der Antriebseinheit an mindestens vier Seiten vorgesehen, wobei der Wellenaustritt ebenfalls freigehalten wird. In einer weiteren Ausgestaltung wird auf einen Anschlag vollständig verzichtet. Stattdessen erfolgt eine vollständige form- und/oder kraftschlüssige Klemmung der Antriebseinheit entlang der Längserstreckung der Antriebseinheit auf vorzugsweise vier Seiten, wobei erneut der Bereich des Wellenaustritts frei bleibt. Eine Lagerung in einem Endbereich der Antriebseinheit kann in dieser Variante entfallen oder durch eine einzelne Anschlagrippe gebildet sein. Generell ist durch das Zusammenspiel mit dem Gehäuse sichergestellt, dass nach der Montage der Rahmeneinheit insbesondere die Einschubeinheit in dem Gehäuse die Antriebseinheit aufseiten der Welle gehalten wird. Mit anderen Worten wird die Antriebseinheit mittels Montage zwischen dem der Austeckbürste zugewandten Ende des Gehäuses und der Rahmeneinheit mit Vorspann form- und/oder kraftschlüssig fixiert, insbesondere lagerichtig positioniert.

Es können Sonic- und oszillierende Anwendungen durch die Antriebseinheit realisiert werden. Diese lassen sich insbesondere in uniforme Bewegungen, überlagerte Bewegungen sowie variierende Bewegungen unterteilen.

Uniforme Bewegungen sind regelmäßige, gleichbleibende Bewegungen. Ein Beispiel für eine uniforme Bewegung ist eine Sinus-Schwingung, bei der der Bewegungsverlauf stetig periodisch verläuft. Alternativ kann auch eine Rechteck-Schwingung, bei der sich zwei feste Amplituden in definierten Intervallen abwechseln, als uniforme Bewegung eingesetzt werden.

Bei überlagerten Bewegungen wird eine uniforme Bewegung mit einer weiteren Bewegung überlagert. Ein Beispiel hierfür ist gegeben, wenn eine langsame Bewegung mit einem Auslenkwinkel der Welle von 40° mit einer schnellen Bewegung mit kleinem Auslenkwinkel, z. B. 8°, kombiniert wird. Dadurch ergibt sich eine komplexe Bewegung mit mehreren Komponenten. In den Figuren sind exemplarisch verschiedene Frequenzen von Überlagerungen dargestellt. Es können niedrig- und hochfrequente Bewegungen überlagert werden, um unterschiedliche Reinigungseffekte zu erzielen.

Auch variierende Bewegungen (veränderliche Bewegungen) sind möglich. Hierbei ändern sich Bewegungsmuster dynamisch, insbesondere durch sich ändernde Frequenzen und/oder sich ändernde Amplituden/Auslenkungen. Bei einer Amplituden-Modulation werden vorzugsweise verschieden große Auslenkungen realisiert. Ein Beispiel ist eine regelmäßige sinusförmige Bewegung mit unterschiedlichen Amplituden, also mit variierender Auslenkung bei gleichbleibender Frequenz. Bei einer Frequenz-Modulation verläuft vorzugsweise der Bewegungsablauf mit verschiedenen Drehzahlen, was einer Frequenzänderung entspricht. Ein Beispiel ist eine sinusförmige Bewegung mit gleichbleibender Amplitude, jedoch mit unterschiedlichen Nulldurchgangs-Abständen, also variierender zeitlicher Dichte der Schwingung.

Überlagerte Bewegungen wie auch variierende Bewegungen werden von der Antriebseinheit mittels der Welle direkt, insbesondere in einem Antriebsstrang der Aufsteckbürste, bereitgestellt. Das heißt beispielsweise, dass zwei oder mehrere Bewegungen, die überlagert sind, im selben Antriebsstrang mittels einer Welle an die Aufsteckbürste übertragen werden. Das heißt, dass überlagerte Bewegungen ausschließlich von der Antriebseinheit insbesondere vom Elektromotor und dessen Welle, für die Aufsteckbürste bereitgestellt werden.

Die Antriebseinheit ist dazu vorgesehen durch einen Benutzer eingestellt zu werden. Hierbei sind verschiedene Einstellmittel vorgesehen, die eine Anpassung der Betriebsparameter durch den Anwender ermöglichen. Die Einstellung kann direkt am Bürstenhandteil vorgenommen werden. Dabei kann das Bürstenhandteil über Bedieneinheiten, insbesondere zumindest einen Schalter, verfügen, mit denen der Benutzer unmittelbar Eingaben vornehmen kann. Zusätzlich kann ein Display oder ein anderer Indikator vorgesehen sein, um die aktuelle Einstellung visuell darzustellen oder Rückmeldung zu geben. Alternativ kann die Einstellung auch via Drittgerät (z.B. Smartphone etc.) erfolgen. Dazu ist das Bürstenhandteil mit einer Kommunikationsschnittstelle ausgestattet. Die Kommunikationsschnittstelle kann beispielsweise Bluetooth oder NFC umfassen. Über diese drahtlosen Technologien ist eine externe Steuerung des Bürstenhandteils möglich.

Hierdurch kann der Benutzer Einstellungen vornehmen oder anpassen, ohne direkt am Bürstenhandteil selbst eingreifen zu müssen. Das Bürstenhandteil, insbesondere das Drittgerät, weist vorzugsweise einstellbare Parameter auf, welche eine gezielte Steuerung einer Bewegungscharakteristik der Welle erlauben.

Hierbei sind insbesondere Frequenz, insbesondere Drehgeschwindigkeit, sowie der Drehwinkel, insbesondere die Auslenkung, insbesondere eine Bewegungsform mit allfälligen Überlagerungen, der Welle regelbar. Die Frequenz, insbesondere Drehgeschwindigkeit, der Welle kann individuell angepasst werden, insbesondere bei Sonic-Anwendungen. Für die Hauptbewegung bei Sonic-Anwendungen ist eine Frequenz im Bereich von 1.5 Hz bis 10 Hz vorgesehen, bevorzugt zwischen 2,2 Hz bis 7 Hz. Die überlagerte Nebenbewegung kann eine Frequenz von 100 Hz bis 200 Hz aufweisen. Besonders bevorzugt ist ein Bereich von 120 Hz bis 160 Hz, was eine mikrooszillierende Überlagerung der Hauptbewegung erlaubt.

Die Drehwinkeleinstellung der Welle für Sonic-Anwendungen ist ebenfalls parametrierbar und unterstützt verschiedene Reinigungsprofile. Die Hauptbewegung kann aus der Nulllage pro Seite einen Drehwinkel von 3 ° bis 45 ° umfassen. Vorzugsweise liegt dieser Winkelbereich innerhalb eines Bereichs von 4° bis 25°. Für die überlagerte Bewegung ist ein separater Drehwinkelbereich aus der Nulllage pro Seite von 5° bis 30° vorgesehen. Bevorzugt liegt dieser im Bereich von 15° bis 25°, wobei kleinere Auslenkungen zu einer hochfrequenten Mikrobewegung genutzt werden können.

Die Haupt- und überlagerten Bewegungen können auch einzeln und unabhängig voneinander ausgeführt werden.

Programme, insbesondere Modi, können als Kombinationen aus Frequenz, Auslenkung und deren zeitlicher Abfolge definiert sein. Dabei können uniforme, überlagerte sowie variierende Bewegungen einzeln oder kombiniert ausgeführt werden. Der Nutzer kann bevorzugte Kombinationen speichern, um eine individualisierte Nutzung zu ermöglichen. Beispielsweise kann eine solche Kombination als Favorit hinterlegt werden. Alternativ kann die bevorzugte Einstellung, insbesondere Parameter, auch als eigener Programmmodus gespeichert und später erneut abgerufen werden.

In einer einfachen Ausführungsform kann das Bürstenhandteil ohne einstellbare Parameter ausgeführt sein. Hierbei sind die Bewegungsabläufe werksseitig festgelegt und vom Benutzer nicht veränderbar.

Das Bürstenhandteil kann ferner mit einer Auswahl an vordefinierten Modi oder Parametern, insbesondere Programmen, ausgestattet sein. Diese Programme sind vom Hersteller festgelegt, wobei unterschiedliche Bewegungsmuster, Frequenzen oder Auslenkungen vorgesehen sein können. Der Nutzer kann dabei definierte Parameter der Programme in vom Hersteller gegebenen Bereichen selbst einstellen.

In einer erweiterten Ausführungsform kann die Einstellbarkeit auch komplett offen sein. Dabei kann der Benutzer sämtliche Parameter wie Frequenz, Auslenkung und Programmdauer individuell festlegen und kombinieren.

In einer weiteren Ausführungsform kann das Bürstenhandteil mit fixen Programmen betrieben werden. Hierbei sind sämtliche Programmparameter festgelegt, sodass keine Modifikation durch den Benutzer möglich ist. Es können ausschließlich vordefinierte Programme gewählt werden, während individuelle Einstellungen oder Anpassungen ausgeschlossen sind. Die Programme können als vordefinierte Modi vorliegen, die vom Hersteller fix programmiert sind und nicht durch den Nutzer verändert werden können. Diese fixen Programme können verschiedene Bewegungsformen beinhalten. Ein solches Programm kann uniforme Bewegungen ausführen, bei denen die Bewegungsform konstant bleibt, z. B. in Form einer sinusförmigen Oszillation mit fester Amplitude und Frequenz. Die Parameter sind in diesem Fall nicht durch den Benutzer einstellbar, sondern werksseitig definiert. Ein Programm kann auch überlagerte Bewegungen enthalten, bei denen eine Hauptbewegung mit einer weiteren Bewegung überlagert wird. Dies ist insbesondere für Sonic-Anwendungen vorgesehen, kann aber auch für oszillierende Anwendungen genutzt werden. Überlagerte Bewegungen können aufgrund der zusätzlichen Mikrobewegungen des Bürstenkopfes eine erhöhte Reinigungsleistung bringen, insbesondere bei gleichzeitiger Nutzung einer niedrigen und einer hohen Frequenzkomponente.

In einem ersten vordefinierten Programm für eine Sonic-Anwendung, z. B. Modus 1 - Clean, wird eine Hauptbewegung beispielsweise mit 2,4 Hz mit einer überlagerten Bewegung von 140 Hz kombiniert. Dabei ist eine höhere Auslenkung der Hauptbewegung vorgesehen, um eine intensive Reinigungswirkung zu erzielen. In einem zweiten Programm, z. B. Modus 2 - Sensitive, beträgt die Hauptbewegung beispielsweise 5,8 Hz, ebenfalls mit einer überlagerten Bewegung von 140 Hz. Hierbei ist eine geringere Auslenkung vorgesehen, um eine schonende Anwendung zu ermöglichen. Feste Programme können auch variierende Bewegungen enthalten, bei denen Parameter wie Frequenz oder Auslenkung innerhalb des Programms automatisch variiert werden. Dabei bleibt die Variabilität vollständig innerhalb der vom Hersteller vorgegebenen Grenzen.

Das Bürstenhandteil kann in einer weiteren alternativen Ausführungsform mit vordefinierten Modi oder Programmen ausgestattet sein. Diese Programme sind vom Hersteller vorgegeben und erlauben eine teilweise oder vollständige Anpassung innerhalb definierter Parameterbereiche. Es kann eine gewisse Anzahl an Modi vorgesehen sein, zwischen denen der Benutzer wählen kann. Dabei ist die Grundfunktion des Bürstenhandteils festgelegt, die sich je nach Modus unterscheidet. Innerhalb der einzelnen Modi können vorgegebene Parameter eingestellt werden, z. B. Frequenz oder Auslenkung. Zudem kann eine Modifikation des Programms in gewissem Rahmen möglich sein, etwa durch Anpassung einzelner Parameterwerte. Der Hersteller kann Empfehlungen abgeben, welche Modi oder Parameter für bestimmte Nutzungszwecke geeignet sind. Ein solches System kann vom Hersteller optimiert werden, um maximale Effizienz oder Sicherheit zu gewährleisten. Die Auswahl der verfügbaren Modi kann auch abhängig von der genutzten Aufsteckbürste erfolgen. Beispielsweise können bestimmte Bewegungsprogramme nur bei passenden Bürstenköpfen (beispielsweise abhängig vom Härtegrad des Borstenfeldes) freigegeben werden. In vordefinierten Programmen können uniforme Bewegungen enthalten sein. Dabei ist eine Einstellbarkeit von Frequenz und Amplitude vorgesehen, z. B. innerhalb eines vom Hersteller festgelegten Bereichs. Es können auch überlagerte Bewegungen vorkommen, die mit vordefinierten Parametern quasi komplett offen eingestellt werden können. Ein Beispiel hierfür ist die Kombination von Frequenzen und zugehörigen Auslenkungen in vorgegebener Anzahl, beispielsweise Frequenz 1, Frequenz 2, Auslenkung 1 und Auslenkung 2, die fest oder bedingt variabel vorgegeben ist. In weiteren Modi können variierende Bewegungen ausgeführt werden. Dabei sind Bewegungsmuster mit sich ändernden Frequenzen und/oder sich ändernden Auslenkungen realisierbar. Ein Beispiel ist eine Amplituden-Modulation mit wechselnden Auslenkungswerten. Alternativ kann eine Frequenz-Modulation verwendet werden, bei der die Bewegungsfrequenz im zeitlichen Verlauf verändert wird. Variierende Bewegungen können auch mit Überlagerungen kombiniert werden, um komplexe Schwingungsmuster zu erzeugen. Bei Kombination solcher Parameter können die Zeit- und Bewegungseinheiten aufeinander abgestimmt sein. Neben festen oder vordefinierten Programmen ist auch eine komplett offene Einstellbarkeit denkbar. In einer Ausgestaltung sind die verfügbaren Programme oder Bereiche beliebig wählbar, jedoch innerhalb eines vordefinierten Modusbereichs. Der Nutzer kann hierbei zwischen verschiedenen Bewegungsprogrammen frei auswählen, ohne diese inhaltlich modifizieren zu können. In einer weiterführenden Variante ist die Einstellbarkeit komplett offen gestaltet. Dabei kann der Benutzer sämtliche Bewegungsparameter frei definieren, z. B. Frequenz, Dauer und Auslenkung. Selbst bei vollständig offener Parametereingabe können bestimmte Funktionen oder Wertebereiche gesperrt sein. Ein solch optimaler Bereich kann vom Hersteller festgelegt werden, um die Sicherheit oder Wirksamkeit zu garantieren. Diese Einschränkung kann implizit dazu führen, dass sich daraus wieder vordefinierte Programme ableiten, die faktisch bestimmte Kombinationen erzwingen.

Durch die Verwendung eines bipolaren Elektromotors kann vorteilhaft eine kompakte Bauweise mit hohem Drehmoment realisiert werden. Vorteilhaft ermöglicht ein solcher Servomotor eine präzise Ansteuerung der Drehbewegung hinsichtlich Geschwindigkeit, Auslenkung, Bewegungsmuster wie z.B. Überlagerungen.

Es wird ferner vorgeschlagen, dass die Antriebseinheit von einem bürstenlosen Elektromotor gebildet ist.

Insbesondere erfolgt der Antrieb der Welle direkt durch den bürstenlosen Elektromotor. Die Rückstellung der Welle kann insbesondere ohne zusätzliche mechanische Rückstellfeder erfolgen. Durch den bürstenlosen Antrieb können größere Auslenkwinkel der Welle realisiert werden - dies ist v.a. für die oszillierende Anwendung von Vorteil. Die Welle ist vorzugsweise so ausgelegt, dass sie eine oszillierende Drehbewegung ausführt. Dabei erfolgt während des bestimmungsgemäßen Gebrauchs insbesondere keine kontinuierliche Rotation, sondern eine wechselseitige, begrenzte Winkelauslenkung. Insbesondere im Vergleich zu herkömmlichen Gleichstrommotoren erlaubt die vorliegende Ausführung einen erweiterten Bewegungsbereich. Vorzugsweise ist die Antriebseinheit, welche kein Getriebe vorsieht, vibrationsarm und geräuscharm, was zu einem angenehmen Benutzererlebnis beiträgt. Die robuste Auslegung des bürstenlosen Motors erlaubt einen zuverlässigen Betrieb auch bei Feuchtigkeit und Temperaturschwankungen. Ein bürstenloser Motor ermöglicht vorteilhaft eine wartungsfreie, langlebige und geräuscharme Ausführung der Antriebseinheit.

Es wird weiter vorgeschlagen, dass die Welle von einer Metallwelle gebildet ist.

Die Welle ist aus einem metallischen Werkstoff gefertigt. Die als Metallwelle ausgebildete Welle ist insbesondere integraler Bestandteil der Antriebseinheit. Der Einsatz einer als Metallwelle ausgebildeten Welle ermöglicht eine kompakte Bauform und trägt zur Langlebigkeit des Gesamtsystems bei. Es ist in einer alternativen Ausführung denkbar, dass die Welle als eine Kunststoffwelle oder als eine Welle aus einem faserverstärkten Material, wie beispielsweise carbonfaserverstärktem Material, ausgebildet ist. Durch die Verwendung von Metall kann vorteilhaft eine hohe Torsions-, insbesondere Verwindungssteifigkeit und eine hohe mechanische Belastbarkeit erreicht werden.

Zudem wird vorgeschlagen, dass die Schnittstelle in einer Ausführungsform (insbesondere für die oszillierende Anwendung) zumindest einen drehfest mit dem Gehäuse verbundenen Zapfen aufweist, durch welchen sich die Welle erstreckt, wobei der Zapfen dazu vorgesehen ist, zumindest zu einem Großteil drehfest in der Aufsteckbürste aufgenommen zu werden.

In einer zweiten Ausführungsform für Sonic-Anwendungen, welche im Anschluss beschrieben wird, weist die Schnittstelle keinen Zapfen auf. Die Aufsteckbürste wird in diesem Fall direkt auf die Welle aufgesteckt und übernimmt im Betrieb deren Bewegungen.

Der Zapfen ist als Teil der Schnittstelle mit einem ersten Endbereich zu einer Verbindung mit der Schnittstellenaufnahme einer Aufsteckbürste eingerichtet. Der Zapfen bildet im Inneren einen Montagering aus, welcher zu einer Verbindung, insbesondere Ausrichtung, von Zapfen und Antriebseinheit vorgesehen ist. Der Zapfen ist insbesondere dazu vorgesehen, mit einem zweiten Endbereich mittels des Montagerings zumindest teilweise über ein wellenseitiges Ende der Antriebseinheit, insbesondere die Welle, geschoben zu werden und sich mittels des Montagerings an der Antriebseinheit auszurichten.

Bevorzugt umgreift der zweite Endbereich des Zapfens in einem montierten Zustand jeweils das wellenseitige Ende der Antriebseinheit. Insbesondere dient der zweite Endbereich des Zapfens zu einer Achsführung der Welle. Die Welle ist insbesondere durch den ganzen Zapfen hindurchgeführt. Der erste Endbereich des Zapfens dient als Schnittstelle zu einem Festlegeelement der Aufsteckbürste.

Der Zapfen ist im Innern zudem zu einer Lagerung der Balgdichtung der ersten Dichteinheit eingerichtet. Die Balgdichtung ist zwischen der Antriebseinheit und dem zweiten Endbereich des Zapfens im Innern des Zapfens angeordnet.

Die flexible Balgdichtung ist zumindest teilweise über die Antriebseinheit beziehungsweise die Welle gezogen. Die Balgdichtung liegt dabei bevorzugt an der Antriebseinheit und am Zapfen an. Die Balgdichtung liegt einerseits am Zapfen und andererseits an der Welle an. Die Balgdichtung umschließt die Welle dichtend. Um eine funktionsfähige Abdichtung auch bei oszillierenden Bewegungen zu ermöglichen, ist die Balgdichtung zwischen den anliegenden Bereichen, d.h. zwischen Welle und Innerem des Zapfens flexibel ausgestaltet und kann Bewegungen und Kräfte während des Gebrauchs ausgleichen.

Die Balgdichtung liegt insbesondere mit Untermaß an der Welle an, sodass das Dichtelement bei einer Drehbewegung der Welle zumindest teilweise mitrotiert. Die Balgdichtung liegt ferner vorzugsweise mit Übermaß am Zapfen an. Durch diese Ausgestaltung wird eine vorteilhaft zuverlässige Abdichtung zwischen dem Zapfen und der Antriebseinheit, insbesondere der Welle, bereitgestellt.

Zu einer Abdichtung zwischen dem Zapfen und dem Gehäuse kann ein O-Ring zwischen Gehäuse und Zapfen angeordnet sein. Der Zapfen kann im Zusammenspiel eine Verdrehsicherung aufweisen. Dies kann mittels einer Kombination aus einer Nut und einem Kamm im Zapfen ausgebildet sein.

Die Balgdichtung ist rotationssymmetrisch aufgebaut. Die Außengeometrie der Balgdichtung entspricht zumindest m Wesentlichen einem Kegelstumpf. Die Balgdichtung weist zwei Endbereiche auf. Der erste Endbereich der Balgdichtung weist einen größeren Durchmesser auf und ist zu der Abdichtung zum Inneren des Zapfens eingerichtet. Der erste Endbereich der Balgdichtung weist einen Außendurchmesser von 5 mm bis 11 mm, vorzugsweise von 6,5 mm bis 8,5 mm, auf. Der erste Endbereich der Balgdichtung weist eine Wandstärke zwischen 0,8 mm und 2 mm, vorzugsweise zwischen 1 mm und 1,7 mm, auf, wobei die Wandstärke in Richtung des geringeren Durchmessers abnimmt. Der zweite Endbereich der Balgdichtung weist einen kleineren Durchmesser auf und ist mittels seiner zylindrischen Innenkontur zu einer Abdichtung der Welle eingerichtet. Der zweite Endbereich der Balgdichtung weist einen Innendurchmesser von 2 mm bis 7 mm, vorzugsweise von 3,5 mm bis 5,5 mm, auf. Die Wandstärke im Bereich des zweiten Endbereichs der Balgdichtung beträgt zwischen 0,5 mm und 1,3 mm, vorzugsweise zwischen 0,7 mm und 1,1 mm. Der zwischen den zwei Endbereichen der Balgdichtung liegende Bereich der Balgdichtung bildet im Wesentlichen zwei Funktionen aus. Zum einen wird eine Art Wanne gebildet, in welcher einlaufende Flüssigkeit aufgefangen wird. Zum andern wird in dem Bereich die Torsionsmöglichkeit geschaffen, die Balgdichtung hat in diesem Bereich eine geringe Wandstärke, wodurch die Torsion ermöglicht wird. Die Wandstärke in diesem Bereich beträgt zwischen 0,2 mm und 0,7 mm, vorzugsweise zwischen 0,3 mm und 0,5 mm. Die Länge der Balgdichtung beträgt zwischen 3 mm und 7 mm, vorzugweise zwischen 4 mm und 6 mm. Die zwei Endbereiche der Balgdichtung weisen jeweils eine Auflage auf. Die Auflage im Bereich des zweiten Endbereichs der Balgdichtung, welche die Welle umgibt, hat eine Länge von 0,7 mm bis 1,1 mm, vorzugsweise von 0,8 mm bis 1 mm. Die Länge der Auflage des ersten Endbereichs der Balgdichtung beträgt 0,8 mm bis 2 mm, vorzugsweise von 1,3 mm bis 1,6 mm. Die Balgdichtung ist vorzugsweise aus einem Elastomer hergestellt.

Der Bereich zwischen Welle und Balgdichtung kann beispielsweise als Luftspalt ausgeführt sein, sodass keine Reibung zwischen drehenden und festen Teilen entsteht. Im Bereich zwischen dem Zapfen und der Dichtkappe der zweiten Dichteinheit ist ein O-Ring angeordnet. Der O-Ring dient als zusätzliches Dichtelement und/oder Dämpfungselement. Die Dichtkappe der zweiten Dichteinheit ist insbesondere zu einer Abdichtung in einer Ebene senkrecht zur Längsachse der Einschubeinheit eingerichtet. Die Dichtkappe kann sich hierzu an einem entsprechenden Gehäusebereich abstützen. Die Dichtkappe wird über den Zapfen bis zu der Antriebseinheit und mindestens teilweise über die Antriebseinheit, insbesondere den Elektromotor, geschoben. Der Zapfen durchdringt die Dichtkappe zumindest teilweise. Die Dichtkappe unterstützt zusätzlich die Positionierung der Einschubeinheit im Gehäuse. Die Einschubeinheit wird zwischen Deckel und Dichtkappe mit Vorspann im Gehäuse fixiert. Die Dichtkappe reduziert Vibrationen der Antriebseinheit und federt während der Nutzung Kräfte, welche über die Aufsteckbürste auf die Einschubeinheit wirken, ab.

Die Montage des Zapfens beginnt mit dem Einsetzen der Balgdichtung in den Zapfen. Anschließend wird der O-Ring auf den Zapfen aufgebracht. Danach erfolgt das Aufstecken des Zapfens auf die Antriebseinheit, wobei die Geometrie der Antriebseinheit im Zusammenspiel mit dem Zapfen (z.B. mit dem Montagering) eine eindeutige Orientierung des Zapfens sicherstellt. Der Zapfen liegt in einer Ausführungsform orientiert auf der Antriebseinheit auf. In einem weiteren Schritt wird die Dichtkappe über den Zapfen und teilweise über die Antriebseinheit geführt und hält den Zapfen an der Antriebseinheit. Abschließend wird die vollständig montierte Einschubeinheit in das Gehäuse eingesetzt.

In einer alternativen Ausführungsform kann der Zapfen als separates Bauteil am Gehäuse befestigt werden, beispielsweise durch eine form- und kraftschlüssige Montage wie Verpressung. Die Montage kann dabei entweder von innen oder von außen erfolgen - abhängig von der Geometrie des Zapfens und der Zugänglichkeit im Gehäuse. Bei einer Montage von außen muss der Zapfen zusätzlich gegen Herausrutschen gesichert werden, etwa durch Hinterschnitte oder durch eine formschlüssige Fixierung. Die Montage erfolgt dabei in folgender Reihenfolge: Zunächst wird der Zapfen in das Gehäuse eingesetzt, anschließend wird die Einschubeinheit in das Gehäuse eingebracht. Der Zapfen ist dabei vorzugsweise mit einem Einführkonus oder einer Einsteckhilfe ausgestattet, um eine sichere Positionierung der Welle und damit der Einschubeinheit zu ermöglichen.

In einer weiteren Ausführung kann der Zapfen als integraler Bestandteil des Gehäuses ausgeführt sein, beispielsweise durch Anspritzen beim Ein- oder Mehrkomponentenspritzguss. In dieser Ausgestaltung wird der Zapfen nicht separat montiert, sondern ist einstückig mit dem Gehäuse verbunden. Insbesondere bei den vorgesehenen rotationssymmetrischen Bewegungsprofilen ist eine exakte Positionierung der Welle relativ zum Gehäuse wichtig. In einer alternativen Ausführungsform ist kein Zapfen erforderlich. Hierbei kann die Kopplung zwischen Bürstenhandteil und Aufsteckbürste auf andere Weise erfolgen, etwa durch eine formschlüssige Steckverbindung oder eine direkte Klemmung.

Für Sonic-Anwendungen ist eine alternative Ausgestaltung der Schnittstelle vorgesehen, bei der die Verbindung von Aufsteckbürste und Bürstenhandteil zumindest im Wesentlichen mittels der Welle erfolgt. Die Aufsteckbürste, insbesondere deren Bürstenkopf, übernimmt folglich die Bewegungen der Welle. Die Aufsteckbürste schwingt in dieser Ausführungsform im Gegensatz zur oszillierenden Anwendung vollständig mit der Welle mit. Bei der oszillierenden Anwendung schwingt nämlich nur ein Teil der Aufsteckbürste mit der Welle mit und ein anderer Teil wird mittels Zapfen unbeweglich fixiert.

In der alternativen zapfenlosen Ausgestaltung der Schnittstelle der Sonic-Anwendung ist die zweite Dichteinheit einteilig ausgebildet. Dabei wird die Aufsteckbürste direkt auf die Welle aufgesteckt, ohne dass zusätzliche Verbindungselemente wie Zapfen, Adapter oder Zwischenstücke benötigt werden. Diese direkte Kopplung ermöglicht vorteilhaft eine besonders kompakte Bauweise und eine verlustarme und leise Übertragung der oszillierenden Bewegung der Antriebseinheit.

Diese Ausgestaltung erlaubt eine effektive Abdichtung des Bürstenhandteils gegenüber eindringender Feuchtigkeit bei gleichzeitig einfacher Montage und flexibler Anwendung für verschiedene Bewegungsformen und Motortypen. In dieser Ausführungsform weist die zweite Dichteinheit eine alternative Dichtkappe auf. Die alternative Dichtkappe ist so ausgestaltet, dass sie die Funktion der Dichtkappe und der Balgdichtung aus der ersten Ausführungsform in einem Bauteil erfüllt, während der O-Ring in dieser Ausführungsform generell nicht benötigt wird. Die Balgdichtung zur Abdichtung der Welle gegenüber dem Gehäuse ist vorzugsweise integraler Bestandteil der Dichtkappe und vollständig in dieser realisiert. In der zweiten Ausführungsform wird die Dichtkappe ebenfalls zuerst über die Welle gestülpt und dann auch zumindest teilweise über die Antriebseinheit gezogen. Durch die erfindungsgemäße Ausgestaltung der zweiten Dichteinheit kann ein besonders langlebiges und korrosionsbeständiges Bürstenhandteil bereitgestellt werden.

Des Weiteren wird vorgeschlagen, dass das elektrische Bürstenhandteil zumindest eine Recheneinheit aufweist, welche zu einer Ansteuerung der Antriebseinheit zu einer Realisierung verschiedener Drehwinkel und/oder Drehgeschwindigkeiten und mittels deren Anpassung, insbesondere Veränderung, entsprechende Bewegungsmuster (z.B. Bewegungsüberlagerungen etc.) vorgesehen sind.

Die Recheneinheit kann beispielsweise als Mikrocontroller, Steuerchip oder integrierte elektronische Schaltung ausgestaltet sein. Die Recheneinheit ist dazu eingerichtet, Steuersignale zu erzeugen, mit denen der Betrieb der Antriebseinheit, insbesondere des Elektromotors, beeinflusst, insbesondere gesteuert, wird.

Die Recheneinheit kann so programmiert sein, dass sie unterschiedliche Drehwinkel und/oder Drehgeschwindigkeiten für die Welle, insbesondere für die Schnittstelle, zur Aufsteckbürste realisiert.

Vorzugsweise ist die Recheneinheit so ausgelegt, dass sie mehrere Betriebsprofile oder Programme umsetzen, insbesondere verarbeiten, kann, z. B. für empfindliche Zonen, Tiefenreinigung oder Massagefunktionen. Die Recheneinheit kann lokal im Bürstenhandteil integriert oder über eine Schnittstelle von einem externen Gerät (z. B. Smartphone) mit Steuerdaten, insbesondere Betriebsparameter oder Schwellwerte, versorgt werden. Die Recheneinheit ist vorzugsweise als elektronische Komponente, z.B. als Microcontroller oder Steuerchip, auf einer der Printplatten untergebracht. Die Recheneinheit kann dabei Teil einer bereits im Bürstenhandteil vorhandenen Hauptplatine oder einer separaten Steuerplatine sein. Die elektrische Anbindung der Recheneinheit erfolgt vorzugsweise über Leiterbahnen, flexible Flachbandkabel oder Steckverbindungen. Durch die Ausgestaltung kann eine vorteilhaft flexibel steuerbare Antriebseinheit im Bürstenhandteil bereitgestellt werden.

Ferner wird vorgeschlagen, dass der Drehwinkel und/oder die Drehgeschwindigkeit der Antriebseinheit stufenlos über die Recheneinheit einstellbar ist. Dazu können auf der Bedieneinheit oder im Drittgerät entsprechende stufenlose Regler vorgesehen sein.

Die Recheneinheit kann vorzugsweise so ausgestaltet sein, dass sie eine stufenlose Einstellung des Drehwinkels und/oder der Drehgeschwindigkeit der Antriebseinheit erlaubt. Die Recheneinheit kann dazu geeignete Signalprofile generieren, etwa durch digitale Regelalgorithmen, pulsweitenmodulierte Signale oder variable Taktfrequenzen, mit denen die Steuerung der Antriebseinheit, insbesondere des Elektromotors, in Echtzeit erfolgt. Dadurch lassen sich z. B. Bewegungsprofile mit sanften Übergängen oder adaptive Reinigungsmodi umsetzen, ohne dass abrupte Stufenwechsel auftreten. Die stufenlose Ansteuerung kann jeweils und/oder nutzergesteuert, zeitabhängig, sensorbasiert, schwellwertbasiert programmabhängig erfolgen. Beispielsweise kann über die Recheneinheit eine kontinuierliche Änderung des Auslenkwinkels der Antriebseinheit, insbesondere der Welle des Elektromotors, innerhalb eines festgelegten Bereichs (z. B. von 3° bis 45°) oder eine stufenlose Frequenzänderung (z. B. von 1.5 Hz bis 300 Hz) umgesetzt werden.

Die stufenlose Steuerbarkeit des Motors trägt vorteilhaft zur Erhöhung des Anwendungskomforts, zur Geräuschoptimierung und zur gezielten Individualisierung von Reinigungsprogrammen bei.

Zudem wird vorgeschlagen, dass das elektrische Bürstenhandteil zumindest eine Bedieneinheit und zumindest die mit der Bedieneinheit gekoppelte Recheneinheit aufweist, welche zu einer Ansteuerung der Antriebseinheit zu einer Realisierung zumindest zwei verschiedener Bewegungsmuster vorgesehen ist, wobei die Bewegungsmuster über die Bedieneinheit einstellbar sind.

Das elektrische Bürstenhandteil weist vorzugsweise zumindest eine Bedieneinheit auf, die dem Benutzer eine direkte Eingabe von Steuerbefehlen, Programmwahl, Parametern oder Schwellwerten ermöglicht. Die Bedieneinheit kann als Taster, Wippe, Schiebeschalter, Touchfläche oder kapazitiver Sensor ausgebildet sein. Die Bedieneinheit ist vorzugsweise von einem Benutzer betätigbar angeordnet. Die Bedieneinheit ist funktional mit mindestens der Recheneinheit gekoppelt, welche zur Ansteuerung der Antriebseinheit vorgesehen ist. Die Kopplung kann elektrisch direkt über Leiterbahnen oder mittelbar über Bussysteme auf der Printplatte erfolgen. Die Recheneinheit ist dabei so ausgestaltet, dass sie in Abhängigkeit von den durch die Bedieneinheit ausgelösten Benutzerbefehlen unterschiedliche Bewegungsmuster, insbesondere Reinigungsmodi, steuert. Die Bewegungsmuster können entweder durch wiederholtes Betätigen der Bedieneinheit, durch mehrstufige Schaltung oder durch eine Menüführung (z. B. über LED-Feedback) ausgewählt werden. Ein LED- oder Displayelement kann zur optischen Rückmeldung der gewählten Eingabe eingesetzt werden. Durch diese Ausgestaltung wird eine benutzerfreundliche, individualisierbare Steuerung der Reinigungsvorgänge ermöglicht.

Ferner wird vorgeschlagen, dass die Antriebseinheit in zumindest einem Betriebszustand zu einer Erzeugung einer überlagerten Bewegung eingerichtet ist.

Die Welle wird durch die Antriebseinheit insbesondere nicht nur mit einer einfachen gleichmäßigen Bewegung beaufschlagt, sondern es wird eine Grundbewegung mit einer weiteren Bewegung, z.B. einer weiteren Schwingungskomponente überlagert. Die überlagerte Bewegung kann beispielsweise durch Superposition einer hochfrequenten Oszillation auf eine langsamere Hauptbewegung realisiert werden. Die Hauptbewegung kann dabei beispielsweise als eine oszillierende Rotation mit niedriger Frequenz und größerem Drehwinkel konzipiert sein, während die überlagerte Bewegung eine hochfrequente Schwingung mit geringem oszillierendem Drehwinkel ist. Beide Bewegungsanteile wirken gemeinsam auf die Welle, insbesondere Schnittstelle, zur Aufsteckbürste, wodurch ein kombiniertes Bewegungsmuster des Bürstenkopfes erzeugt wird. Die überlagerte Bewegung kann jeweils und/oder dauerhaft, sich verändernd, zyklisch abschnittsweise innerhalb eines Reinigungsprogramms zugeschaltet werden. Die Erzeugung der überlagerten Bewegung kann entweder durch gezielte Variation des Stromsignals, durch gepulste Ansteuerung oder über eine elektronische Taktung mit zwei Frequenzkomponenten erfolgen.

Vorzugsweise ist dieser Betriebszustand als Teil eines vordefinierten Bewegungsmusters innerhalb eines wählbaren Reinigungsmodus hinterlegt, kann aber alternativ auch durch Sensorik oder Benutzereingabe von Parametern, Messungen von Sensoren, und/oder Erreichen von Schwellwerten aktiviert werden. Die überlagerte Bewegung erlaubt vorteilhaft eine besonders effiziente, aber auch schonende mechanische Reinigung, insbesondere durch die Kombination aus makroskopischer - und mikroskopischer Oszillation.

Des Weiteren wird vorgeschlagen, dass die Antriebseinheit, insbesondere die Welle, aus der Nulllage in beide Richtungen jeweils einen Auslenkungswinkel von 3° bis 45°, vorzugsweise von 4° bis 25° aufweist. Für die oszillierende Anwendung beträgt der Auslenkwinkel vorzugsweise 5° bis 20°, während für die Sonic-Anwendung der Auslenkwinkel vorzugsweise 4° bis 18° beträgt.

Unter dem Begriff "Auslenkungswinkel aus der Nulllage" wird vorzugsweise ein Winkel verstanden, der zwischen einer mittleren Ruhelage der Welle und ihrer maximalen Ausschlagsposition in einer Drehrichtung liegt. Insbesondere ist denkbar, dass die Nulllage durch die Gleichgewichtslage der mechanischen Bauteile definiert ist, in der keine aktive Bewegung erfolgt. In einer alternativen Ausführung kann die Nulllage durch einen Sensorsignalpunkt oder eine Softwareposition bestimmt sein. Vorzugsweise ist die Antriebseinheit so ausgestaltet, dass sie aus einer mittleren Ruhelage ("Nulllage") in beide Drehrichtungen auslenkbar ist.

Es wird ferner vorgeschlagen, dass die Antriebseinheit frei von einem Rückstellelement ausgebildet ist.

Unter "frei von einem Rückstellelement" soll insbesondere verstanden werden, dass innerhalb der Antriebseinheit keine Elemente vorhanden sind die eine mechanische Rückstellkraft erzeugen. Stattdessen erfolgt die Rückführung der Welle ausschließlich durch die aktive Steuerung der Antriebseinheit, insbesondere durch die Recheneinheit.

Die Ausführung frei von einem Rückstellelement erhöht insbesondere die Bewegungsfreiheit und die Präzision der Oszillation. Vorzugsweise ist die Recheneinheit so programmiert, dass sie auch ohne Rückstellmechanik eine exakt symmetrische oder gezielt asymmetrische Rückführung der Welle ermöglicht. Der Verzicht auf ein Rückstellelement reduziert die Anzahl der Bauteile, vereinfacht die Montage und verbessert die Wartungsfreiheit und Lebensdauer. Die Ausgestaltung ohne ein mechanisches Rückstellelement erlaubt vorteilhaft eine frei programmierbare Bewegungscharakteristik, bei der Rücklaufgeschwindigkeit, -winkel und -richtung softwareseitig definiert werden können.

Alternativ wird weiter vorgeschlagen, dass die Antriebseinheit zumindest Rückstellelement aufweist.

Vorzugsweise ist das zumindest eine Rückstellelement aus einem plattenförmigen Rohling, wie insbesondere einem Blech, hergestellt. Unter einem "Rückstellelement" soll in diesem Zusammenhang insbesondere ein Element, vorzugsweise ein Federelement, wie beispielsweise eine Biegefeder, eine Blattfeder oder eine Torsionsfeder, verstanden werden, welches dazu vorgesehen ist, die Antriebseinheit nach einer Verdrehung in eine definierte Ausgangslage zurückzubewegen und dadurch ein schwingungsfähiges System zu bilden. Vorzugsweise ist das Rückstellelement zudem zu einer Dämpfung der oszillierenden Bewegung der Antriebseinheit beim Wechsel der Bewegungsrichtung vorgesehen. Insbesondere ist das Rückstellelement dazu vorgesehen, die Antriebseinheit jeweils nach einem Abschalten der Antriebseinheit in eine Ausgangslage, insbesondere in die Nulllage, zurückzubewegen. Das Rückstellelement ist insbesondere federelastisch ausgebildet. Insbesondere besteht das Rückstellelement aus einem Federstahl. Besonders bevorzugt ist das Rückstellelement als Blattfeder ausgestaltet. Unter "plattenförmig" soll in diesem Zusammenhang insbesondere verstanden werden, dass das Rückstellelement eine Dicke, insbesondere eine Dickenerstreckung, aufweist, die wesentlich geringer, insbesondere zumindest um ein 3-faches, insbesondere um ein 5-faches, bevorzugt um ein 10-faches und besonders bevorzugt um ein 15-faches geringer ist als eine Breite, insbesondere Querstreckung, und/oder eine Länge, insbesondere Längserstreckung, des Rückstellelements. Bevorzugt soll darunter insbesondere verstanden werden, dass ein kleinster gedachter Quader, welcher die Baueinheit gerade noch vollständig umschließt, eine kürzeste Seitenkante aufweist, deren Länge wesentlich geringer, insbesondere zumindest um ein 3-faches, insbesondere um ein 5-faches, bevorzugt um ein 10-faches und besonders bevorzugt um ein 15-faches geringer ist als die Länge jeder dazu quer verlaufenden Seitenkante des gedachten Quaders.

Es kann vorteilhaft erreicht werden, dass die Welle nach einer Deaktivierung des elektrischen Bürstenhandteils jeweils immer im Wesentlichen in derselben Stellung stehen bleibt, insbesondere sich immer in dieselbe Stellung zurückbewegt.

Es wird weiter vorgeschlagen, dass die Antriebseinheit, insbesondere die Welle, eine oszillierende Bewegung mit einer Frequenz von 1.5 Hz bis 370 Hz aufweist.

Die Antriebseinheit für eine oszillierende Bewegung mit einer Frequenz von 1.5 Hz bis 370 Hz ist insbesondere federlos ausgebildet. In der ersten Ausführungsform, die für oszillierende Anwendungen vorgesehen ist, weist die Antriebseinheit, insbesondere die Welle des Elektromotors, vorzugsweise eine Frequenz von 80 Hz bis 140 Hz auf. In der zweiten Ausführungsform, die für Sonic-Anwendungen vorgesehen ist, weist die federlose Antriebseinheit, insbesondere die Welle des Elektromotors, vorzugsweise eine Frequenz von 100 Hz bis 260 Hz auf. Es kann vorteilhaft eine große Frequenzbreite bereitgestellt werden.

Alternativ wird vorgeschlagen, dass die Antriebseinheit mit einem Rückstellelement eine oszillierende Bewegung für eine Sonic-Anwendung mit einer Frequenz von 150 Hz bis 370 Hz, vorzugsweise von 220 Hz bis 340 Hz, aufweist.

Die Antriebseinheit für eine oszillierende Bewegung für eine Sonic-Anwendung mit einer Frequenz von 150 Hz bis 370 Hz ist insbesondere mit einer Rückstellfeder ausgebildet. Die Rückstellfeder dient ferner der mechanischen Rückführung der Antriebseinheit in die Nulllage und beeinflusst die Art der erzeugbaren Bewegung. Der Antrieb erlaubt in dieser Konfiguration Betriebsmodi wie "Clean" mit 260 Hz oder "Sensitive" mit 330 Hz. Bevorzugt ist die Ausgestaltung für Sonic-Anwendungen eingerichtet. Ein Frequenzbereich zwischen 150 Hz und 370 Hz erlaubt vorteilhaft hochfrequente Vibrationen, die eine tiefenwirksame Reinigung ermöglichen.

Des Weiteren wird vorgeschlagen, dass die oszillierende Bewegung für eine Sonic-Anwendung in einem ersten Reinigungsmodus eine Frequenz zwischen 240 Hz und 280 Hz aufweist. Dieser Frequenzbereich liegt innerhalb des zuvor beschriebenen Hochfrequenzsegments (z. B. 150 Hz-370 Hz).

Der erste Reinigungsmodus kann beispielsweise als "Normalmodus" oder "Clean-Modus" bezeichnet sein und ist entweder werkseitig festgelegt oder über eine Bedieneinheit auswählbar. Die Frequenz kann dabei fest im Steuerprofil hinterlegt oder über die Recheneinheit innerhalb des genannten Bereichs stufenlos geregelt sein.

Dabei kann ein Frequenzbereich von 240 Hz bis 280 Hz verwendet werden, um eine vorteilhaft gute Balance aus Reinigungsleistung, Geräuschverhalten und Materialschonung zu erzielen.

Es wird ferner vorgeschlagen, dass die oszillierende Bewegung für eine Sonic-Anwendung in einem zweiten Reinigungsmodus eine Frequenz zwischen 310 Hz und 340 Hz aufweist.

Dieser Frequenzbereich liegt innerhalb des zuvor beschriebenen Hochfrequenzsegments (z. B. 150 Hz-370 Hz).

Dieser zweite Reinigungsmodus ist bevorzugt auf eine besonders hochfrequente, vibrationsbasierte Reinigung ausgelegt. Durch die hohe Frequenz kann auch bei sehr kleinen Amplituden eine effektive Reinigung erreicht werden. Die Auswahl des zweiten Reinigungsmodus erfolgt vorzugsweise über eine Bedieneinheit, welche mit der Recheneinheit funktional gekoppelt ist. Ein Reinigungsmodus mit einer Oszillierfrequenz zwischen 310 Hz und 340 Hz erlaubt eine besonders feine, materialschonende Reinigungswirkung bei gleichzeitig hoher Effektivität. Zudem kann durch die hohe Frequenz ein vorteilhaft subjektiv angenehmeres Vibrationsverhalten entstehen, was sich besonders für empfindliche Nutzer eignet.

Ferner geht die Erfindung aus von einer elektrischen Zahnbürste mit dem elektrischen Bürstenhandteil und mit einer Aufsteckbürste. Es wird vorgeschlagen, dass die Aufsteckbürste einen drehbar gelagerten Bürstenkopf aufweist, wobei eine Rotationsachse des Bürstenkopfs im Wesentlichen senkrecht zur Welle der Schnittstelle verläuft.

Die mit dem Bürstenhandteil verwendete Aufsteckbürste mit einem oszillierenden Borstenfeld, insbesondere Bürstenkopf, mit einer Rotationsachse im Wesentlichen senkrecht zur Längsrichtung des Bürstenhandteils ist mit zwei Verbindungen zum Bürstenhandteil ausgestattet. Zum einen wird das im Inneren des Aufsteckbürstengehäuses fixierte Festlegeelement auf den Zapfen des Bürstenhandteils gesteckt, zum anderen wird eine im Inneren des Aufsteckbürstengehäuses drehbeweglich gelagerte Antriebswelle auf die Welle der Antriebseinheit gesteckt. Das Festlegeelement und der Zapfen verbindet das Bürstenhandteils mit dem Aufsteckbürstengehäuse damit starr.

Die oszillierende Antriebsbewegung wird von der Welle über die Antriebswelle auf den Bürstenkopf übertragen. Die Welle führt die Antriebswelle mit einer form- und kraftschlüssigen Steckverbindung.

Die durch das Bürstenhandteil bewegte Masse entspricht bei der Aufsteckbürste mit einem Bürstenkopf mit einer Rotationsachse im Wesentlichen senkrecht zur Längsrichtung des Bürstenhandteils, insbesondere senkrecht zur Welle, dem kumulierten Gewicht von Antriebswelle, Lagerpin und Bürstenkopf. Der Lagerpin kann auch nicht bewegt, d.h. am Aufsteckbürstengehäuse fixiert, sein. Die bewegte Masse entspricht einem Gewicht von 1,2 g bis 3,5 g, vorzugsweise 1,5 g bis 2,5 g.

Die Aufsteckbürste mit einem oszillierenden Bürstenkopf mit einer Rotationsachse im Wesentlichen senkrecht zur Längsrichtung des Bürstenhandteils ist im Vergleich zur Aufsteckbürste mit einem oszillierenden Bürstenkopf mit einer Rotationsachse im Wesentlichen parallel zur Längsrichtung des Bürstenhandteils mehrteilig aufgebaut. Ein Aufsteckbürstengehäuse bildet die Grundstruktur der Aufsteckbürste. Der Bürstenkopf ist in dem Aufsteckbürstengehäuse montiert und wird über den Lagerpin drehbeweglich fixiert. Die Fixierung ist derart ausgestaltet, dass eine oszillierende Drehbewegung mit einer Rotationsachse im Wesentlichen senkrecht zur Längsrichtung des Aufsteckbürstengehäuses möglich ist.

Von der Aufsteckseite der Aufsteckbürste zum Bürstenhandteil hin ist die Antriebswelle eingebracht, die so montiert ist, dass ihre endseitig angebrachte Verzahnung in die Verzahnung des Bürstenkopfes eingreift. Alternativ zur Verzahnung können auch andere Mittel, wie beispielsweise ein Pin, auf der Antriebswelle und eine Nut im Bürstenkopf zur Bewegungsübertragung verwendet werden. Die Übertragung von der Antriebswelle auf den Bürstenkopf ist im Wesentlichen in einem 90° Winkel vorgesehen. Wie gesagt stehen die Drehachse des Bürstenkopfs und die Drehachse der Antriebswelle, insbesondere die Drehachse der Welle der Antriebseinheit, im Wesentlichen senkrecht zueinander. In einer alternativen Ausführungsform kann dieser Winkel auch 45° bis 135° einnehmen. Die Ausgestaltung der Mittel zur Bewegungsübertragung, beispielsweise die Verzahnung oder Pin und Nut, müssen dann auf den entsprechenden Winkel angepasst werden. Der Aufbau der Aufsteckbürste mit einem von 90° abweichenden Winkel der Drehachse des Bürstenkopfs bleibt grundsätzlich gleich wie die beschriebene Ausführungsform mit den im Wesentlichen senkrechten Drehachse.

Die Bewegung der Welle der Antriebseinheit, insbesondere des Elektromotors, wird somit im Bürstenhandteil unverändert, insbesondere unmittelbar, insbesondere direkt, auf die Antriebswelle der Aufsteckbürste übertragen. Aufgrund der form- und kraftschlüssigen Verbindung zwischen der Welle der Antriebseinheit, insbesondere des Elektromotors, und der Antriebswelle der Aufsteckbürste führt diese den gleichen Drehwinkel mit der gleichen Oszillationsfrequenz aus.

Aufgrund der Bewegungsübertragung der Antriebswelle der Aufsteckbürste und der entsprechenden Ausgestaltung und Lage der Mittel, welche diese auf den Bürstenkopf übertragen (z.B. die beschriebene Verzahnung oder eine Nut und Pin Lösung) kann der Drehwinkel des Bürstenkopfs gegenüber dem Drehwinkel der Antriebswelle der Aufsteckbürste, insbesondere der Welle der Antriebseinheit, verändert werden. Mit anderen Worten kann durch die geeignete Wahl dieser Mittel eine Winkelveränderung zwischen Welle der Antriebseinheit und Bürstenkopf erreicht werden. Bevorzugt sind folgende Winkelverhältnisse zwischen dem Drehwinkel der Antriebseinheit und dem Drehwinkel des Bürstenkopfs 0.5:1 bis 1:5, vorzugsweise 1:1 bis 1:3.

Im Gegensatz zum veränderbaren Drehwinkel und zur Lage der Drehachse des Bürstenkopfs bleibt die Oszillationsfrequenz des Bürstenkopfs gleich wie bei der Welle der Antriebseinheit, insbesondere der Welle des Elektromotors.

Ein in der Schnittstellenaufnahme eingebrachtes Festlegeelement verrastet mit dem Aufsteckbürstengehäuse form- und kraftschlüssig und hält die Antriebswelle in Position. Die Antriebswelle ist im Aufsteckbürstengehäuse um ihre Längsachse oszillierend bewegbar gelagert. Die Rotationsachse der Antriebswelle ist im Wesentlichen parallel zu, insbesondere identisch mit, der Rotationsachse der Welle der Antriebseinheit. Um eine Bewegung der Aufsteckbürste, insbesondere des Bürstenkopfs, zu erreichen, wird die Aufsteckbürste mit ihrer Öffnung im Festlegeelement auf den Zapfen des Bürstenhandteils gesteckt, insbesondere eingeschnappt, und die Welle des Bürstenhandteils wird gleichzeitig ebenfalls in die Aufsteckbürste eingesetzt. Dabei fixiert der Zapfen des Bürstenhandteils über das Festlegeelement das Aufsteckbürstengehäuse, sodass dieses im Betriebszustand gegenüber dem Bürstenhandteil fixiert ist. Die Welle wird in die Antriebswelle eingeführt und form- und kraftschlüssig geklemmt bzw. geschnappt. Die Welle der Antriebseinheit steckt in der Antriebswelle der Aufsteckbürste, diese leitet die oszillierende Bewegung über ihre bürstenkopfseitige Verzahnung auf die Verzahnung des Bürstenkopfs (die Verzahnung ist als Beispiel genannt bezüglich Mittel, welche die Bewegung übertragen können), was dazu führt, dass der Bürstenkopf, und somit das darauf angebrachte Borstenfeld, mit Reinigungs- und Pflegeelementen in Bewegung versetzt wird. Die Aufsteckbürste ist so aufgebaut, dass die oszillierende Rotationsbewegung der Welle des Bürstenhandteils in eine vorzugsweise senkrecht dazu oszillierende Rotationsbewegung des Bürstenkopfs umgelenkt wird, wobei diese Umlenkung der Bewegung über Mittel, wie beispielsweise eine ineinandergreifende Verzahnung von Antriebswelle und Bürstenkopf realisiert ist.

Die Bauteile der Aufsteckbürste mit einem oszillierenden Bürstenkopf mit einer Rotationsachse in einer Ausführungsform im Wesentlichen senkrecht zur Längsrichtung des Bürstenhandteils sind verschieden hergestellt. Das Aufsteckbürstengehäuse ist zumindest aus einer Hartkomponente hergestellt und bildet die Grundstruktur der Aufsteckbürste, die anderen Bauteile werden daran/darin fixiert oder verbaut. Daneben können weitere Hart- und/oder Weichkomponenten genutzt werden.

Das Festlegeelement und die Antriebswelle sind zumindest in ihrer Grundstruktur aus einer Hartkomponente gebildet, eine Weichkomponente kann auch daran ausgebildet sein, vorzugsweise bestehen das Festlegeelement und die Antriebswelle aber nur aus einer oder mehreren Hartkomponenten. Der Einsatz von Weichkomponenten kann für die Ausformung von Reinigungselementen im Bürstenkopf wie auch als Schutz mindestens teilweise um einen Körper aus einer Hartkomponente geformt sein, um ein Stoßen des Körpers gegen die Zähne des Benutzers zu dämpfen. Der Lagerpin ist vorzugsweise aus einem Metall gebildet. Der Bürstenkopf hat vorzugsweise eine rundliche oder ovale Grundform. Er kann einteilig oder mehrteilig ausgestaltet werden. So kann in einer Ausführungsform ein unteres Teil zur Bewegungsübertragung und ein oberes Teil mit dem Borstenfeld unabhängig voneinander gefertigt und dann unlösbar miteinander verbunden werden.

Die jeweiligen Längs- und Querdimensionen bewegen sich bei runder Grundform im Bereich von 10 mm bis 17 mm, vorzugsweise von 12 mm bis 15 mm. Bei einer ovalen Grundform bewegt sich die kleinere Querdimension im Bereich wie vorher für rundliche Grundformen angegeben, während sich die Längsdimension im Bereich von 14 mm bis 21 mm, vorzugsweise von 16 mm bis 19 mm bewegt. Die Aufsteckbürste mit einem oszillierenden Bürstenkopf mit einer Rotationsachse im Wesentlichen senkrecht zur Längsrichtung des Bürstenhandteils hat ein Gewicht von 3 g bis 10 g, vorzugsweise von 4 g bis 8 g. Die Länge der Aufsteckbürste beträgt zwischen 50 mm und 90 mm, vorzugsweise von 65 mm bis 75 mm. Die maximale Breite dieser Aufsteckbürste beträgt zwischen 8 mm und 17 mm, vorzugsweise von 10 mm bis 15 mm.

Alternativ zu der Aufsteckbürste mit einer Rotationsachse senkrecht zu einer Längsrichtung des Bürstenhandteils, sind Aufsteckbürsten mit einer Rotationsachse parallel zur Längsrichtung des Bürstenhandteils vorgesehen.

Die Aufsteckbürste mit einem oszillierenden Bürstenkopf mit einer Rotationsachse im Wesentlichen parallel zur Längsrichtung des Bürstenhandteils ist zumindest aus einer Hartkomponente, vorzugsweise aus Polypropylen, ABS oder POM, gebildet, welche zumindest die Grundstruktur bildet. Teil der Grundstruktur sind zumindest die Schnittstellenaufnahme zur Welle mit entsprechenden Klemm- und/oder Rastmitteln sowie die Struktur im eigentlichen Bürstenkopf zur Fixierung der Filamente. Daneben können weitere Hart- und/oder Weichkomponenten zur Formung des Aufsteckbürstengehäuses genutzt werden. Der Einsatz von Weichkomponenten kann für die Ausformung von Reinigungselementen im Bürstenkopf wie auch als Schutz um den Körper aus einer Hartkomponente geformt sein, um ein Stoßen des Körpers gegen die Zähne eines Benutzers zu dämpfen. Der Körper der Aufsteckbürste mit einem oszillierenden Bürstenkopf mit einer Rotationsachse im Wesentlichen parallel zur Längsrichtung des Bürstenhandteils wird vorzugsweise einstückig durch ein Spritzgießverfahren aus einer oder mehreren Kunststoffkomponenten hergestellt. Die Schnittstellenaufnahme kann im gleichen Schritt mit dem Spritzgießen des Aufsteckbürstengehäuses hergestellt sein. Alternativ beziehungsweise vorzugsweise wird die Schnittstellenaufnahme jedoch als separates Kunststoffteil hergestellt, welches in das Aufsteckbürstengehäuse montiert wird. Die Aufsteckbürste mit einem oszillierenden Bürstenkopf mit einer Rotationsachse im Wesentlichen parallel zur Längsrichtung des Bürstenhandteils hat ein Gewicht von 3 g bis 10 g, vorzugsweise von 4 g bis 8 g. Die Länge der Aufsteckbürste beträgt zwischen 50 mm und 90 mm, vorzugsweise von 65 mm bis 75 mm. Die maximale Breite dieser Aufsteckbürste beträgt zwischen 8 mm und 17 mm, vorzugsweise von 10 mm bis 15 mm. Der Bürstenkopf dieser Sonic-Anwendung schwingt mit demselben Winkel und derselben Frequenz wie die Welle der Antriebseinheit, insbesondere des Elektromotors. Ein unterschiedlicher Drehwinkel des Bürstenkopfes gegenüber der Welle der Antriebseinheit, insbesondere des Elektromotors, ist im Gegensatz zur oszillierenden Anwendung nicht möglich, da die Bewegung der Welle innerhalb der Aufsteckbürste nicht auf den Bürstenkopf umgelenkt wird bzw. der Bürstenkopf und das Aufsteckbürstengehäuse eine (einstückige) Einheit bilden.

Die Aufsteckbürste weist Reinigungselemente auf. Die Reinigungselemente bestehen insbesondere aus Pflegeborsten beziehungsweise Zahnreinigungsborsten. Die Pflegeborsten, insbesondere Zahnreinigungsborsten, werden insbesondere aus Filamenten hergestellt. Bei Anker-Stanzverfahren wird jeweils eines oder mehrere abgelängte Filamente U-förmig gebogen. Die Filamente bilden auf diese Weise jeweils zwei miteinander verbundene Pflegeborsten mit jeweils einem Nutzende aus. Das Nutzende entspricht jenem Ende der Pflegeborste, mittels dessen die Pflegefunktion ausgeführt wird. Entsprechend stellt das Nutzende in der fertigen Zahnbürste ein freies Borstenende dar. Mehrere Pflegeborsten bilden im Bürstenkopf insbesondere Borstenbündel aus. Die Borstenbündel bilden im Bürstenkopf insbesondere ein Borstenfeld aus. Das Borstenfeld kann neben Pflegeborsten ferner auch Reinigungs- und Massageelemente, z. B. aus einer Weichkomponente, enthalten. Die Reinigungs- und Massageelemente können aus einer Weichkomponente und insbesondere aus einem Elastomer, insbesondere aus einem gummielastischen Material, ausgebildet sein. Die Reinigungs- und Massageelemente können mittels eines Spritzgießverfahrens separat oder als integraler Bestandteil mit dem Bürstenkopf gespritzt, insbesondere am Bürstenkopf/Bürstenkopf angespritzt sein. Die Pflegeborsten sind insbesondere aus Kunststoff ausgebildet. Die Pflegeborsten können aus einer Hartkomponente ausgebildet sein. Die Pflegeborsten können aus einer Weichkomponente ausgebildet sein. Die Pflegeborsten können aus einer Kombination von Hart- und Weichkomponente ausgebildet sein. Die Pflegeborsten können konventionell hergestellt, d.h. extrudiert, sein. Extrudierte Pflegeborsten können aus Polyamid (PA) oder Polyester (PBT) ausgebildet sein. So können die Pflegeborsten aus Polyamid PA 6.10 oder PA 10.10 hergestellt sein. Die Pflegeborsten können auch aus nachhaltigen Materialien hergestellt sein. Insbesondere können die Pflegeborsten aus nachwachsenden Rohstoffen hergestellt sein. So können die Pflegeborsten aus Cellulose oder auf Cellulosebasis hergestellt sein. Die Pflegeborsten können weiter auf Basis von Milchsäure (PLA) hergestellt sein. Die Pflegeborsten können insbesondere auch aus einem biologisch abbaubaren Kunststoff hergestellt sein. Ferner können die Pflegeborsten aus rezykliertem Kunststoff, beispielsweise aus einem rezyklierten Polyester (PET) hergestellt sein. Die Pflegeborsten können zylindrisch oder zugespitzt sein. Die Pflegeborsten können, insbesondere, wenn sie aus Polyester (PBT) bestehen, in einem chemischen Verfahren zugespitzt werden. Die Pflegeborsten können eine zylindrische, gewellte, gedrehte oder wendelförmige Längsform aufweisen. Die Querschnittsform der Pflegeborsten kann (kreis-)rund, elliptisch, oval, polygonförmig, wie dreieckig, rechteckig, quadratisch, trapezförmig, parallelogrammförmig oder rhombusförmig sein.

Die in der Mundhygiene eingesetzten Pflegeborsten können einen Durchmesser von 0,075 mm bis 0,25 mm, vorzugsweise von 0,1 mm bis 0,15 mm aufweisen. Die Pflegeborsten können eine Querschnittsfläche von 0,002 mm² bis 0,2 mm² aufweisen. Die in der Kosmetik eingesetzten Pflegeborsten können einen Durchmesser von 0,025 mm bis 0,2 mm aufweisen. Die Pflegeborsten können eine Querschnittsfläche von 0,001 mm² bis 0,15 mm² aufweisen. Die Oberfläche der Pflegeborsten kann glatt oder texturiert sein. Die Pflegeborsten sind insbesondere zu Borstenbündeln zusammengefasst. Werden die Pflegeborsten als Borstenbündel in Borstenlöchern befestigt, so nimmt beim konventionellen Ankerstanzen ein Borstenloch jeweils ein Borstenbündel auf. Ein Borstenbündel kann Pflegeborsten derselben Art oder verschiedene Arten von Pflegeborsten enthalten und so ein einheitliches oder ein gemischtes Borstenbündel bilden. Verschiedene Arten von Pflegeborsten können unterschiedliche Geometrien und/oder unterschiedliche Materialien betreffen. Beispielsweise können zylindrische und zugespitzte Filamente gemischt werden und so in einem Borstenbündel verschiedene Pflegeborsten bereitstellen. Gemäß einer Ausführungsvariante können die Pflegeborsten auch in einem Spritzgießverfahren hergestellt sein. So können die Pflegeborsten direkt am Bürstenkopf/Bürstenkopf angespritzt sein. Da der Grundkörper mit dem angespritzten Kunststoffmaterial für angespritzte Pflegeborsten in der Regel keine stoffschlüssige Verbindung eingeht, können am Grundkörper Strukturierungselemente, insbesondere Vertiefungen, insbesondere Ausnehmungen, wie Hinterschnitte, Sack- und/oder Durchgangslöcher geformt sein, welche ein formschlüssiges Halten der angespritzten Elemente, wie Pflegeborsten, ermöglichen. Die gespritzten Pflegeborsten sind insbesondere aus einem thermoplastischen Elastomer und ganz besonders bevorzugt aus einem thermoplastischen Polyurethan-Elastomer (TPE-U) ausgebildet. Dieses Elastomer zeichnet sich durch gute Fließeigenschaften sowie eine schnelle Erstarrung, d.h. Kristallisation, aus. Die Molekülketten verbinden sich insbesondere schon bei (noch) hohen Temperaturen. Die gespritzten Pflegeborsten können auch aus Polyethylen (PE), z. B. in den Formen low density Polyethylen (LDPE) oder linear low density Polyethylen (LLDPE), ausgebildet sein. Die gespritzten Pflegeborsten können ferner auch aus einem thermoplastischen Polyester-Elastomer (TPE-E) oder einem thermoplastischen Polyamid-Elastomer (TPE-A) ausgebildet sein. Für gespritzte Pflegeborsten werden spezielle Arten von Weichkomponenten eingesetzt, welche in der Regel höhere Shore-D-Härten aufweisen als Weichkomponenten, aus welchen weichelastische Reinigungs- und Massageelemente oder weichelastische Gehäusezonen, wie Daumenauflagen oder Zungenreiniger, ausgebildet sein können. Die gespritzten Pflegeborsten, insbesondere aus einem thermoplastischen Elastomer, weist insbesondere eine Shore-D-Härte von 0 bis 100, ganz besonders von 30 bis 80 auf. Die gespritzten Pflegeborsten können mit weiteren Reinigungs- und Massageelementen kombiniert werden. Die zweite gespritzte Komponente für gespritzte Pflegeborsten schwindet bei der Abkühlung auf die erste gespritzte Hart- oder Weichkomponente und bildet dann eine Schwundverbindung aus.

Zusätzlich oder alternativ kann im Rahmen der Borstenfertigung eine Schwundverbindung vorgesehen sein, bei der zwei Komponenten einer Borste so ausgeformt sind, dass zwischen ihnen eine gezielte Beweglichkeit, insbesondere in Form eines Gelenks oder einer elastischen Zone, gegeben ist. Diese Verbindung kann entweder auf einem stoffschlüssigen oder materialspezifischen Haftverbund beruhen oder auf rein formschlüssigen Prinzipien basieren, bei denen sich die Materialien selbst nicht dauerhaft verbinden, jedoch mechanisch ineinandergreifen. Eine bevorzugte Ausführungsform der Schwundverbindung umfasst den Einsatz eines Mehrkomponenten-Spritzgussverfahrens. Dabei werden im selben Werkzeug unterschiedliche Materialien nacheinander oder gleichzeitig eingespritzt, wobei sich durch Materialauswahl und Prozessführung unterschiedliche Verbindungsarten und Funktionseigenschaften realisieren lassen. Für den Spritzvorgang kann ein Heißkanal- oder ein Kaltkanalsystem eingesetzt werden, je nach den thermischen Eigenschaften der eingesetzten Kunststoffe und den Anforderungen an Zykluszeit und Materialführung. Auch ein Co-Injection-Verfahren kann angewendet werden, bei dem zwei Materialien gleichzeitig, aber getrennt über ein spezielles Düsenkonzept in die Form eingespritzt werden. Diese Verfahren ermöglichen insbesondere das gezielte Einbringen weicher und harter Komponenten in unterschiedlichen Zonen eines Bauteils - etwa zur Schaffung von flexiblen Zonen in Borstenplatten oder gelenkartigen Übergängen zwischen Griff und Borstenträger.

Die verwendeten Spritzgusswerkzeuge sind dabei so aufgebaut, dass sie die verschiedenen Materialien gezielt in den gewünschten Bereichen platzieren. Das Spritzgießen erfolgt dabei vorzugsweise in einem Mehrkavitäten- oder Rotationswerkzeug, das auf die sequentielle oder parallele Einspritzung abgestimmt ist.

Gespritzte Pflegeborsten können aus nachhaltigen Materialien hergestellt sein. Insbesondere können diese aus nachwachsenden Rohstoffen hergestellt sein. Gespritzte Pflegeborsten können insbesondere aus einem biologisch abbaubaren Kunststoff hergestellt sein. Dies erlaubt, den Grundkörper inklusive den gespritzten Pflegeborsten biologisch abbaubar zu entsorgen. Das Trennen der gespritzten Pflegeborsten vom Grundkörper ist nicht mehr nötig. Gespritzte Pflegeborsten können auch aus rezyklierten Kunststoffen hergestellt sein.

Wie nachfolgend noch näher beschrieben, kann der Bürstenkopf Borstenlöcher enthalten. Ein Borstenloch, mehrere oder sämtliche Borstenlöcher kann/können mindestens teilweise im Wesentlichen zylinderförmig ausgebildet sein. Borstenlöcher können als Sacklöcher ausgebildet sein. Die Borstenlöcher können einen Durchmesser von 1,3 mm bis 2,1 mm, insbesondere von 1,5 mm bis 1,9 mm aufweisen. Die Borstenlöcher weisen ganz besonders bevorzugt einen Durchmesser von 1,6 mm auf. Die Borstenlöcher können eine Tiefe von 1,5 mm bis 5 mm, insbesondere von 2 mm bis 4 mm, aufweisen. Die Borstenlöcher weisen vorzugsweise eine Tiefe von 3,5 mm auf. Borstenlöcher können in einem Winkel zur Borstenlochfläche im Bereich des Bürstenkopfs eingebracht sein. Der Winkel kann 0° bis 45°, insbesondere 5° bis 25°, betragen. Borstenlöcher, die in einem Winkel zur Borstenlochfläche eingebracht sind, können eine Neigung beispielsweise bei einer Aufsteckbürste einer Sonic-Anwendung in Richtung der Längsachse oder auch in einem Winkel zur Längsachse, d.h. quer zur Längsachse, orientiert sein. Dieser Winkel kann 0° bis 90°, insbesondere 0° oder 90°, betragen. Dabei entsprechen 0° einer Orientierung in Richtung der Längsachse. Durch die winklige Anordnung von Borstenbündeln können diese auch in Richtung der Längsachse oder in einem Winkel zu dieser, d.h. quer zur Längsachse, seitlich über einen Bürstenkörper hinausragen. Dadurch wird das Borstenfeld breiter oder länger als der Grundkörper. Bei einer oszillierenden Anwendung kann die Anordnung der Borstenlöcher in einem Winkel zur Borstenlochfläche insbesondere zirkular rund um die Drehachse geneigt sein.

In einem Borstenfeld können Borstenlöcher mit verschiedenen Durchmessern vorgesehen sein. Dabei können für die verschiedenen Durchmesser auch verschiedene Beborstungen, insbesondere Bündel mit Borsten unterschiedlicher Art, realisiert werden. So können größere Borstenbündel mit zugespitzten Pflegeborsten und kleinere Borstenbündel mit zylindrischen Pflegeborsten realisiert sein.

Borstenbündel verschiedener Größen und Ausbildungen können in verschiedenen Mustern angeordnet sein. Beispielhaft sind nachfolgend einige Möglichkeiten aufgezählt:
- Abwechselnde Größen in Längs- oder Querreihen;
- Reihe von Borstenbündeln außen am Borstenfeld mit unterschiedlicher Größe gegenüber den Borstenbündeln im Innern;
- Borstenfeld aus einer Borstenbündel-Größe mit einzelnen Inseln aus Borstenbündeln einer oder mehrerer anderer Größen;
- Aufweisen eines Größenverlaufs: größere Borstenbündel im Borstenfeld zu kleineren Borstenbündeln in einem anderen Teil des Borstenfelds.

Es können auch Borstenlöcher gestaltet werden, die sehr nahe zueinander stehen und auf diese Weise die Borstenbündel, insbesondere die Borsten dieser Borstenbündel, ineinander übergehen.

Ferner sind die Pflegeborsten, insbesondere als Borstenbündel, vorzugsweise mittels zumindest eines Ankerstanz-Verfahrens oder eines ankerlosen Verfahrens oder dergleichen verarbeitet, insbesondere an dem Bürstenkopf befestigt. Vorzugsweise weist das Bürstenkopf eine Mehrzahl von, insbesondere gebohrten und/oder im Spritzgussverfahren geformten, Borstenaufnahmen, insbesondere Löchern, für Borstenbündel, auf und bildet eine Borstenverankerungsfläche aus. Im Fall eines Ankerstanzens ist beispielsweise denkbar, dass zunächst ein Grundkörper, insbesondere aus einer Hartkomponente, vorzugsweise des Bürstenkopfs, mittels eines Spritzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens. Ebenso ist ein Schlingenstanzen denkbar.

Alternativ sind, wie erwähnt, auch ankerlose Verfahren denkbar, wobei vorteilhaft Pflegeborsten beziehungsweise Borstenbündel nicht gefaltet werden. Filamente weisen in diesem Fall im Vergleich zu einem Ankerstanzen in etwa die halbe Länge auf. Beispielsweise ist hierbei denkbar, dass die Borstenbündel zunächst vereinzelt, verschmolzen und/oder ihre Borstenenden insbesondere anschließend zu deren Befestigung umspritzt werden. Hierbei können vorteilhaft Borstenbündel zusammengeführt werden.

Ferner ist denkbar, dass eine Anwendungseinheit, insbesondere der Bürstenkopf, aus einem Grundkörper und einem Borstenplättchen, welches mit Pflegeborsten und/oder weiteren Reinigungselementen besetzt ist, zusammengesetzt ist. Hierzu werden zunächst mittels Spritzgießens Borstenplättchen mit Durchgangslöchern gefertigt, durch welche anschließend Pflegeborsten geführt werden. Vorzugsweise werden die Pflegeborsten anschließend auf der Rückseite des Borstenplättchens verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere dem unteren Teil des Bürstenkopfs, verschweißt und/oder verklebt werden, vorzugsweise mittels eines Ultraschallschweißens. Hierzu weist der Grundkörper, insbesondere der untere Teil des Bürstenkopfs, insbesondere eine dem Borstenplättchen entsprechende Ausnehmung auf, in welche das Borstenplättchen eingesetzt werden kann. Als bekanntes Herstellungsverfahren ist in diesem Zusammenhang beispielsweise das Anchor-Free-Tufting-Verfahren zu nennen, das insbesondere ein Zusammenführen von Borstenbündeln ermöglicht. Als Unterseite des Borstenplättchens wird insbesondere eine Seite bezeichnet, welche in eine Ausnehmung des Grundkörpers, insbesondere des unteren Teils des Bürstenkopfs, gelegt wird und in Richtung Rückseite der Anwendungseinheit zeigt. Entsprechend zeigt die Oberseite des Borstenplättchens in Richtung des Borstenfelds.

Als weiteres Verfahren zur ankerlosen Beborstung kommt eine Fertigung, insbesondere ein Spritzgießen, eines Bürstenkopfs mit Durchgangslöchern für Pflegeborsten infrage. Pflegeborsten können anschließend durch die Durchgangslöcher geführt und auf einer Rückseite verschmolzen werden, insbesondere miteinander und/oder mit dem Bürstenkopf. Vorzugsweise erfolgt anschließend ein Überspritzen, insbesondere mit zumindest einer Weichkomponente, der verschmolzenen Bereiche und/oder des Bürstenkopfs.

Zudem ist denkbar, zunächst einen Bürstenkopf mit Sacklöchern, beispielsweise mittels Spritzgießens und/oder mittels eines Bohrens der Sacklöcher, zu fertigen. Pflegeborsten werden in diesem Fall insbesondere zu Bündeln zusammengelegt und an einem Ende verschmolzen und/oder anderweitig verbunden. Der Bürstenkopf wird anschließend erwärmt. Sodann können vorteilhaft Borstenbündel in die Sacklöcher eingeführt und mittels eines Andrückens des Bürstenkopfs verankert werden. Insbesondere verformen sich hierbei die erwärmten Sacklöcher, sodass die Borstenbündel in denselben verankert werden.

Alternativ oder zusätzlich zu gestanzten und/oder angeschweißten und/oder angeklebten Pflegeborsten sind auch angespritzte Pflegeborsten denkbar. Diese können insbesondere während eines Mehrkomponentenspritzgießens gemeinsam mit dem Bürstenkopfgefertigt sein.

Es stehen verschiedene Beborstungsverfahren zur Verfügung: Ein mögliches Verfahren betrifft die maschinelle Beborstung via Eindrehen der Borsten eines Bürstenträgers mittels Filamenten, die mit einem Befestigungsdraht in eine Aufnahme des Borstenträgers eingezogen und dort fixiert werden. Dabei werden sämtliche Schritte automatisiert oder teilautomatisiert durchgeführt, wobei einzelne Prozessstationen aufeinander abgestimmt sind.

Ein weiteres mögliches Verfahren zur Beborstung des Bürstenkopfs stellt das Eindrehen dar. Hierbei wird beispielsweise Filament von einer Rolle zugeführt, wobei insbesondere mehrere Filamentstränge auf einer Rolle aufgewickelt sind. Für die Maschinenbeschickung sind jeweils mehrere Rollen vorgespannt, denn jedes Filament in der Bürste entspricht einem Filamentstrang. Die Filamente werden in der Breite korrekt ausgebreitet, damit sie die Breite haben, in welcher sie in die Bürste eingeführt werden. Die Filamente werden so vorgezogen, dass sie anschließend für den nächsten Schritt freistehen, d.h. dass ein Draht darüber geführt werden kann. Anschließend wird ein Draht ab einer Rolle auf die Maschine zugeführt, d.h. abgewickelt und in den Prozess eingeführt. Der Draht wird auf eine Länge geschnitten, welche größer ist als die abgewickelte Länge der eingedrehten Bürste, das endgültige Ablängen erfolgt nach dem Eindrehen. Der Draht wird zu einem U gebogen, damit die offene Seite anschließend über die Filamente geschoben werden kann, um die Borsten einzufädeln. Der Draht wird am Boden des U's gehalten. Darauffolgend wird das offene Drahtende geklemmt, damit die Filamente zwischen den Drahtstücken halten. Die Filamente werden auf eine Länge geschnitten, welche größer ist als die Endlänge in der Bürste, damit die Bürste anschließend, wenn die Filamente eingedreht sind, korrekt geschnitten werden kann. Der Draht wird gedreht, sodass die Filamente zwischen dem Draht eingeklemmt und damit fixiert werden. Nachdem die Filamente im Draht fixiert sind, werden sie auf die korrekte Länge geschnitten und profiliert. Nachdem der Bürstenteil fertiggestellt ist, wird der überschüssige Draht abgeschnitten.

Ferner stehen verschiedene ankerlose Verfahren zur maschinellen Beborstung eines Bürstenkopfs zur Verfügung. Stattdessen werden alternative Fügetechniken wie Umspritzen, Verschweißen oder Formschluss eingesetzt. Die beschriebenen Verfahren eignen sich insbesondere für moderne Kunststoffhandteile und ermöglichen kompakte, automatisierte Herstellprozesse. Im Unterschied zum klassischen Ankerdraht-Verfahren werden bei den ankerlosen Verfahren die Filamente nicht gefaltet oder in U-Form eingezogen, sondern gerade verarbeitet. Dies hat zur Folge, dass die Borsten typischerweise nur halb so lang sind wie bei Ankerdraht-Techniken. Eine Verbindung der Filamente zu einem Bündel ist möglich, aber nicht zwingend. Es werden sowohl Einzelborsten als auch vorbereitete Bündel verwendet. Die Borsten werden entsprechend vereinzelt, ausgerichtet, gegebenenfalls fixiert und in einem nachfolgenden Prozess mit dem Bürstenkörper verbunden. Beim sogenannten In-Mould-Tufting (IMT) werden die Borsten in einer Form (meist Spritzgießform) positioniert, in der später auch der Bürstengriff hergestellt wird. Die Borsten können einzeln oder in Gruppen zusammengeführt werden. Sie werden direkt in das Spritzgusswerkzeug eingeführt, wo sie durch die Form fixiert werden. Im Rahmen des Spritzvorgangs werden die Borsten an ihren Enden vom Kunststoffmaterial des Griffbereichs umschlossen, wodurch eine dauerhafte stoffschlüssige Verbindung entsteht. Dabei kann die Borstenstruktur auf der Rückseite mit dem eingespritzten Kunststoff verschmolzen werden.

Alternativ wird zunächst ein Borstenplättchen hergestellt, in welchem die Borsten fixiert werden. Anschließend wird das Plättchen mit dem Griffbereich umspritzt. In beiden Fällen ist die Anbindung der Borsten an den Kunststoff durch vollständige Umschließung oder Verschweißung sichergestellt.

Des Weiteren wird insbesondere für die oszillierende Anwendung vorgeschlagen, dass die Aufsteckbürste die Antriebswelle aufweist, welche in einem mit dem elektrischen Bürstenhandteil verbundenen Zustand drehfest mit der Welle der Antriebseinheit, insbesondere dem Elektromotor, verbunden ist.

Die Antriebswelle kann insbesondere als Hohlwelle, Kupplungsbuchse oder Führungselement innerhalb des Bürstenkopfs ausgestaltet sein. Die Antriebswelle ist vorzugsweise durch einen Antriebstab ausgebildet. In einem mit dem elektrischen Bürstenhandteil verbundenen Zustand ist die Antriebswelle der Aufsteckbürste drehfest mit der Welle des Bürstenhandteils verbunden. Dies bedeutet, dass bei einer Drehbewegung oder oszillierenden Bewegung der Welle der Antriebseinheit, insbesondere des Elektromotors, eine direkte Übertragung dieser Bewegung auf die Antriebswelle und damit auf den Bürstenkopf erfolgt, ohne dass sich die Geschwindigkeit bzw. die Frequenz ändert. Je nach Ausgestaltung der Mittel zur Bewegungsübertragung von der Antriebswelle auf den Bürstenkopf kann jedoch der Drehwinkel der Welle der Antriebseinheit, insbesondere des Elektromotors, und der Drehwinkel des Bürstenkopfs gleich oder unterschiedlich ausgestaltet werden.

Die drehfeste Verbindung kann dabei formschlüssig (z. B. durch Mehrkantprofil, Zapfenführung oder Verzahnung), kraftschlüssig (z. B. durch Klemmung), oder kombiniert realisiert sein. Die Konstruktion ist vorteilhaft so ausgelegt, dass die drehfeste Verbindung beim Aufstecken automatisch durch axiales Einschieben oder Aufstecken hergestellt wird.

Es kann vorteilhaft eine verschleißarme Verbindung zwischen Aufsteckbürste und Bürstenhandteil bereitgestellt werden.

Es wird ferner vorgeschlagen, dass die Antriebswelle der Aufsteckbürste in einem Betrieb dazu vorgesehen ist, den Bürstenkopf oszillierend anzutreiben.

Die Auslenkung des Bürstenkopfs kann im Bereich von ±3° bis ±45° liegen, wobei bevorzugt ein Bereich von ±6° bis ±20° gewählt wird. Daraus ergibt sich ein Gesamtwinkel von 12° bis 40°, bevorzugt etwa 33°. Eine Übersetzung kann so ausgelegt sein, dass der Winkel der Auslenkung des Bürstenkopfs kleiner als, gleich groß wie oder größer als der von der Welle ausgeführte Winkel ist.

Bei der alternativen Sonic-Anwendung erfolgt die Auslenkung bevorzugt mit geringerer Amplitude (z. B. 4° bis 12° Auslenkung) und höherer Frequenz (z. B. 150-370 Hz).

Bei beiden Anwendungen - oszillierend und Sonic - entspricht die Frequenz der Bewegung des Bürstenkopfs exakt der Frequenz der Welle der Antriebseinheit, insbesondere des Elektromotors. Durch die direkte Kopplung ohne Veränderung der Frequenz (beispielsweise mittels Getriebe) ist der resultierende Bewegungsablauf besonders vorteilhaft leise, präzise, verlustfrei und dynamisch steuerbar.

Zusammenfassung möglicher Merkmale der beiden Anwendungen:
Oszillierende Anwendung:
- Der Elektromotor führt mit seiner Welle keine kontinuierliche Drehbewegung aus, sondern eine Oszillation (Hin- und Her-Bewegung)
- Die Drehachse des Bürstenkopfs steht in einem Winkel - vorzugsweise im Wesentlichen in einem rechten Winkel zur Welle der Antriebseinheit, insbesondere des Elektromotors
- Die Drehachse der Antriebswelle der Aufsteckbürste steht (mindestens parallel oder sogar) kollinear mit der Welle der Antriebseinheit, insbesondere des Elektromotors
- Die Antriebswelle der Aufsteckbürste wird auf die Welle der Antriebseinheit, insbesondere des Elektromotors, kraft- und/oder formschlüssig aufgesteckt
- Das Aufsteckbürstengehäuse wird drehfest mit einem Zapfen des Handteils, insbesondere der Einschubeinheit, verbunden
- Die Bewegung (Frequenz und Drehwinkel) der Welle der Antriebseinheit, insbesondere des Elektromotors, wird direkt, insbesondere unmittelbar und unverändert, auf die Antriebswelle der Aufsteckbürste übertragen
- Die Antriebswelle der Aufsteckbürste und der Bürstenkopf verfügen über Mittel, welche die Bewegung der Antriebswelle in eine Bewegung des Bürstenkopfs umsetzen - damit kann,
   a) der Drehwinkel des Bürstenkopfs gegenüber dem Drehwinkel der Antriebswelle der Aufsteckbürste, insbesondere der Welle des Elektromotors, verkleinert werden
   b) der Drehwinkel des Bürstenkopfs gegenüber dem Drehwinkel der Antriebswelle der Aufsteckbürste, insbesondere der Welle des Elektromotors, vergrößert werden
   c) der Drehwinkel des Bürstenkopfs gegenüber dem Drehwinkel der Antriebswelle der Aufsteckbürste, insbesondere der Welle des Elektromotors, gleich bleiben
- Zwischen der Welle des Elektromotors und dem Bürstenkopf findet keine Veränderung der Frequenz der Bewegung statt
- Frequenzbereiche der oszillierenden Anwendung - gemäß vorgängiger Ausführung
- Winkelbereiche der oszillierenden Anwendung - gemäß vorgängiger Ausführung Sonic-Anwendung:
   - Der Elektromotor führt mit seiner Welle keine kontinuierliche Drehbewegung aus, sondern eine Oszillation (Hin- und Her-Bewegung)
   - Die Drehachse der Aufsteckbürste, insbesondere deren Bürstenkopf, ist (mindestens parallel oder sogar) kollinear mit der Welle der Antriebseinheit, insbesondere des Elektromotors
   - Die Aufsteckbürste wird auf die Welle der Antriebseinheit, insbesondere des Elektromotors, kraft- und/oder formschlüssig aufgesteckt
   - Die Bewegung (Frequenz und Drehwinkel) der Welle der Antriebseinheit, insbesondere des Elektromotors, wird direkt, insbesondere unmittelbar und unverändert, auf die Aufsteckbürste, insbesondere deren Bürstenkopf übertragen
   - Zwischen der Welle des Elektromotors und der Aufsteckbürste, insbesondere deren Bürstenkopf, findet keine Bewegungstransformation, Über- oder Untersetzung statt
   - Frequenzbereiche der Sonic-Anwendung - gemäß vorgängiger Ausführung
   - Winkelbereiche der Sonic-Anwendung - gemäß vorgängiger Ausführung Des Weiteren geht die Erfindung aus von einem Verfahren zur Herstellung des elektrischen Bürstenhandteils.

Die Begriffe "axial" und "radial" sind in diesem Zusammenhang insbesondere auf eine Haupterstreckungsachse des elektrischen Bürstenhandteils bezogen, so dass der Ausdruck "axial" insbesondere eine Richtung bezeichnet, die parallel zu oder koaxial mit einer der Haupterstreckungsachsen verläuft. Ferner bezeichnet der Ausdruck "radial" im Folgenden insbesondere eine Richtung, die senkrecht zu einer der Haupterstreckungsachsen verläuft. Unter einer "Haupterstreckungsachse" und einer "Längsrichtung" eines Objekts soll dabei insbesondere eine Achse verstanden werden, welche parallel zu einer längsten Kante eines kleinsten geometrischen Quaders verläuft, welcher das Objekt gerade noch vollständig umschließt, und insbesondere einen geometrischen Mittelpunkt des Objekts schneidet. Ferner sollen die Begriffe "Oberseite" oder "Vorderseite" der Zahnbürste in diesem Zusammenhang insbesondere als jene Seite der Zahnbürste verstanden werden, auf welcher der Daumen aufgelegt wird. Die Ober - oder Vorderseite ist normalerweise auch jene Seite, auf welche das Borstenfeld, insbesondere des Bürstenkopfs der Aufsteckbürste, gerichtet ist. Als "Unterseite" oder "Rückseite" der Zahnbürste soll insbesondere jene Seite verstanden werden, die dem Borstenfeld des Bürstenkopfs abgewandt ist. Des Weiteren sind die Begriffe "linke Seite" und "rechte Seite" jeweils auf eine Betrachtung der Vorderseite bezogen. Als "Unterseite des Kopfplättchens" wird jene Seite bezeichnet, welche in die Ausnehmung des Grundkörpers gelegt wird und in Richtung Unterseite der Zahnbürste zeigt. Entsprechend zeigt die "Oberseite des Kopfplättchens" in Richtung der Oberseite der Zahnbürste.

Es sind verschiedene Materialien für verschiedene Teile der elektrischen Zahnbürste insbesondere des Bürstenhandteils sowie der Aufsteckbürste denkbar. Dabei kann zwischen Hartkomponenten und Weichkomponenten unterschieden werden. Zusätzlich können spezielle Materialien verwendet werden, etwa mit Farbindikatoren, antibakteriellen Zusätzen oder besonderen mechanischen Eigenschaften.

Für die Herstellung von Borsten und weiteren Komponenten des elektrischen Bürstenhandteils können unterschiedliche Materialien verwendet werden, insbesondere Thermoplaste mit geeigneten mechanischen und verarbeitungstechnischen Eigenschaften. Im Bereich der Hartkomponenten kommt eine Vielzahl von Werkstoffen infrage. Zu den Polyolefinen zählen beispielsweise Polypropylen (PP) oder Polyethylen (PE), wobei letztere auch in den Formen high density Polyethylen (HDPE) oder low density Polyethylen (LDPE) eingesetzt werden können. Darüber hinaus sind Polyester verbreitet, insbesondere Polyethylenterephthalat (PET) in Form von säuremodifiziertem Polyethylenterephthalat (PETA) oder glykolmodifiziertem Polyethylenterephthalat (PETG), Polybutylenterephthalat (PBT) sowie säuremodifiziertes Polycyclohexylendimethylenterephthalat (PCT-A) oder glykolmodifiziertes Polycyclohexylendimethylenterephthalat (PCT-G). Auch Cellulosederivate können verwendet werden, etwa Celluloseacetat (CA), Celluloseacetatbutyrat (CAB), Cellulosepropionat (CP), Celluloseacetatphthalat (CAP) oder Cellulosebutyrat (CB). Polyamide (PA), insbesondere PA 6.6, PA 6.10 oder PA 6.12, sind für technische Anwendungen geeignet. Weitere Beispiele sind Polymethylmethacrylat (PMMA), Polycarbonat (PC), Polyoxymethylen (POM) und Polyvinylchlorid (PVC). Darüber hinaus kommen Polyurethane (PUR) infrage. Auch Styrolpolymersysteme wie Styrolacrylnitril (SAN), Polystyrol (PS), Acrylnitrilbutadienstyrol (ABS), Styrolmethacrylat (SMMA) oder Styrolbutadien (SB) können eingesetzt werden. Polyethylen (PE) kann dabei sowohl als Hartkomponente als auch als Weichkomponente ausgestaltet sein. Gleiches gilt für Polyurethan (PU), das ebenso in beiden Materialklassen Verwendung finden kann. Polypropylen (PP) wird in vielen Fällen bevorzugt eingesetzt, das E-Modul liegt dabei im Bereich von etwa 1000 bis 2400 N/mm², besonders bevorzugt im Bereich zwischen 1300 N/mm² und 1800 N/mm². Die Hartkomponente wird vorzugsweise für stabile, strukturtragende Elemente eingesetzt, beispielsweise für den Griffkörper, Haltezonen oder auch den Bürstenkopf. Werden mehrere Hartkomponenten eingesetzt - etwa im Zwei- oder Mehrkomponenten-Spritzguss - so kann entweder ein Materialschluss oder ein reiner Formschluss zwischen den Komponenten vorgesehen werden. Alternativ können die verschiedenen Hartkomponenten auch mittels Formschluss kombiniert werden, etwa durch Hinterschnitte oder Durchbrüche sowie durch eine teilweise oder vollständige Umspritzung. In diesem Fall kann ein sogenanntes Schwundgelenk oder eine Schwundverbindung entstehen: Das zweite, später gespritzte Hartmaterial schrumpft beim Abkühlen stärker als das erste, wodurch eine bewegliche, aber sicher geführte Verbindung erzielt wird.

Ferner ist denkbar, dass das elektrische Bürstenhandteil insbesondere einzelne Komponenten wie Griffeinlagen, Borsten oder Oberflächenbereiche zumindest teilweise aus einer Weichkomponente gebildet sind. Die Weichkomponenten sind vorzugsweise so gewählt, dass sie gemeinsam mit Hartkomponenten im Zwei- oder Mehrkomponenten-Spritzgießverfahren verarbeitet werden können, wobei insbesondere ein dauerhafter Materialschluss erzielt wird. Bevorzugt werden thermoplastische Styrol-Elastomere (TPE-S) eingesetzt, beispielsweise ein Styrol-Ethylen-Butylen-Styrol-Copolymer (SEBS) oder ein Styrol-Butadien-Styrol-Copolymer (SBS). Alternativ oder ergänzend können weitere thermoplastische Elastomere wie thermoplastische Polyurethan-Elastomere (TPE-U), thermoplastische Polyamid-Elastomere (TPE-A), thermoplastische Polyolefin-Elastomere (TPE-O) oder thermoplastische Polyester-Elastomere (TPE-E) verwendet werden. Auch Silikone sind als Weichkomponente geeignet. Vorzugsweise sind die eingesetzten Weichkomponenten als thermoplastische Elastomere mit einer Shore-A-Härte kleiner als 90, besonders bevorzugt kleiner als 50, insbesondere kleiner als 30, ausgebildet. Solche Komponenten ermöglichen eine angenehme Haptik, gute Dämpfungseigenschaften und eine zuverlässige Verbindung zu benachbarten Komponenten aus Hartkomponente. Besonders bevorzugt sind Weichkomponenten vorgesehen, die mit Hartkomponenten wie Polypropylen (PP) oder Polyethylen (PE) kombiniert werden können. Dabei kann PE sowohl als Hart- als auch als Weichkomponenten eingesetzt werden. Gleiches gilt für Polyurethan (PU), welches ebenfalls in unterschiedlichen Härtegraden verfügbar ist.

Es wird ferner vorgeschlagen, dass zumindest einzelne Bauteile oder Elemente des Produkts aus speziellen Materialien, insbesondere Biokunststoffen, gefertigt sind. Biokunststoffe sind dabei Kunststoffe, die vollständig oder teilweise auf nachwachsenden Rohstoffen basieren. Diese Materialien ermöglichen eine umweltfreundlichere Alternative zu herkömmlichen petrochemischen Kunststoffen und eignen sich beispielsweise für Borstenkörper, Bürstenplatten oder Griffbereiche. Als nachwachsende Rohstoffe kommt eine Vielzahl pflanzlicher Ausgangsstoffe in Betracht. Mögliche Beispiele umfassen Mais, Hanf, Zucker, Rizinusöl, Palmöl, Kartoffeln, Weizen, Zuckerrohr, Kautschuk, Holz oder auch die Castor-Pflanze (Wunderbaum). Aus diesen Rohstoffen können wiederum verschiedene Grundstoffe gewonnen werden, wie etwa Cellulose, Stärke, Milchsäure (PLA), Glucose, Chitin oder Chitosan. Auf Basis dieser Grundstoffe lassen sich unterschiedliche Typen von Biokunststoffen klassifizieren. Die wichtigsten Gruppen umfassen:
> Stärkebasierte Biokunststoffe.
> Cellulosebasierte Biokunststoffe, etwa auf Basis von Celluloseacetat.
> Polyhydroxy-Alkanoate (PHA), wie Polyhydroxybuttersäure (PHB).
> Polymilchsäuren (PLA).
> Aliphatische und aromatische Copolyester.
> Lignin-basierte Biokunststoffe, die aus Holzbestandteilen gewonnen werden.
> Polybutyradatipat-Terephthalat (PBAT)-basierte Materialien.

Darüber hinaus können auch wasserlösliche Polymere berücksichtigt werden, etwa in Kombination mit temporären oder sich zersetzenden Funktionselementen.

Das erfindungsgemäße elektrische Bürstenhandteil, die elektrische Zahnbürste sowie das Verfahren sollen hierbei nicht auf die oben beschriebene Anwendung und Ausführungsform beschränkt sein. Insbesondere können das elektrische Bürstenhandteil, die elektrische Zahnbürste sowie das Verfahren zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen:

- Fig. 1: eine 3D-Ansicht eines elektrisches Bürstenhandteils mit einer Aufsteckbürste von der Vorderseite, wobei eine Oszillation eines Bürstenkopfs der Aufsteckbürste senkrecht zur Längsachse einer Schnittstelle des Bürstenhandteils erfolgt,
- Fig. 2: eine 3D-Ansicht von der Rückseite des elektrischen Bürstenhandteils mit der Aufsteckbürste,
- Fig. 3: eine 3D-Ansicht des elektrischen Bürstenhandteils, mit einer Schnittstelle zur Kopplung mit der Aufsteckbürste von der Vorderseite,
- Fig. 4: eine 3D-Ansicht von der Rückseite des elektrischen Bürstenhandteils, mit der Schnittstelle zur Kopplung mit der Aufsteckbürste,
- Fig. 5: zwei Schnittansichten des elektrischen Bürstenhandteils, mit der Schnittstelle,
- Fig. 6: eine 3D-Ansicht einer Einschubeinheit mit zwei Print-Zonen von der Vorderseite,
- Fig. 7: eine 3D-Ansicht von der Rückseite der Einschubeinheit mit zwei Print-Zonen,
- Fig. 8: eine Draufsicht auf die Oberseite der Einschubeinheit,
- Fig. 9: eine Draufsicht auf die Unterseite der Einschubeinheit,
- Fig. 10: eine Seitenansicht der Einschubeinheit,
- Fig. 11: eine erste Explosionsansicht der Einschubeinheit des elektrischen Bürstenhandteils,
- Fig. 12: eine zweite Explosionsansicht der Einschubeinheit des elektrischen Bürstenhandteils,
- Fig. 13: eine erste Ansicht einer Aufsteckbürste, wobei eine Oszillation eines Bürstenkopfs der Aufsteckbürste senkrecht zur Längsachse einer Schnittstelle des Bürstenhandteils erfolgt,
- Fig. 14: eine zweite Ansicht einer Aufsteckbürste,
- Fig. 15: eine 3D-Ansicht eines alternativen elektrisches Bürstenhandteils mit einer an eine Schnittstelle angeschlossenen Aufsteckbürste von der Vorderseite, wobei eine Oszillation eines Bürstenkopfs der Aufsteckbürste parallel zur Längsachse einer Schnittstelle des Bürstenhandteils erfolgt,
- Fig. 16: eine 3D-Ansicht von der Rückseite des alternativen elektrischen Bürstenhandteils mit einer an eine Schnittstelle angeschlossenen Aufsteckbürste,
- Fig. 17: eine 3D-Ansicht des alternativen elektrischen Bürstenhandteils mit einer Schnittstelle zur Kopplung mit einer Aufsteckbürste von der Vorderseite,
- Fig. 18: eine 3D-Ansicht von der Rückseite des alternativen elektrischen Bürstenhandteils mit einer Schnittstelle zur Kopplung mit einer Aufsteckbürste,
- Fig. 19: zwei Schnittansichten des alternativen elektrischen Bürstenhandteils, mit der Schnittstelle,
- Fig. 20: eine 3D-Ansicht einer Einschubeinheit mit zwei Print-Zonen von der Vorderseite,
- Fig. 21: eine 3D-Ansicht von der Rückseite der Einschubeinheit mit zwei Print-Zonen,
- Fig. 22: eine Draufsicht auf die Oberseite der Einschubeinheit,
- Fig. 23: eine Draufsicht auf die Unterseite der Einschubeinheit,
- Fig. 24: eine Seitenansicht der Einschubeinheit,
- Fig. 25: eine erste Explosionsansicht der Einschubeinheit des elektrischen Bürstenhandteils,
- Fig. 26: eine zweite Explosionsansicht der Einschubeinheit des elektrischen Bürstenhandteils,
- Fig. 27: eine erste Ansicht einer alternativen Aufsteckbürste, wobei eine Oszillation eines Bürstenkopfs der alternativen Aufsteckbürste parallel zur Längsachse einer Schnittstelle des alternativen Bürstenhandteils erfolgt,
- Fig. 28: eine zweite Ansicht einer alternativen Aufsteckbürste,
- Fig. 29: eine schematische Darstellung eines uniformen Bewegungsmusters der Antriebseinheit,
- Fig. 30: eine schematische Darstellung einer ersten überlagerten Bewegung,
- Fig. 31: eine schematische Darstellung einer weiteren überlagerten Bewegung mit einer alternativen Wellenlänge,
- Fig. 32: eine schematische Darstellung einer weiteren überlagerten Bewegung,
- Fig. 33: eine schematische Darstellung einer ersten variierenden Bewegung, mit einem alternativen, dynamischen Bewegungsmuster und
- Fig. 34: eine schematische Darstellung einer weiteren variierenden Bewegung, mit einer alternativen, dynamischen Frequenz.

### Beschreibung der Ausführungsbeispiele

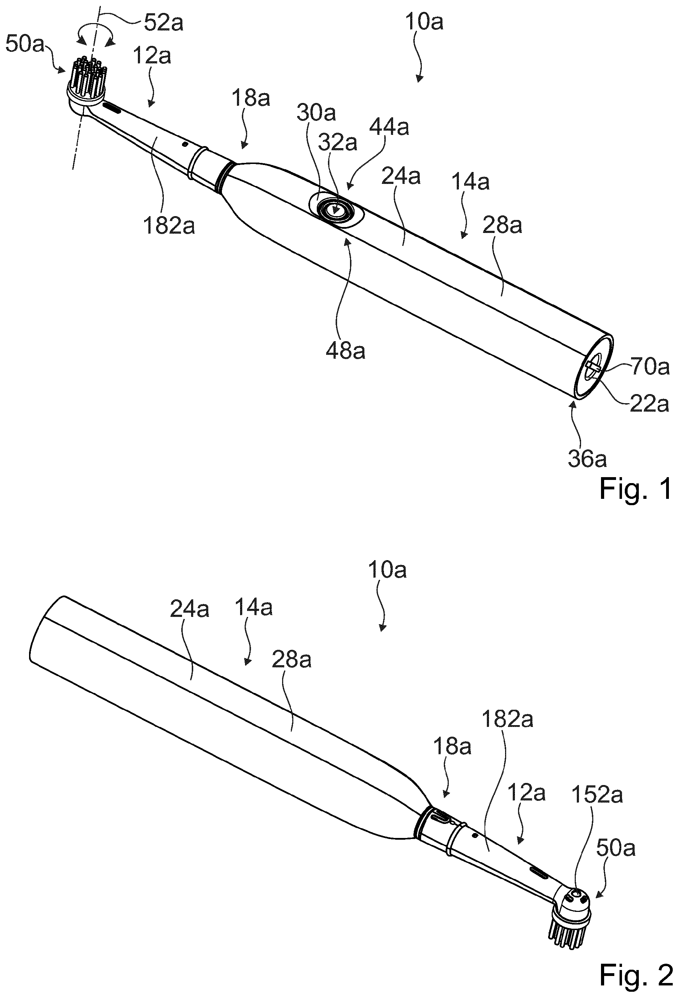

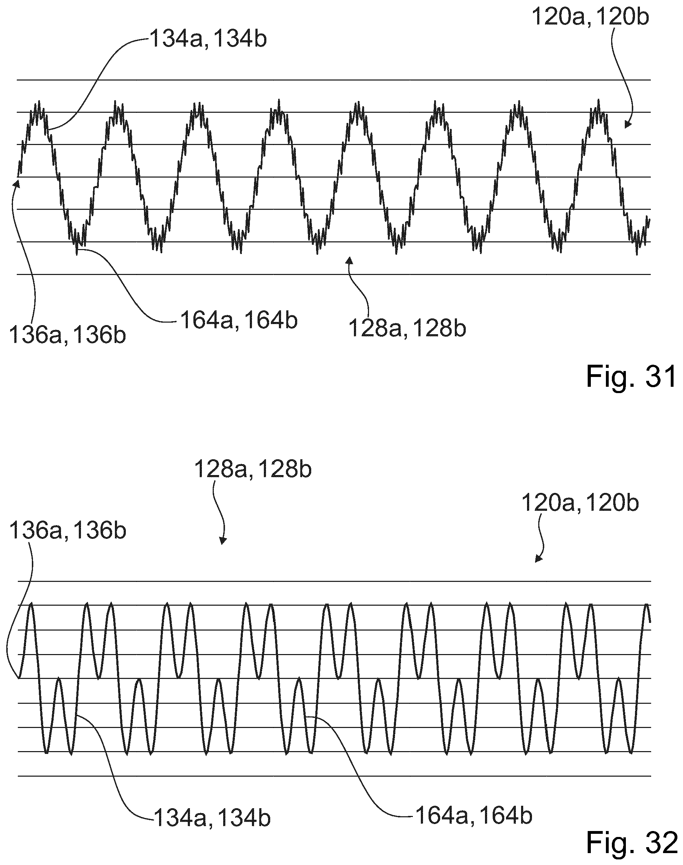

Im Folgenden wird auf die Figuren 1 bis 34 Bezug genommen, welche unterschiedliche Ansichten und Fertigungsstufen eines erfindungsgemäßen elektrischen Bürstenhandteils 10a zeigen. Aufgrund der unterschiedlichen Ansichten sind einige Elemente nicht in sämtlichen Figuren dargestellt und auch nicht in sämtlichen Figuren mit Bezugszeichen versehen.

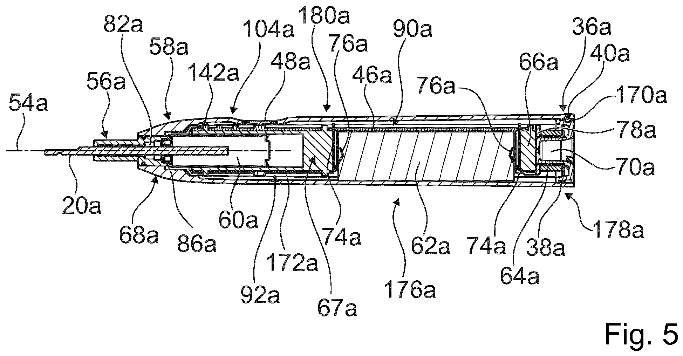

Die Figuren 1 und 2 zeigen das elektrisches Bürstenhandteil 10a mit einer Aufsteckbürste 12a. Das Bürstenhandteil 10a weist ein Gehäuse 14a auf. Das Bürstenhandteil 10a weist eine Einschubeinheit 67a auf. Das Gehäuse 14a nimmt die Einschubeinheit 67a (vgl. Figur 5) auf. Die Gesamtbreite der Einschubeinheit 67a liegt im Bereich von 13 mm bis 25 mm. Die Höhe der Einschubeinheit 67a ist analog zur Breite ausgeführt und liegt ebenfalls im Bereich von 13 mm bis 25 mm

Das Gehäuse 14a weist einen abnehmbaren Deckel 22a auf. An einem Ende des Gehäuses 14a befindet sich eine Anbindung zu dem Deckel 22a. Die Anbindung ist zur Aufnahme des Deckels 22a ausgelegt. Das Gehäuse 14a kann einen Bajonett-Verschluss 36a aufweisen, bei dem mehrere um den Umfang angeordnete Vorsprünge oder Vertiefungen 38a eine formschlüssige Verbindung mit korrespondierenden Gegenstrukturen im Deckel 22a eingehen. Das Zusammenspiel zwischen Gehäuse 14a und Deckel 22a ist dabei so gestaltet, dass beim Aufdrehen oder Aufstecken des Deckels 22a eine Verbindungsstruktur formschlüssig einrastet. Die Verbindung kann durch Drehen im Sinne eines Bajonett-Verschlusses 36a erfolgen, alternativ kann auch ein Steckmechanismus vorgesehen sein. In beiden Fällen kann eine lösbare und dennoch dichte Verbindung realisierbar sein. Im Deckel 22a ist einer erste Dichteinheit 40a angeordnet. Die erste Dichteinheit 40a ist als ein O-Ring 170a ausgebildet. Der O-Ring 170a wird in einer Nut im Deckel 22a gehalten. Der O-Ring 170a liegt im montierten Zustand gegen das Gehäuse 14a an und bewirkt eine Abdichtung zwischen Gehäuse 14a und Deckel 22a. Das Gehäuse 14a ist als eine schützende Außenhülle des Bürstenhandteils 10a ausgebildet. Das Gehäuse 14a weist einen Griffbereich 24a auf. Der Griffbereich 24a bildet einen Griff des Bürstenhandteils 10a aus. Das Gehäuse 14a ist aus einem Kunststoff gebildet. Das Gehäuse 14a ist zweiteilig ausgeführt. Das Gehäuse 14a weist aus einer Hartkomponente 28a bestehende Bauteile auf, welche eine strukturtragende Funktion aufweisen. Das Gehäuse 14a ist aus Hartkomponenten 28a und Weichkomponenten 30a gebildet, wobei mittels der Weichkomponenten 30a beispielsweise der Griffbereiche 24a zum Halten und Schaltflächen zur Betätigung von Schaltern 32a ausgebildet sind. Die Weichkomponenten 30a bilden eine Umspritzung der Hartkomponenten 28a und/oder füllen Ausnehmungen des Gehäuses 14a aus.

Das Gehäuse 14a selbst ist so ausgestaltet, dass im montierten Zustand die Einschubeinheit 67a im Gehäuse 14a gehalten und geführt wird. Die Einschubeinheit 67a kann dabei entweder anhand gesonderter Führungsstrukturen im Gehäuse 14a ausgerichtet werden und/oder direkt über die Geometrie im Bereich des O-Rings 170a positioniert sein.

Das Bürstenhandteil 10a weist eine Bedieneinheit 44a auf. Im Inneren des Gehäuses 14a sind funktionale Elemente vorgesehen, wie elektronische Bedieneinheiten 44a in Form von zumindest einem Schaltern 32a und/oder Anzeigeelementen. Die Schalter 32a können dem Ein-/Ausschalten des Bürstenhandteils sowie der Programmauswahl dienen. Es kann/können ein einzelner Schalter 32a oder auch mehrere Schalter 32a vorgesehen sein, wobei bei mehreren Schaltern 32a unterschiedliche Funktionen gesteuert werden können. Die Schalter 32a können auf einer oder mehreren Printplatten 46a, 172a angebracht und über Gehäusedurchbrüche 48a zugänglich sein. Die Anordnung kann so gewählt sein, dass der jeweilige Schalter 32a von außen betätigt werden kann, ohne dass ein direkter Eingriff in das Gehäuse 14a erforderlich ist. Die Schalter 32a sind auf einer Seite des Gehäuses 14a angeordnet. Das Gehäuse 14a kann Gehäusedurchbrüche 48a für optische Elemente aufweisen. Die Gehäusedurchbrüche 48a sind so gestaltet, dass sie mit auf der Printplatte 46a angeordneten Anzeigeelementen 174a korrelieren. Die Anzeigeelemente 174a können durch transparente Bereiche im Gehäuse 14a sichtbar gemacht werden.

Es sind verschiedene Bewegungsformen für die Aufsteckbürste 12a bei der oszillierenden Anwendung denkbar, wie beispielsweise Überlagerungen verschiedener Oszillationen davon. Die Oszillation eines Bürstenkopfs 50a erfolgt um eine Drehachse senkrecht zur Längsrichtung des Bürstenhandteils 10a. Die Bewegung kann direkt, 1:1, ohne Getriebe vom Bürstenhandteil 10a auf die Aufsteckbürste 12a übertragen werden.

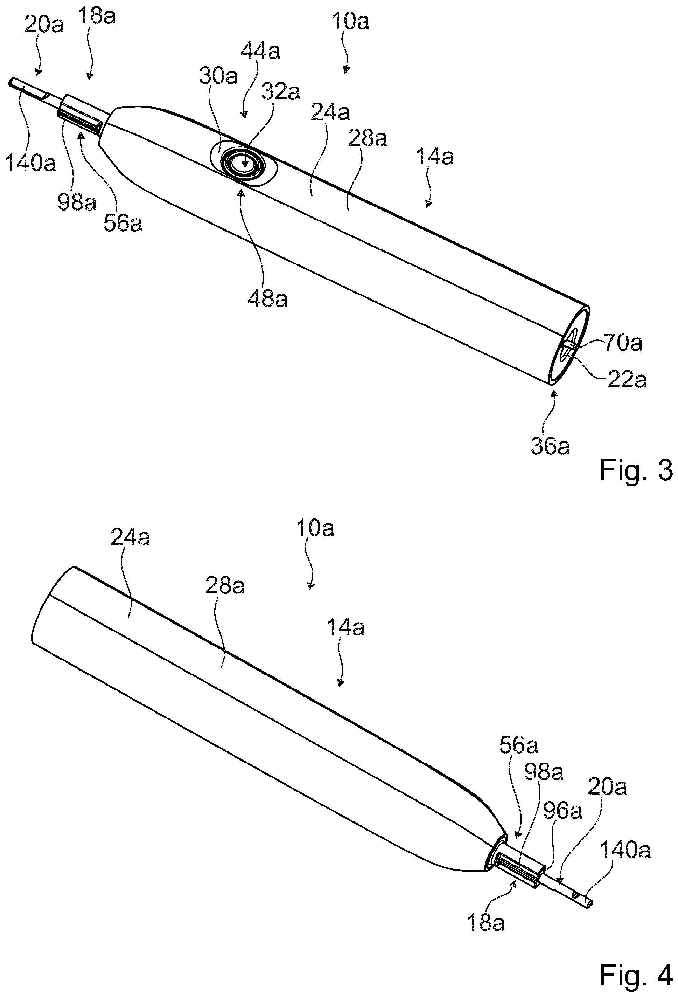

Die Figuren 3 und 4 zeigen das elektrische Bürstenhandteil 10a. Das Bürstenhandteil 10a weist eine Schnittstelle 18a zur Kopplung mit der Aufsteckbürste 12a auf. Die Schnittstelle 18a weist eine Welle 20a mit einer Drehachse auf. Die Welle 20a erstreckt sich parallel zu einer Haupterstreckungsrichtung des Gehäuses 14a. Die Schnittstelle 18a weist einen Zapfen 56a auf, aus welchem die Welle 20a hervorsteht. Das elektrische Bürstenhandteil 10a weist eine Antriebseinheit 58a auf.

Die Welle 20a ist als eine Metallwelle 140a ausgebildet. Sie ist direkt mit einem Elektromotor 60a gekoppelt. Die Anregung einer oszillierenden Bewegung 128a erfolgt ohne zwischengeschaltete mechanische Übertragungselemente wie Getriebe oder Exzentermechanismen. Die oszillierende Bewegung 128a der Welle 20a ist so ausgestaltet, dass sie exakt eine oszillierende Hin-und-Her-Bewegung 128a des daran angebrachten Bürstenkopfs 50a erzeugt.

Die Figur 5 zeigt eine Schnittansicht des elektrischen Bürstenhandteils 10a. In dem Gehäuse 14a ist die Antriebseinheit 58a zum Antrieb der Welle 20a, welche einen Teil der Schnittstelle 18a bildet, angeordnet. Die Antriebseinheit 58a ist als Elektromotor 60a ausgebildet. In dem Gehäuse 14a ist ein Energiespeicher 62a zur Versorgung der Antriebseinheit 58a mit elektrischer Energie angeordnet. Das elektrische Bürstenhandteil 10a weist den Energiespeicher 62a und eine Ladespule 64a auf. Der Energiespeicher 62a ist in der Rahmeneinheit 66a aufgenommen. Die Ladespule 64a wird durch einen Spulenträger 78a mit der Rahmeneinheit 66a verbunden. Der Energiespeicher 62a ist von einem Akkumulator gebildet.

Das elektrische Bürstenhandteil 10a weist eine Ladeschnittstelle mit der Ladespule 64a auf, über welche der Energiespeicher 62a mit elektrischer Energie versorgt werden kann. Die Ladespule 64a ist dazu eingerichtet, durch induktive Energieübertragung mit einer äußeren Ladeeinrichtung in Verbindung zu stehen. Die Ladespule 64a ist so ausgestaltet, dass sie um einen Spulenträger 78a herumgewickelt ist. Die Ladespule 64a ist in ihrer Lage auf den Energiespeicher 62a abgestimmt. Die Ladespule 64a kann fest mit der Rahmeneinheit 66a verbunden oder alternativ in einem einklickbaren Spulenträger 78a integriert sein.

Der Deckel 22a weist. einen Vorsprung 70a für die Ladespule 64a auf. Der Deckel 22a weist einen Vorsprung 70a auf. Dieser Vorsprung 70a steht im Eingriff mit der Ladespule 64a. Durch den Eingriff des Vorsprungs 70a in die Ladespule 64a ist das Ladeverhalten optimiert, da die Ladespule 64a relativ zum Deckel 22a und damit zu einer äußeren Ladeeinrichtung definiert positioniert ist. Die Verbindung der Einschubeinheit 67a zum Gehäuse 14a erfolgt an zwei Enden: auf der Seite der Schnittstelle 18a mittels einer zweiten Dichteinheit 68a und dem Zapfen 56a, bevorzugt einem daran anliegenden Montagering 94a und am deckelseitigen Ende über die erste Dichteinheit 40a im Deckel 22a bzw. mit dem Vorsprung 70a am Deckel 22a.

Der Energiespeicher 62a ist zur Versorgung der Antriebseinheit 58a und gegebenenfalls weiterer elektrischer Komponenten mit elektrischer Energie vorgesehen. Der Energiespeicher 62a ist wechselbar ausgestaltet. Die Montage des Energiespeichers 62a erfolgt durch Einschieben, wobei der Energiespeicher 62a seitlich durch Klemmrippen 72a in der Rahmeneinheit 66a geklemmt ist. Der Energiespeicher 62a ist in den Klemmrippen 72a gehalten, wobei eine axiale Längsverschiebung durch jeweils ein Anschlagelement 74a vermieden wird. Eine Kontaktierung mit dem Stromkreis erfolgt mittels Kontaktblechen 76a im Bereich der jeweiligen Anschlagelemente 74a. Die Kontaktbleche 76a sind als federelastische Stromabnehmer ausgestaltet.

Die erste und die zweite Dichteinheit 40a; 68a sind dazu eingerichtet, den Innenraum des Gehäuses 18a gegenüber der Außenumwelt abzudichten. Die Dichteinheiten 40a; 68a sind dazu eingerichtet, das Eindringen von Feuchtigkeit, Schmutz oder anderen Verunreinigungen in das Innere des Bürstenhandteils 10a zu verhindern.

Die zweite Dichteinheit 68a weist eine Balgdichtung 82a, einen O-Ring 84a und eine Dichtkappe 86a auf. Die Balgdichtung 82a ist zwischen der Welle 20a und dem Zapfen 56a angeordnet.

Die Balgdichtung 82a wird teilweise über den Elektromotor 60a, das heißt über die Welle 20a gezogen. Die Balgdichtung 82a liegt dabei am Elektromotor 60a an. Die Balgdichtung weist zwei Endbereiche 166a, 168a auf. Die Balgdichtung 82a ist mit ihrem ersten Endbereich 166a um die Welle 20a angeordnet. Der zweite Endbereich 168a der Balgdichtung 82a ist mit dem Zapfen 56a kontaktierend ausgebildet. Die Balgdichtung 82a liegt mit Untermaß an der Welle 20a an, sodass sie sich bei einer Drehbewegung der Welle 20a zumindest teilweise verdreht. Gleichzeitig liegt sie mit Übermaß am Zapfen 56a an.

Der Zapfen 56a kann im Zusammenspiel mit der Rahmeneinheit 66a eine Verdrehsicherung aufweisen, sodass er nur in einer definierten Position montiert werden kann. Auf den Zapfen 56a wird die Dichtkappe 86a montiert. Die Dichtkappe 86a wird auf den Zapfen 56a aufgeschoben. Im Bereich zwischen der Dichtkappe 86a und dem Zapfen 56a ist der O-Ring 84a angeordnet.

Die Dichtkappe 86a ist so ausgebildet, dass sie zumindest in einem Teil in einer Ebene senkrecht zur Längsachse des Gehäuses 14a angeordnet ist. Die Dichtkappe 86a kann sich hierzu an einem entsprechenden Bereich des Gehäuses 14a abstützen. Weitere Kontakte der Dichtkappe 86a zum Gehäuse 14a können die Dichtwirkung zusätzlich unterstützen. Die Dichtkappe 86a wird über den Zapfen 56a und teilweise über den Elektromotor 60a gezogen.

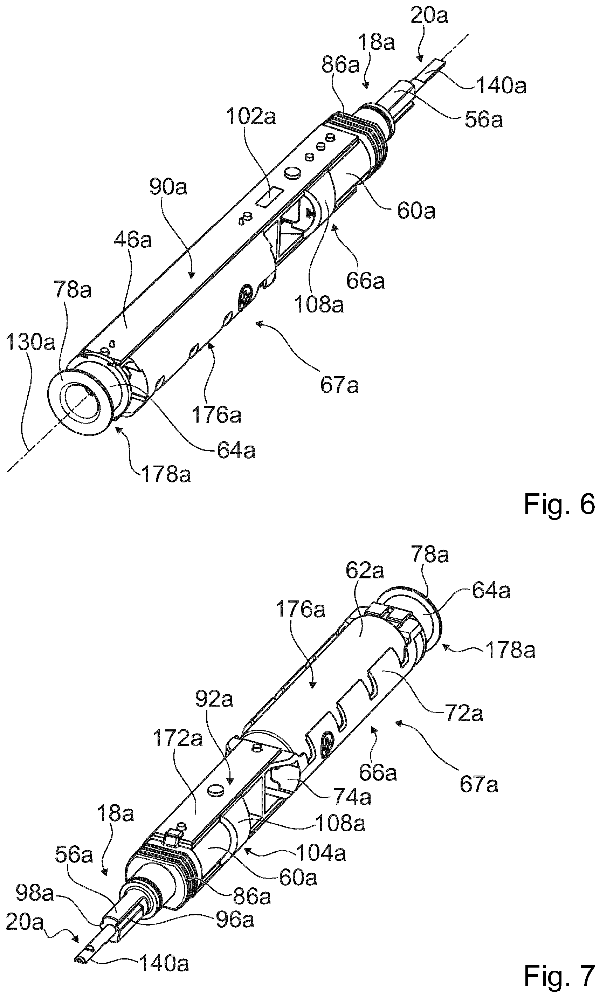

Die Figuren 6 und 7 zeigen auf der Rahmeneinheit 66a angeordnete Print-Zonen 90a; 92a. Die zwei separaten Print-Zonen 90a, 92a sind jeweils zur Aufnahme mindestens einer der Printplatten 46a, 172a eingerichtet. Die erste Print-Zone 90a ist an der Rahmeneinheit 66a angeordnet und erstreckt sich über alle Zonen der Rahmeneinheit 66a. Die erste Print-Zone 90a ist zur Aufnahme einer ersten Printplatte 46a eingerichtet. Die erste Printplatte 46a ist als Hauptplatine oder Funktionsplatine ausgelegt, auf der Komponenten wie Steuerchip, Bedieneinheiten, Sensorik, LED-Anzeigen oder Kommunikationsmodule (z. B. Bluetooth, NFC) angeordnet sein können. Die Montage erfolgt senkrecht zur Ebene der Printplatte 46a, sodass Rastnasen 142a in Aussparungen in der Printplatte 46a eingeführt werden.

Die zweite Print-Zone 92a ist beabstandet von der ersten Print-Zone 90a ausgebildet. Die zweite Print-Zone 92a nimmt eine zweite Printplatte 172a auf. Die zweite Printplatte 172a kann als eine Versorgungsplatine, als Display-Steuerung oder als sekundäre Funktionseinheit ausgebildet sein. Die Printplatten 46a, 172a werden, unter Zuhilfenahme der Rastnasen 142a, eingeklickt oder mittels Nieten an der Rahmeneinheit 66a befestigt.

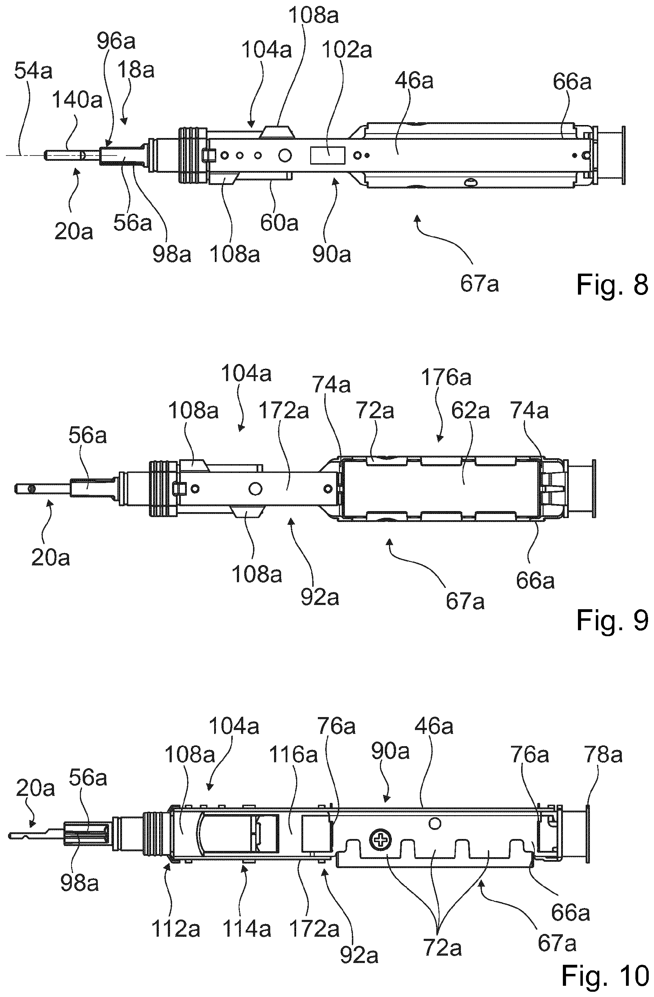

Die Figuren 8 bis 10 zeigen die Schnittstelle 18a, die den drehfest mit dem Gehäuse 14a verbundenen Zapfen 56a aufweist, durch welchen sich die Welle 20a erstreckt. Der Zapfen 56a ist so ausgelegt, dass er zu einem Großteil drehfest in der Aufsteckbürste 12a aufgenommen werden kann. Der Zapfen 56a ist mit zwei Funktionen ausgestattet: Zum einen stellt der eigentliche Zapfen 56a einen Teil der Schnittstelle 18a zur Aufsteckbürste 12a dar, zum anderen bildet der Zapfen 56a einen Montagering 94a aus, der zur Verbindung mit der Antriebseinheit 58a und/oder mit der Rahmeneinheit 66a dient. Der Zapfen 56a ist so ausgelegt, dass er über das wellenseitige Ende des Elektromotors 60a geschoben ist. Der Montagering 94a des Zapfens 56a kann im montierten Zustand jeweils das wellenseitige Ende des Elektromotors 60a und der Rahmeneinheit 66a umgreifen. Der Montagering 94a ist zu einer Verbindung des Zapfens 56a mit dem Elektromotor 60a ausgebildet. Er dient ebenfalls zur Achsführung der Welle 20a. Die Welle 20a ist durch den gesamten Zapfen 56a hindurchgeführt. Der Zapfen 56a dient als Schnittstelle 18a zu einem Festlegeelement 148 der Aufsteckbürste 12a.

Der Zapfen 56a kann im Zusammenspiel mit der Rahmeneinheit 66a eine Verdrehsicherung aufweisen, sodass er nur in einer definierten Position montiert werden kann. Der Zapfen 56a weist eine Nut 96a und einen Kamm 98a auf. Nut 96a und Kamm 98a sind einander entgegengesetzt, in Richtung der Längsachse der Rahmeneinheit 66a orientiert und bilden einen Teil der Schnittstelle zur Aufsteckbürste 12a. Sie bilden eine Verdrehsicherung aus, damit die Aufsteckbürste 12a korrekt ausgerichtet auf das Bürstenhandteil 10a aufgesetzt wird. Im Zapfen 56a ist eine umlaufende Nut ausgebildet, welche den O-Ring 84a aufnimmt.

Die Rahmeneinheit 66a nimmt die Antriebseinheit 58a und den Energiespeicher 62a auf. Die Rahmeneinheit 66a lagert die Antriebseinheit 58a in drei Punkten. Die Rahmeneinheit 66a bildet eine Aufnahme für Teile der Antriebseinheit 58a aus. Die Rahmeneinheit 66a ist in das Gehäuse 14a des elektrischen Bürstenhandteils 10a eingeschoben ausgebildet.

Die Antriebseinheit 58a ist frei von einem Rückstellelement ausgebildet. Der Elektromotor 60a wird so angesteuert, dass er eine oszillierende Hin-und-Her-Bewegung gezielt selbst erzeugt und auch zurückführt. Die Ausgestaltung ohne ein mechanisches Rückstellelement erlaubt eine frei programmierbare Bewegungscharakteristik, bei der Rücklaufgeschwindigkeit, Rücklaufwinkel und Rücklaufrichtung softwareseitig definiert werden. Die rückstellfreie Ausführung erhöht die Bewegungsfreiheit und die Präzision der Oszillation. Eine Recheneinheit 102a kann so programmiert sein, dass sie auch ohne Rückstellmechanik eine exakt symmetrische oder gezielt asymmetrische Rückführung der Welle 20a ermöglicht.

Die feste Rahmeneinheit 66a ist von mehreren voneinander getrennten Einzelrahmen verschieden. Die Rahmeneinheit 66a ist mit mehreren Aufnahmebereichen ausgestattet, etwa für die Antriebseinheit 58a und den Energiespeicher 62a. Die feste Rahmeneinheit 66a ist zu einer Ausbildung eines vorgefertigten Moduls Einschubeinheit 67a ausgelegt, welche an einem Stück in das Gehäuse 14a eingebracht werden kann.

Sowohl das Gehäuse 14a als auch die Einschubeinheit 67a sind so gestaltet, dass in dem Gehäuse 14a unterschiedlich aufgebaute Einschubeinheiten 67a, etwa für unterschiedlichen Schnittstellen 18a, aufgenommen werden können. Das Halten bevorzugt Fixieren der Einschubeinheit 67a im Gehäuse 14a erfolgt an Stellen, die nicht durch andere Aufbauten oder funktionale Einheiten betroffen sind.

Die Rahmeneinheit 66a weist eine Akkuzone 176a auf. Die Rahmeneinheit 66a, bevorzugt die Einschubeinheit 67a, weist eine Ladespulenzone 178a auf. Die Rahmeneinheit 66a weist ferner eine Service-Zone 180a auf. Die Rahmeneinheit 66a weist eine Antriebszone 104a auf. Die Rahmeneinheit 66a weist zwei Printzonen 90a und 92a auf.

Die Rahmeneinheit 66a ist so ausgelegt, dass eine frühzeitige Integration der Ladespule 64a im Montageprozess möglich ist, etwa vor dem Einsetzen des Energiespeichers 62a oder der Printplatten 46a, 172a. Die Ladespule 64a wird mittels des Spulenträgers 78a mechanisch an die Rahmeneinheit 66a eingeklickt. Die Rahmeneinheit 66a ist mit der Akkuzone 176a ausgestattet, welche zur Aufnahme des Energiespeichers 62a, etwa eines Akkumulators, ausgelegt ist. Die Akkuzone 176a ist so gestaltet, dass ein wechselbarer Energiespeicher 62a aufgenommen werden kann. Das bedeutet, dass der Energiespeicher 62a nicht fest vergossen oder verklebt, sondern lösbar in der Akkuzone 176a fixiert ist. Dadurch ist ein Austausch des Energiespeichers 62a möglich. Die Service-Zone 180a ist zwischen der Akkuzone 176a und der Antriebszone 104a angeordnet.

Die Service-Zone 180a kann für einen Längenausgleich der Gesamtlänge der Rahmeneinheit 66a, bevorzugt der Einschubeinheit 67a, genutzt werden, etwa zum Ausgleich von Längen beispielsweise des Akkus, Motorgehäuse oder Spulenträgers, wenn die Gesamtlänge gleichbleiben soll, die verschiedenen Bauteile sich aber in der Länge verändern. Darüber hinaus kann die Service-Zone 180a auch für automatisiertes Handling im Fertigungsprozess genutzt werden.

Die Rahmeneinheit 66a weist die Antriebszone 104a auf, welche zur Aufnahme und Lagerung des Elektromotors 60a ausgelegt ist. Der Elektromotor 60a ist innerhalb der Antriebszone 104a nicht komplett gekapselt, sondern über offene Stellen zugänglich, was eine vereinfachte Montage sowie den Austritt einer Welle 20a ermöglicht. Die Antriebszone 104a kann so ausgestaltet sein, dass sie vorne und hinten eine durchgehende, formstabile Wandstruktur 106a aufweist, die zur Abstützung des Elektromotors 60a dient.

Zur Fixierung des Elektromotors 60a sind mehrere Wandstrukturen 106a, Anlageflächen 108a, 116a und Anschlagstrukturen 110a integriert. Der Elektromotor 60a ist zwischen Wandstrukturen 106a auf der Vorderseite und der Rückseite der Rahmeneinheit 66a gehalten. Ein wellenseitiger Endbereich eines Elektromotorbereichs 112a liegt seitlich an einer Anlagefläche 108a an. Ein gegenüberliegender Elektromotorbereich 114a liegt an einer weiteren Anlagefläche 108a an, sodass der Elektromotor 60a beidseitig abgestützt ist. Zusätzlich kann/können entlang der Längserstreckungsachse des Elektromotors 60a eine oder mehrere weitere Anlageflächen 108a, 116a vorhanden sein, um eine Abstützung in drei Punkten zu gewährleisten. Die Welle 20a der Schnittstelle 18a ist parallel zu einer Längsachse 130a der Rahmeneinheit 66a ausgerichtet. Nach der Ausrichtung und Verdrahtung wird der Elektromotor 60a weiter in die Rahmeneinheit 66a hineingedrückt, bis er an der Rahmeneinheit 66a und zusätzlich einseitig an einer längsseitigen Fläche, der Anschlagstruktur 110a, an der Rahmeneinheit 66a anliegt.

Wenn der von dem Wellenaustritt abgewandte Endbereich des Elektromotors 60a nicht durch eine stirnseitige Wand, der Anschlagstruktur 110a, abgestützt werden kann, können Anschlagrippen oder andere Formelemente an den Anlageflächen 108a, 116a vorgesehen sein, die die Positionierung ermöglichen. Die Anlageflächen 108a, 116a sind der Form des Elektromotors 60a angepasst. Die Antriebszone 104a kann so ausgestaltet sein, dass die Welle 20a aus dem Gehäuse 14a austreten kann, um mit der Schnittstelle 18a zur Aufsteckbürste 12a verbunden zu werden. Diese offene Ausgestaltung erleichtert die Inline-Montage, erlaubt visuelle Inspektion und verbessert die thermische Entkopplung.

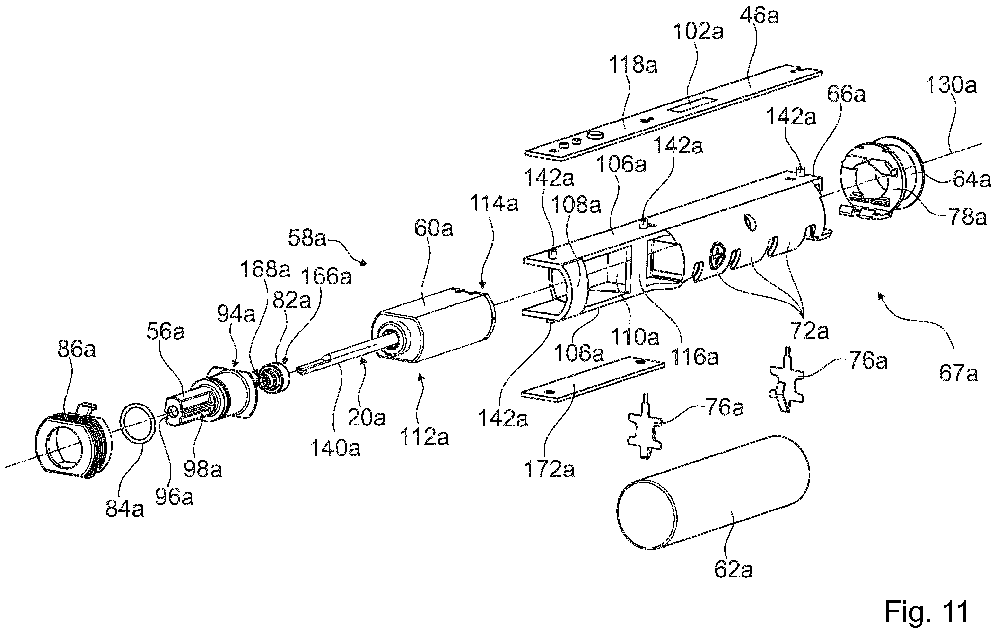

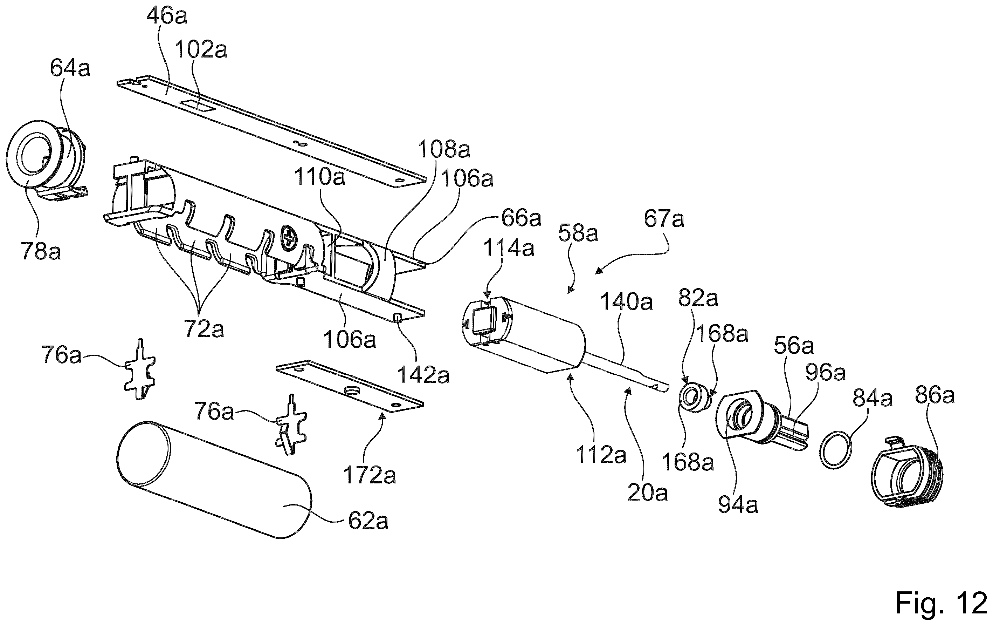

Die Figuren 11 und 12 zeigen Explosionsansichten der Einschubeinheit 67a. Die Antriebseinheit 58a weist den Elektromotor 60a auf. Der Elektromotor 60a ist so ausgestaltet, dass eine direkte mechanische Kopplung zwischen dem Elektromotor 60a und der Welle 20a besteht.

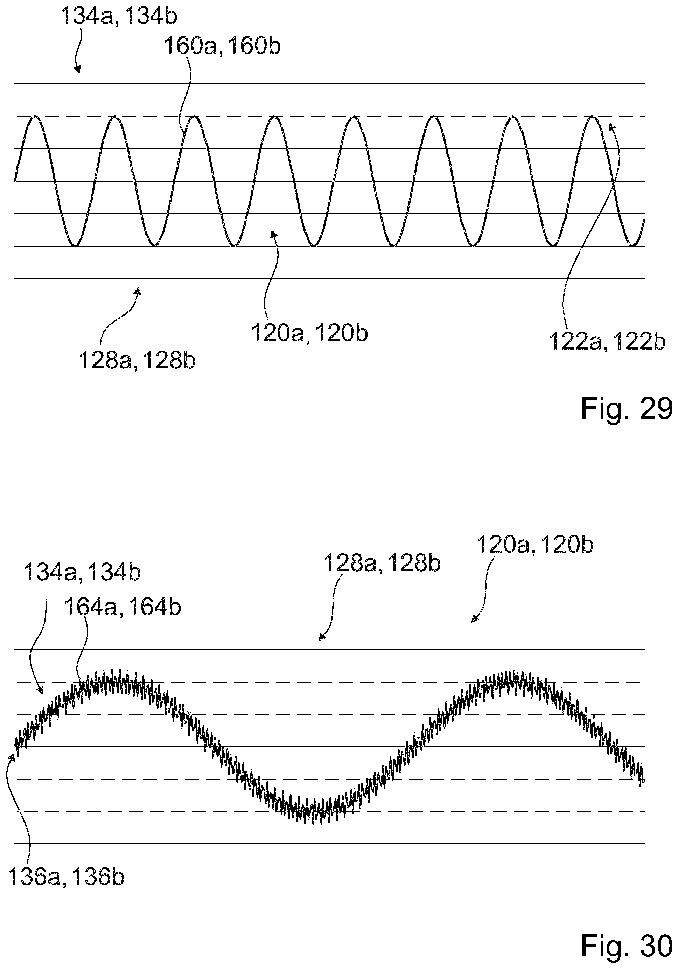

Der Elektromotor 60a ist für wechselnde Betriebszustände oder gezielte Bewegungsmuster eingerichtet. Der Elektromotor 60a ist derart ausgestaltet, dass er zu einer direkten, getriebelosen Übertragung einer Bewegung auf die Welle 20a eingerichtet ist. Der Elektromotor 60a ist zudem zur Übertragung überlagerter Bewegungen 136a eingerichtet. Der Elektromotor 60a ist zur getriebelosen Übertragung variierender Bewegungen 138a eingerichtet. Der Elektromotor 60a kann so programmiert werden, dass eine bestimmte Bewegungsfrequenz 120a und/oder Amplitude 122a eingehalten werden/wird, auch bei schwankender Last. Es können Bewegungen bereitgestellt werden, die eine Amplituden-Modulation 124a aufweisen. Ferner können Bewegungen bereitgestellt werden, die eine Frequenz-Modulation 126a aufweisen (vgl. Figuren 29 bis 34).

Der Elektromotor 60a weist einen Stromverbrauch von 300 mA bis 800 mA auf. Die Nennspannung des Elektromotors 60a liegt im Bereich von 3 V bis 4,2 V, wobei diese der Nennspannung des Energiespeichers 62a entspricht.

Die Antriebseinheit 58a kann so ausgestaltet sein, dass sie eine Einstellbarkeit durch den Benutzer erlaubt. Hierbei ist eine Ausrüstung mit verschiedenen Einstellmitteln vorhanden, die eine Anpassung der Betriebsparameter durch den Benutzer ermöglichen. Die Einstellung kann direkt am Bürstenhandteil 10a vorgenommen werden. Die Einstellmöglichkeit am Bürstenhandteil 10a selbst kann über einen oder mehrere Schalter 32a erfolgen.

Das elektrische Bürstenhandteil 10a weist die Recheneinheit 102a auf, welche zur Ansteuerung der Antriebseinheit 58a zur Realisierung verschiedener Drehwinkel und/oder Drehgeschwindigkeiten ausgelegt ist. Die Printplatte 46a kann reversibel oder irreversibel montiert sein. Reversible Befestigungen sind durch Hinterschnitte oder Rastnasen 142a an der Rahmeneinheit 66a realisiert. Alternativ kann eine Klemmung oder Nietung der Printplatte 46a an der Rahmeneinheit 66a eingesetzt sein. Die Printplatte 46a dient der elektrischen Verbindung von Komponenten wie Recheneinheit 102a, Energieversorgung und Signalverarbeitung. Auf der Printplatte 46a befinden sich typischerweise Leitungen, Widerstände, LEDs, Steuereinheiten, Schalter 32a, Displays sowie Kommunikationsschnittstellen wie beispielsweise NFC- oder Bluetooth-Schnittstellen.

Der Drehwinkel und/oder die Drehgeschwindigkeit der Antriebseinheit 58a ist stufenlos über die Recheneinheit 102a einstellbar. Die Recheneinheit 102a kann so ausgestaltet sein, dass sie eine stufenlose Einstellung des Drehwinkels und/oder der Drehgeschwindigkeit der Antriebseinheit 58a erlaubt. Sie kann beispielsweise geeignete Signalprofile generieren, etwa durch digitale Regelalgorithmen, pulsweitenmodulierte Signale oder variable Taktfrequenzen, mit denen die Steuerung des Elektromotors 60a in Echtzeit erfolgt. Die stufenlose Ansteuerung kann nutzergesteuert, sensorbasiert oder programmabhängig erfolgen. Die elektronische Umsetzung der stufenlosen Steuerung erfolgt innerhalb der auf einer oder mehreren Printplatten 46a, 172a integrierten Recheneinheit 102a. Die elektrische Verbindung erfolgt über auf der Printplatte 46a, 172a angeordnete Leitungsbahnen, Steckverbindungen oder Lötstellen, die in Fertigungsrichtung ausgerichtet sind. Das elektrische Bürstenhandteil 10a weist eine Bedieneinheit 44a und eine mit der Bedieneinheit 44a gekoppelte Recheneinheit 102a auf, welche zur Ansteuerung der Antriebseinheit 58a zur Realisierung von mindestens zwei verschiedenen Bewegungsmustern ausgelegt ist, wobei die Bewegungsmuster über die Bedieneinheit 44a einstellbar sind. Das Bürstenhandteil 10a weist eine Bedieneinheit 44a auf, die dem Benutzer eine direkte Eingabe von Steuerbefehlen ermöglicht. Über die Bedieneinheit 44a sind zwei unterschiedliche Bewegungsmuster einstellbar. Diese können entweder durch wiederholtes Betätigen der Bedieneinheit 44a, durch mehrstufige Schaltung oder durch eine Menüführung ausgewählt werden.

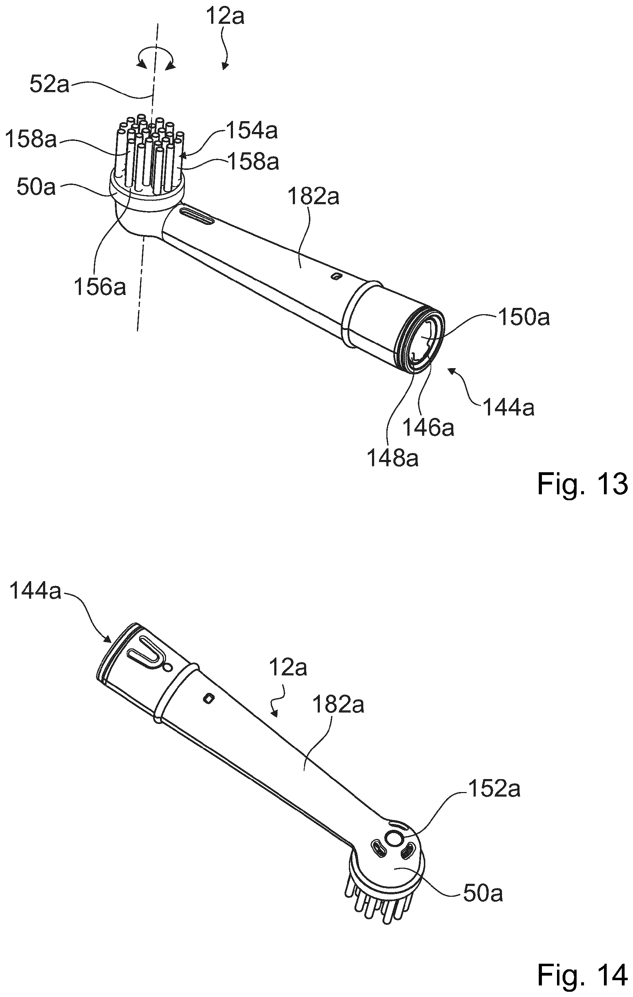

Die Figuren 13 und 14 zeigen eine Ausführungsform einer Aufsteckbürste 12a. Die elektrische Zahnbürste mit dem elektrischen Bürstenhandteil 10a weist die Aufsteckbürste 12a auf. Diese weist den drehbar gelagerten Bürstenkopf 50a auf, wobei eine Rotationsachse 52a des Bürstenkopfs 50a im Wesentlichen senkrecht zur Drehachse der Welle 20a verläuft. Die Aufsteckbürste 12a weist eine Schnittstellenaufnahme 144a auf. Diese ist zu einer kraft- und/oder formschlüssigen Aufnahme der Schnittstelle 18a ausgestaltet. Die Schnittstellenaufnahme 144a ist mit einem Aufnahmebereich 146a ausgestattet, in welchen die Schnittstelle 18a des Bürstenhandteils 10a eingeschoben werden kann. Die Schnittstelle 18a ist so gestaltet, dass sie ab einer definierten Einschubkraft in dem Aufnahmebereich 146a verrastet und/oder verklemmt. Die Schnittstelle 18a kann an mehreren Positionen mit dem Aufnahmebereich 146a auswechselbar verbunden werden, beispielsweise mittels Verrasten und/oder Verklemmen, etwa im Bereich der Welle 20a sowie im Bereich eines Zapfens 56a. Die Schnittstellenaufnahme 144a ist auf einer dem Bürstenkopf 50a abgewandten Seite der Aufsteckbürste 12a angeordnet. Der direkte Antrieb der Schnittstelle 18a ist durch die Antriebseinheit 58a frei von einer Über- oder Untersetzung ausgebildet. Die Aufsteckbürste 12a weist eine Antriebswelle 150a auf, welcher in einem mit dem elektrischen Bürstenhandteil 10a verbundenen Zustand drehfest mit der Welle 20a der Schnittstelle 18a verbunden ist. Die Antriebswelle 150a ist als Hohlwelle, Kupplungsbuchse oder Führungselement innerhalb der Aufsteckbürste 12a ausgebildet. In verbundenem Zustand ist die Antriebswelle 150a der Aufsteckbürste 12a drehfest mit der Welle 20a der Schnittstelle 18a des Bürstenhandteils 10a verbunden. Dies bedeutet, dass bei einer Drehbewegung oder oszillierenden Bewegung 128a der Welle 20a eine direkte Übertragung dieser Bewegung auf die Antriebswelle 150a und damit auf den Bürstenkopf 50a erfolgt. Die drehfeste Verbindung kann formschlüssig (z. B. durch Mehrkantprofil oder Verzahnung), kraftschlüssig (z. B. durch Klemmung) oder kombiniert realisiert sein. Die Konstruktion ist so ausgelegt, dass die drehfeste Verbindung beim Aufstecken automatisch durch axiales Einschieben oder Aufstecken hergestellt wird.

Die Aufsteckbürste 12a kann mit dem beschriebenen Bürstenhandteil 10a verwendet werden und ist für ein Bürstenhandteil 10a mit einem oszillierenden Bürstenkopf 50a mit einem Borstenfeld 154a mit einer Rotationsachse 52a gestaltet, die im Wesentlichen senkrecht zur Längsrichtung des Bürstenhandteils 10a verläuft.

Die Aufsteckbürste 12a ist über zwei Verbindungen mit dem Bürstenhandteil 10a verbunden. Zum einen ist ein Festlegeelement 148a auf den Zapfen 56a des Bürstenhandteils 10a aufgesteckt, zum anderen wird die Antriebswelle 150a auf die Welle 20a gesteckt. Die Verbindung zwischen Festlegeelement 148a und Zapfen 56a definiert die starre Position eines Aufsteckbürstengehäuses 182a der Aufsteckbürste 12a relativ zum Gehäuse 14a, bevorzugt zur Einschubeinheit 67a des Bürstenhandteils 10a. Die Verbindung zwischen der Welle 20a und die Antriebswelle 150a stellt die Verbindung zwischen den bewegten Teilen der Aufsteckbürste 12a und der Welle 20a her. Die Welle 20a trägt das Gewicht der Antriebswelle 150a.

Die entsprechenden Gewichte sind nachfolgend aufgeführt. Bei der Aufsteckbürste 12a mit einem Bürstenkopf 50a mit einem Borstenfeld 154a mit einer Rotationsachse 52a, die im Wesentlichen senkrecht zur Längsrichtung des Bürstenhandteils 10a liegt, entspricht die durch das Bürstenhandteil 10a bewegte Masse dem kumulierten Gewicht von Antriebswelle 150a, Lagerpin 152a und Bürstenkopfelement 50a. Der Lagerpin 152a kann alternativ fix sein. Die bewegte Masse liegt im Bereich von 1,2 g bis 3,5 g und kann bevorzugt zwischen 1,5 g und 2,5 g liegen.

Die Aufsteckbürste 12a mit einem oszillierenden Bürstenkopf 50a mit einem Borstenfeld 154a mit einer Rotationsachse 52a im Wesentlichen senkrecht zur Längsrichtung des Bürstenhandteils 10a ist mehrteilig aufgebaut. Ein Aufsteckbürstengehäuse 182a bildet die Grundstruktur, welche alle Komponenten der Aufsteckbürste 12a zusammenhält. Der Bürstenkopf 50a ist in dem Aufsteckbürstengehäuse 182a montiert und wird über den Lagerpin 152a fixiert. Die Fixierung durch den Lagerpin 152a ist so gestaltet, dass eine oszillierende Drehbewegung um die Rotationsachse 52a im Wesentlichen senkrecht zur Längsrichtung des Aufsteckbürstengehäuses 182a möglich ist. Der Lagerpin 152a bildet die Rotationsachse 52a des Bürstenkopfs 50a mit dem Borstenfeld 154a aus. Der Bürstenkopf 50a mit dem Borstenfeld 154a rotiert im Betrieb oszillierend um diese Rotationsachse 52a. Die Aufsteckbürste 12a ist so montiert, dass die Antriebswelle 150a mit ihrer endseitig angebrachten Verzahnung in die Verzahnung des Bürstenkopfs 50a eingreift. Ein direkt auf die Antriebswelle 150a folgend eingebrachtes Festlegeelement 148a verrastet mit dem Zapfen 56a und hält die Antriebswelle 150a in Position. Die Antriebswelle 150a ist um ihre Längsachse rotierend bewegbar. Die Rotationsachse der Antriebswelle 150a ist im Wesentlichen parallel, bevorzugt identisch, zu der Drehachse der Welle 20a. Um eine Bewegung der Aufsteckbürste 12a, bevorzugt des Bürstenkopf 50a, zu erreichen, wird die Aufsteckbürste 12a mit ihrer Öffnung im Festlegeelement 148a auf den Zapfen 56a des Bürstenhandteils 10a gesteckt und die Welle 20a wird gleichzeitig in die Aufsteckbürste 12a eingeführt. Dabei fixiert der Zapfen 56a des Bürstenhandteils 10a über das Festlegeelement 148a das Aufsteckbürstengehäuse 182a, sodass dieses im Betriebszustand gegenüber dem Bürstenhandteil 10a fixiert ist. Die Aufsteckbürste 12a ist so aufgebaut, dass die oszillierende Rotationsbewegung der Welle 20a der Schnittstelle 18a des Bürstenhandteils 10a in eine senkrecht dazu oszillierende Rotationsbewegung des Bürstenkopfs 50a umgelenkt wird. Diese Umlenkung erfolgt über die ineinandergreifende Verzahnung von Antriebswelle 150a und Bürstenkopf 50a.

Die Bauteile der Aufsteckbürste 12a mit einem oszillierenden Bürstenkopf 50a mit einem Borstenfeld 154a mit einer Rotationsachse 52a im Wesentlichen senkrecht zur Längsrichtung des Bürstenhandteils 10a sind unterschiedlich hergestellt. Das Aufsteckbürstengehäuse 182a ist aus einer Hartkomponente 28a gebildet und stellt die Grundstruktur der Aufsteckbürste 12a dar, an bevorzugt in der die anderen Bauteile fixiert oder verbaut sind. Das Aufsteckbürstengehäuse 182a kann mit weiteren Hart- und/oder Weichkomponenten ausgestattet sein. Das Festlegeelement 148a und die Antriebswelle 150a sind in ihrer Grundstruktur aus einer Hartkomponente 28a gebildet. Eine Weichkomponente 30a kann daran ausgebildet sein, sie können aber auch ausschließlich aus einer oder mehreren Hartkomponenten 28a bestehen. Der Bürstenkopf 50a ist aus einer Hartkomponente 28a gebildet. Der Einsatz von Weichkomponenten 30a am Bürstenkopf 50a ist möglich. Der Lagerpin 152a ist aus einem Metall gefertigt. Der Bürstenkopf 50a weist eine Borstenverankerungsfläche 156a auf. Die Borstenverankerungsfläche 156a weist Längs- und Querdimensionen im Bereich von 12 mm bis 15 mm auf. Die Aufsteckbürste 12a hat ein Gewicht von 4 g und 8 g. Ihre Länge beträgt zwischen 65 mm und 75 mm. Ihre maximale Breite beträgt zwischen 10 mm und 15 mm. Die Reinigungselemente sind als Pflegeborsten 158a ausgebildet. Diese sind aus Kunststofffilamenten hergestellt. Mehrere Pflegeborsten 158a bilden im Bürstenkopf 50a ein Borstenbündel aus. Die Borstenbündel bilden im Bürstenkopf 50a ein Borstenfeld 154a aus. Das Borstenfeld 154a kann neben Pflegeborsten 158a auch Reinigungs- und Massageelemente enthalten. Die Reinigungs- und Massageelemente können aus einem Elastomer oder aus einem gummielastischen Material gebildet sein. Sie können mittels eines Spritzgießverfahrens auf den Bürstenkopf 50a gespritzt oder angespritzt sein. Die Pflegeborsten 158a sind aus Kunststoff gebildet. Sie können aus einer Hartkomponente 28a, aus einer Weichkomponente 30a oder aus einer Kombination aus Hartkomponente 28a und Weichkomponente 30a bestehen. Die Pflegeborsten 158a sind konventionell extrudiert hergestellt. Die Pflegeborsten 158a sind aus Polyamid (PA) hergestellt.

Die Pflegeborsten 158a sind zylindrisch oder zugespitzt. Die Pflegeborsten 158a weisen einen Durchmesser von 0,075 mm bis 0,25 mm auf. Ihre Querschnittsfläche beträgt zwischen 0,002 mm² und 0,2 mm². Die Oberfläche der Pflegeborsten 158a kann glatt oder texturiert sein. Pflegeborsten 158a sind zu Borstenbündeln zusammengefasst.

Die Auslenkung des Bürstenkopfs 50a kann im Bereich von ±5° bis ±60° liegen, vorzugsweise im Bereich von ±6° bis ±20°, woraus sich ein Gesamtwinkel von 12° bis 40°, z. B. 33°, ergibt. Eine mechanische Übersetzung kann so ausgelegt sein, dass der Auslenkwinkel des Bürstenkopfs 50a kleiner, gleich oder größer als der Auslenkwinkel der Welle 20a ist. Die Übersetzung verändert nicht die Geschwindigkeit, sondern lediglich die Bewegungsrichtung oder das Amplitudenverhältnis.

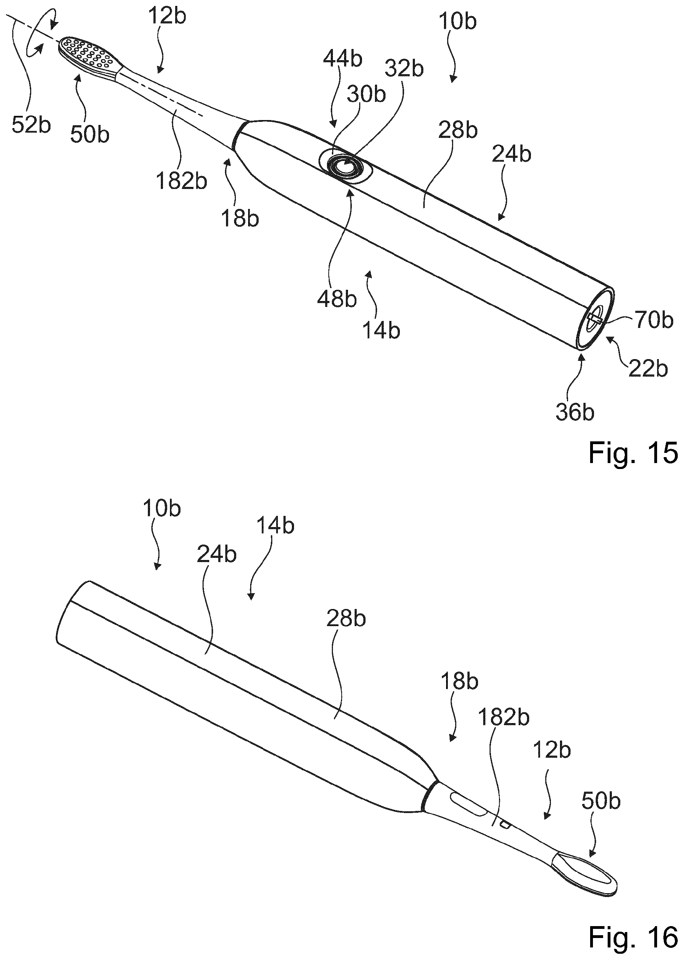

In den Figuren 15 bis 28 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 14, verwiesen werden kann. Zur Unterscheidung der Ausführungsbeispiele ist der Buchstabe a den Bezugszeichen des Ausführungsbeispiels in den Figuren 1 bis 14 nachgestellt. In dem Ausführungsbeispiel der Figur 15 bis 28 ist der Buchstabe a durch den Buchstaben b ersetzt.

Die Figuren 15 und 16 zeigen ein elektrisches Bürstenhandteil 10b mit einer Aufsteckbürste 12b. Die Oszillation eines Bürstenkopfs 50b erfolgt parallel zur Längsrichtung des Bürstenhandteils 10b. Das Bürstenhandteil 10b weist ein Gehäuse 14b auf. Das Bürstenhandteil 10b weist eine Einschubeinheit 67b auf. Das Gehäuse 14b nimmt die Einschubeinheit 67b auf. Die Gesamtbreite der Einschubeinheit 67b liegt im Bereich von 13 mm bis 25 mm. Die Höhe der Einschubeinheit 67b ist analog zur Breite ausgeführt und liegt ebenfalls im Bereich von 13 mm bis 25 mm.

Das Gehäuse 14b weist einen abnehmbaren Deckel 22b auf. An einem Ende des Gehäuses 14b befindet sich eine Anbindung zu dem Deckel 22b. Die Anbindung ist zur Aufnahme des Deckels 22b ausgelegt. Das Gehäuse 14b kann einen Bajonett-Verschluss 36b aufweisen, bei dem mehrere um den Umfang angeordnete Vorsprünge oder Vertiefungen 38b eine formschlüssige Verbindung mit korrespondierenden Gegenstrukturen im Deckel 22b eingehen. Das Zusammenspiel zwischen Gehäuse 14b und Deckel 22b ist dabei so gestaltet, dass beim Aufdrehen oder Aufstecken des Deckels 22b eine Verbindungsstruktur formschlüssig einrastet. Die Verbindung kann durch Drehen im Sinne eines Bajonett-Verschlusses 36b erfolgen; alternativ kann auch ein Steckmechanismus vorgesehen sein. In beiden Fällen kann eine lösbare und dennoch dichte Verbindung realisierbar sein. Im Deckel 22b ist eine erste Dichteinheit 40b angeordnet. Die erste Dichteinheit 40b ist als ein O-Ring 170b ausgebildet. Der O-Ring 170b wird in einer Nut im Deckel 22b gehalten. Der O-Ring 170b liegt im montierten Zustand gegen das Gehäuse 14b an und bewirkt eine Abdichtung zwischen Gehäuse 14b und Deckel 22b. Das Gehäuse 14b ist als eine schützende Außenhülle des Bürstenhandteils 10b ausgebildet. Das Gehäuse 14b weist einen Griffbereich 24b auf. Der Griffbereich 24b bildet einen Griff des Bürstenhandteils 10b aus. Das Gehäuse 14b ist aus einem Kunststoff gebildet. Das Gehäuse 14b ist zweiteilig ausgeführt. Das Gehäuse 14b weist aus einer Hartkomponente 28b bestehende Bauteile auf, welche eine strukturtragende Funktion aufweisen. Das Gehäuse 14b ist aus Hartkomponenten 28b und Weichkomponenten 30b gebildet, wobei mittels der Weichkomponenten 30b beispielsweise der Griffbereiche 24b zum Halten und Schaltflächen zur Betätigung von Schaltern 32b ausgebildet sind. Die Weichkomponenten 30b bilden eine Umspritzung der Hartkomponenten 28b und/oder füllen Ausnehmungen des Gehäuses 14b aus
Das Gehäuse 14b selbst ist so ausgestaltet, dass im montierten Zustand die Einschubeinheit 67b im Gehäuse 14b gehalten und geführt wird. Die Einschubeinheit 67b kann dabei entweder anhand gesonderter Führungsstrukturen im Gehäuse 14b ausgerichtet werden und/oder direkt über die Geometrie des O-Rings 170b positioniert sein.

Das Bürstenhandteil 10b weist eine Bedieneinheit 44b auf. Im Inneren des Gehäuses 14b sind funktionale Elemente vorgesehen, wie elektronische Bedieneinheit 44b in Form von zumindest einem Schaltern 32b und/oder Anzeigeelementen. Die Schalter 32b können dem Ein-/Ausschalten des Bürstenhandteils 10b sowie der Programmauswahl dienen. Es kann/können ein einzelner Schalter 32b oder auch mehrere Schalter 32b vorgesehen sein, wobei bei mehreren Schaltern 32b unterschiedliche Funktionen gesteuert werden können. Die Schalter 32b können auf einer oder mehreren Printplatten 46b, 172b angebracht und über Gehäusedurchbrüche 48b zugänglich sein. Die Anordnung kann so gewählt sein, dass der jeweilige Schalter 32b von außen betätigt werden kann, ohne dass ein direkter Eingriff in das Gehäuse 14b erforderlich ist. Die Schalter 32b sind auf einer Seite des Gehäuses 14b angeordnet. Das Gehäuse 14b kann Gehäusedurchbrüche 48b für optische Elemente aufweisen. Die Gehäusedurchbrüche 48b sind so gestaltet, dass sie mit den auf der Printplatte 46b angeordneten Anzeigeelementen 174b korrelieren. Die Anzeigeelemente 174b können durch transparente Bereiche im Gehäuse 14b sichtbar gemacht werden.

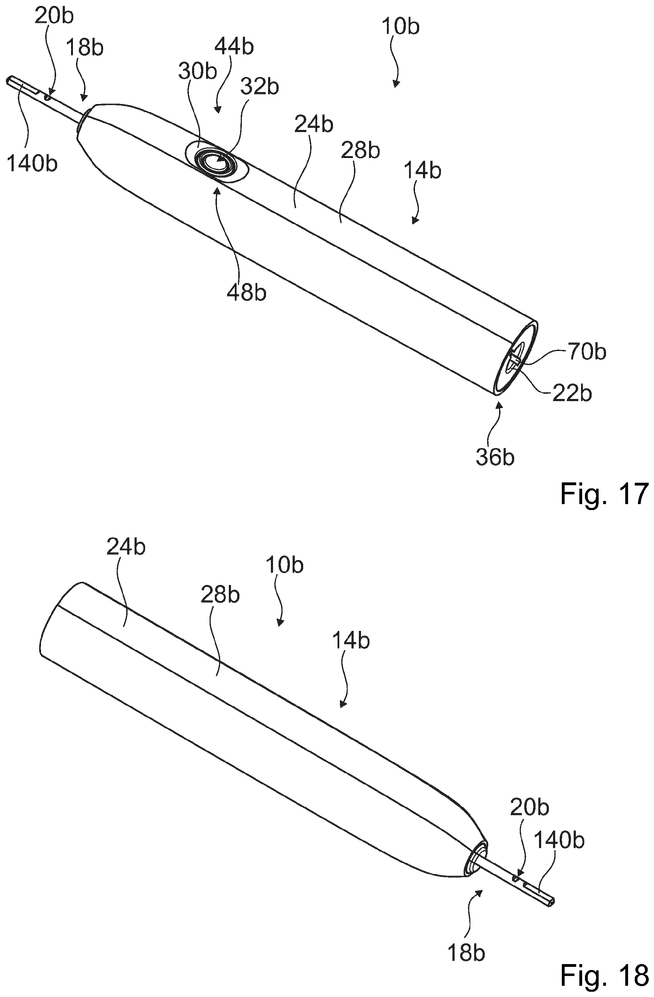

Die Figuren 17 und 18 zeigen ein elektrisches Bürstenhandteil 10b. Das Bürstenhandteil 10b weist eine Schnittstelle 18b zur Kopplung mit einer Aufsteckbürste 12b auf. Die Schnittstelle 18b weist eine Welle 20b mit einer Drehachse auf. Die Welle 20b erstreckt sich parallel zu einer Haupterstreckungsrichtung des Gehäuses 14b. Die Schnittstelle 18b ist dazu eingerichtet, mit einer Schnittstellenaufnahme 144b der Aufsteckbürste 12b verbunden zu werden. Die Schnittstellenaufnahme 144b nimmt ausschließlich die Welle 20b auf. Die Welle 20b ist als eine Metallwelle 140b ausgebildet. Sie ist direkt mit einem Elektromotor 60b gekoppelt. Die Anregung einer oszillierenden Bewegung 128b erfolgt ohne zwischengeschaltete mechanische Übertragungselemente wie Getriebe oder Exzentermechanismen. Die oszillierende Bewegung 128b der Welle 20b ist so ausgestaltet, dass sie exakt eine oszillierende Hin-und-Her-Bewegung 128b des daran angebrachten Bürstenkopfs 50b erzeugt.

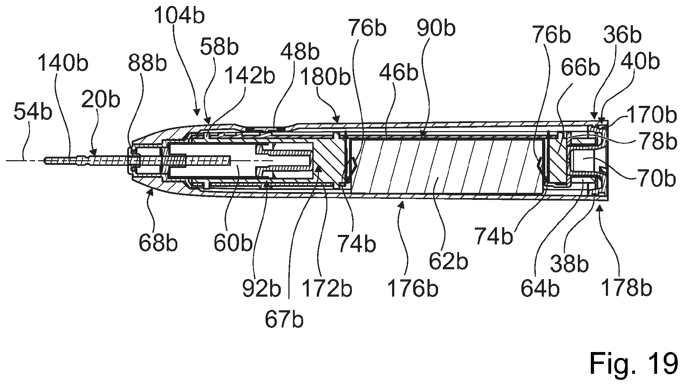

Figur 19 zeigt eine Schnittansicht des elektrischen Bürstenhandteils 10b. In dem Gehäuse 14b ist eine Antriebseinheit 58b zum Antrieb der Welle 20b, welche die Schnittstelle 18b bildet, angeordnet. Die Antriebseinheit 58b ist als ein Elektromotor 60b ausgebildet. In dem Gehäuse 14b ist ein Energiespeicher 62b zur Versorgung der Antriebseinheit 58b mit elektrischer Energie angeordnet. Das elektrische Bürstenhandteil 10b weist den Energiespeicher 62b und eine Ladespule 64b auf. Der Energiespeicher 62b ist in der Rahmeneinheit 66b aufgenommen. Die Ladespule 64b wird durch einen Spulenträger 78b mit der Rahmeneinheit 66b verbunden. Der Energiespeicher 62b ist von einem Akkumulator gebildet.

Das elektrische Bürstenhandteil 10b weist eine Ladeschnittstelle mit der Ladespule 64b auf, über welche der Energiespeicher 62b mit elektrischer Energie versorgt werden kann. Die Ladespule 64b ist dazu eingerichtet, durch induktive Energieübertragung mit einer äußeren Ladeeinrichtung in Verbindung zu stehen. Die Ladespule 64b ist so ausgestaltet, dass sie um den Spulenträger 78b herumgewickelt ist. Die Ladespule 64b ist in ihrer Lage auf den Energiespeicher 62b abgestimmt. Die Ladespule 64b kann fest mit der Rahmeneinheit 66b verbunden oder alternativ in einem einklickbaren Spulenträger 78b integriert sein.

Der Deckel 22b weist einen Vorsprung 70b für die Ladespule 64b auf. Der Deckel 22b weist einen Vorsprung 70b auf. Dieser Vorsprung 70b steht im Eingriff mit der Ladespule 64b. Durch den Eingriff des Vorsprungs 70b in die Ladespule 64b ist das Ladeverhalten optimiert, da die Ladespule 64b relativ zum Deckel 22b und damit zu einer äußeren Ladeeinrichtung definiert positioniert ist. Die Verbindung der Einschubeinheit 67b zum Gehäuse 14b erfolgt an zwei Enden: an der Schnittstelle 18b mittels einer zweiten Dichteinheit 68b und am deckelseitigen Ende über die erste Dichteinheit 40b im Deckel 22b bzw. mit dem Vorsprung 70b am Deckel 22b.

Der Energiespeicher 62b ist zur Versorgung der Antriebseinheit 58b und gegebenenfalls weiterer elektrischer Komponenten mit elektrischer Energie vorgesehen. Der Energiespeicher 62b ist wechselbar ausgestaltet. Die Montage des Energiespeichers 62b erfolgt durch Einschieben, wobei der Energiespeicher 62b seitlich durch Klemmrippen 72b in der Rahmeneinheit 66b geklemmt ist. Der Energiespeicher 62b ist in den Klemmrippen 72b gehalten, wobei eine axiale Längsverschiebung durch jeweils ein Anschlagelement 74b vermieden wird. Eine Kontaktierung mit dem Stromkreis erfolgt mittels Kontaktblechen 76b im Bereich der jeweiligen Anschlagelemente 74b. Die Kontaktbleche 76b sind als federelastische Stromabnehmer ausgestaltet.

Die erste Dichteinheit 40b und die zweite Dichteinheit 68b sind dazu eingerichtet, den Innenraum des Gehäuses 18b gegenüber der Außenumwelt abzudichten. Die Dichteinheiten 40b, 68b sind dazu eingerichtet, das Eindringen von Feuchtigkeit, Schmutz oder anderen Verunreinigungen in das Innere des Bürstenhandteils 10b zu verhindern.

Die zweite Dichteinheit 68b ist einteilig ausgebildet. Die zweite Dichteinheit 68b weist eine Dichtkappe 88b auf. Die Dichtkappe 88b weist eine integrierte Balgdichtung auf. Die Dichtkappe 88b wird teilweise über den Elektromotor 60b gezogen. Die Dichtkappe 88b nimmt mit der integrierten Balgdichtung die Welle 20b auf. Die Dichtkappe 84b kann dabei am Elektromotor 60b anliegen und gegebenenfalls bis zu einer Printplatte 46b oder bis zu der Rahmeneinheit 66b reichen. Um eine funktionsfähige Abdichtung auch bei oszillierenden Bewegungen zu ermöglichen, ist die in die Dichtkappe 88b integrierte Balgdichtung in diesem Bereich flexibel ausgestaltet. Die in die Dichtkappe 88b integrierte Balgdichtung ist so gestaltet, dass sie sich mit der Welle 20b mitbewegt.

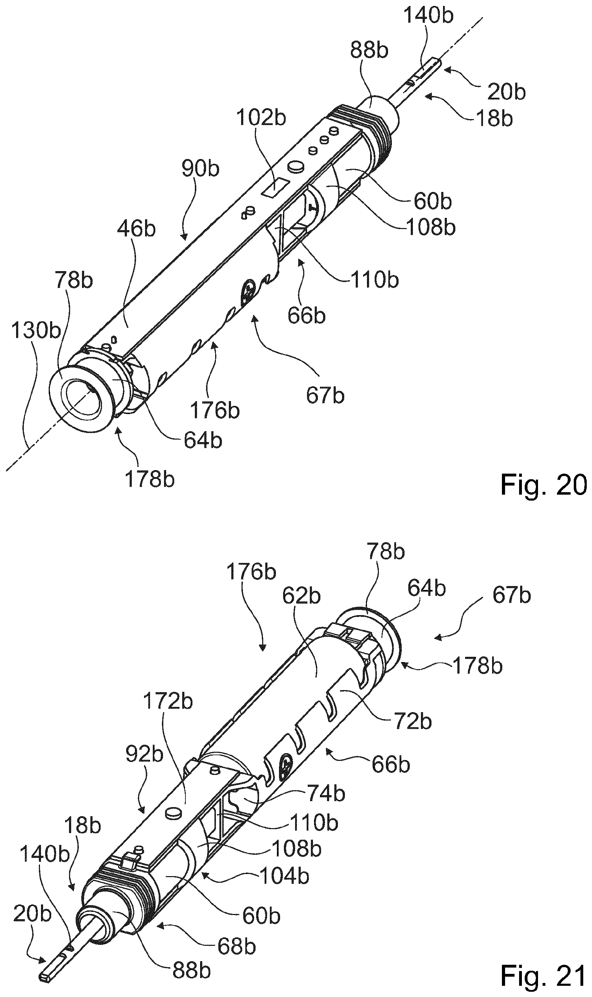

Die Figuren 20 und 21 zeigen auf der Rahmeneinheit 66b angeordnete Print-Zonen 90b; 92b. Die zwei separaten Print-Zonen 90b, 92b sind jeweils zur Aufnahme mindestens einer der Printplatten 46b, 172b eingerichtet. Die erste Print-Zone 90b ist an der Rahmeneinheit 66b angeordnet und erstreckt sich über alle Zonen der Rahmeneinheit 66b. Die erste Print-Zone 90b ist zur Aufnahme einer ersten Printplatte 46b eingerichtet. Die erste Printplatte 46b ist als Hauptplatine oder Funktionsplatine ausgelegt, auf der Komponenten wie Steuerchip, Bedieneinheiten, Sensorik, LED-Anzeigen oder Kommunikationsmodule (z. B. Bluetooth, NFC) angeordnet sein können. Die Montage erfolgt senkrecht zur Ebene der Printplatte 46b, sodass Rastnasen 142b in Aussparungen in der Printplatte 46b i eingeführt werden.

Die zweite Print-Zone 92b ist beabstandet von der ersten Print-Zone 90b ausgebildet.

Die zweite Print-Zone 92b nimmt eine zweite Printplatte 172b auf. Die zweite Printplatte 172b kann als eine Versorgungsplatine, als Display-Steuerung oder als sekundäre Funktionseinheiten ausgebildet sein. Die Printplatten 46b, 172b werden, unter Zuhilfenahme der Rastnasen 142b, eingeklickt oder mittels Nieten an der Rahmeneinheit 66b befestigt.

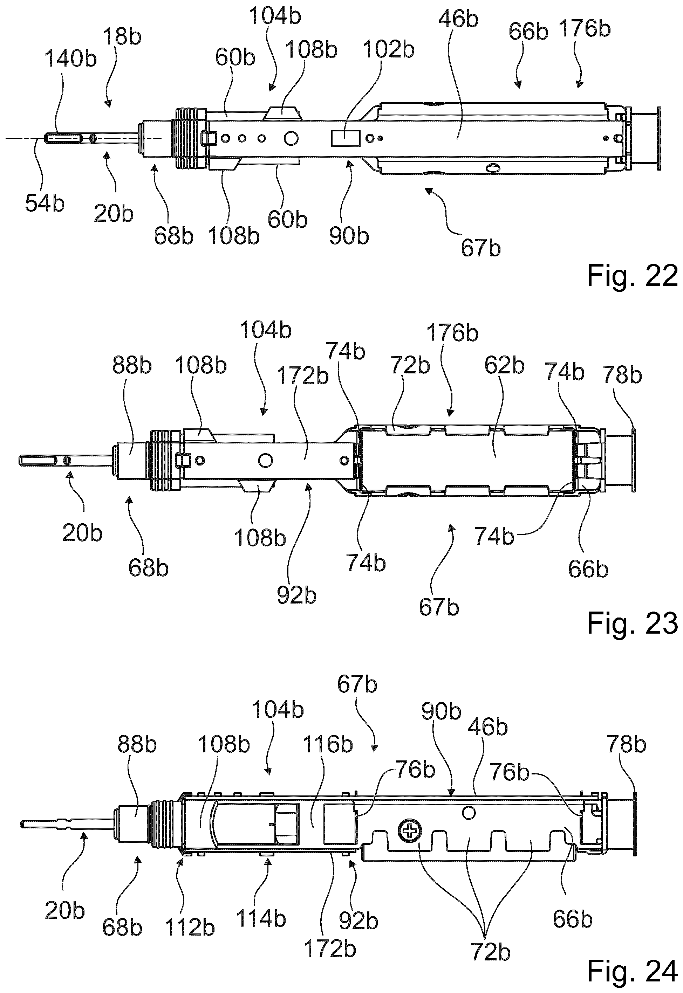

Die Figuren 22 bis 24 zeigen die Schnittstelle 18b. Die Schnittstelle 18b ist für den Anschluss einer Aufsteckbürste 12b eingerichtet.

Die dargestellte Schnittstelle 18b ist für sogenannte Sonic-Anwendungen vorgesehen. Die Schnittstelle 18b weist keinen Zapfen auf. Die Kopplung zwischen Bürstenhandteil 10b und Aufsteckbürste 12b erfolgt durch formschlüssige Steckverbindung und direkte Klemmung an der Welle 20b. Die Aufsteckbürste 12b ist direkt auf die Welle 20b aufgesteckt, ohne dass zusätzliche Verbindungselemente wie Zapfen, Adapter oder Zwischenstücke erforderlich sind.

Die Rahmeneinheit 66b nimmt die Antriebseinheit 58b und den Energiespeicher 62b auf. Die Rahmeneinheit 66b lagert die Antriebseinheit 58b in drei Punkten. Die Rahmeneinheit 66b bildet eine Aufnahme für Teile der Antriebseinheit 58b aus. Die Rahmeneinheit 66b ist in das Gehäuse 14b des elektrischen Bürstenhandteils 10b eingeschoben ausgebildet.

Die Antriebseinheit 58b ist frei von einem Rückstellelement ausgebildet. Der Elektromotor 60b wird so angesteuert, dass er eine oszillierende Hin-und-Her-Bewegung gezielt selbst erzeugt und auch zurückführt. Die Ausgestaltung ohne ein mechanisches Rückstellelement erlaubt eine frei programmierbare Bewegungscharakteristik, bei der Rücklaufgeschwindigkeit, Rücklaufwinkel und Rücklaufrichtung softwareseitig definiert werden. Eine Recheneinheit 102b kann so programmiert sein, dass sie auch ohne Rückstellmechanik eine exakt symmetrische oder gezielt asymmetrische Rückführung der Welle 20b ermöglicht.

Die feste Rahmeneinheit 66b ist von mehreren voneinander getrennten Einzelrahmen verschieden. Die Rahmeneinheit 66b ist mit mehreren Aufnahmebereichen ausgestattet, etwa für die Antriebseinheit 58b und den Energiespeicher 62b. Die feste Rahmeneinheit 66b ist zu einer Ausbildung eines vorgefertigten Moduls der Einschubeinheit 67b ausgelegt, welche an einem Stück in das Gehäuse 14b eingebracht werden kann.

Sowohl das Gehäuse 14b als auch die Einschubeinheit 67b sind so gestaltet, dass in dem Gehäuse 14b unterschiedlich aufgebaute Einschubeinheiten 67b, etwa für unterschiedliche Schnittstellen 18b, aufgenommen werden können. Das Halten, bevorzugt Fixieren, der Einschubeinheit 67b im Gehäuse 14b erfolgt an Stellen, die nicht durch andere Aufbauten oder funktionale Einheiten betroffen sind.

Die Rahmeneinheit 66b weist eine Akkuzone 176b auf. Die Rahmeneinheit 66b, bevorzugt die Einschubeinheit 67b, weist eine Ladespulenzone 178b auf. Die Rahmeneinheit 66b weist ferner eine Service-Zone 180b auf. Die Rahmeneinheit 66b weist eine Antriebszone 104b auf. Die Rahmeneinheit 66b weist zwei Printzonen 90b und 92b auf.

Die Rahmeneinheit 66b ist so ausgelegt, dass eine frühzeitige Integration der Ladespule 64b im Montageprozess möglich ist, etwa vor dem Einsetzen des Energiespeichers 62b oder der Printplatten 46b, 172b. Die Ladespule 64b wird mittels des Spulenträgers 78b mechanisch an die Rahmeneinheit 66b eingeklickt. Die Rahmeneinheit 66b ist mit der Akkuzone 176b ausgestattet, welche zur Aufnahme des Energiespeichers 62b, etwa eines Akkumulators, ausgelegt ist. Diese Akkuzone 176b ist im Bürstenhandteil direkt oberhalb der Ladespulenzone angeordnet und bildet in vertikaler Reihenfolge den nächsten Montageabschnitt. Die Akkuzone 176b ist so gestaltet, dass ein wechselbarer Energiespeicher 62b aufgenommen werden kann. Das bedeutet, dass der Energiespeicher 62b nicht fest vergossen oder verklebt, sondern lösbar in der Zone fixiert ist. Dadurch ist ein Austausch des Energiespeichers 62b möglich. Die Service-Zone 180b ist zwischen der Akkuzone 176b und der Antriebszone 104b angeordnet.

Die Service-Zone 180b kann für einen Längenausgleich der Gesamtlänge der Rahmeneinheit 66b genutzt werden, etwa zum Ausgleich von Längen beispielsweise des Akkus, Motorgehäuse oder Spulenträgers, wenn die Gesamtlänge gleichbleiben soll, die verschiedenen Bauteile sich aber in der Länge verändern. Darüber hinaus kann die Service-Zone 180b auch für automatisiertes Handling im Fertigungsprozess genutzt werden.

Die Rahmeneinheit 66b weist die Antriebszone 104b auf, welche zur Aufnahme und Lagerung des Elektromotors 60b ausgelegt ist. Der Elektromotor 60b ist innerhalb der Antriebszone 104b nicht komplett gekapselt, sondern über offene Stellen zugänglich, was eine vereinfachte Montage sowie den Austritt einer Welle 20b ermöglicht. Die Antriebszone 104b kann so ausgestaltet sein, dass sie eine durchgehende, formstabile Wandstruktur 106b aufweist, die zur Abstützung des Elektromotors 60b dient.

Zur Fixierung des Elektromotors 60b sind mehrere Wandstrukturen 106b, Anlageflächen 108b, 116b und Anschlagstrukturen 110b integriert. Der Elektromotor 60b ist zwischen Wandstrukturen 106b auf der Vorderseite und der Rückseite der Rahmeneinheit 66b gehalten. Ein wellenseitiger Endbereich des Elektromotorbereichs 112b liegt seitlich an einer Anlagefläche 108b an. Ein gegenüberliegender Elektromotorbereich 114b liegt an einer weiteren Anlagefläche 108b an, sodass der Elektromotor 60b beidseitig abgestützt ist. Zusätzlich kann entlang der Längserstreckungsachse des Elektromotors 60b eine oder mehrere weitere Anlageflächen 108b, 116b vorhanden sein, um eine Abstützung in drei Punkten zu gewährleisten. Die Welle 20b der Schnittstelle 18b ist parallel zu einer Längsachse 130b der Rahmeneinheit 66b ausgerichtet. Nach der Ausrichtung und Verdrahtung wird der Elektromotor 60b weiter in die Rahmeneinheit 66b hineingedrückt, bis er an der Rahmeneinheit 66b und zusätzlich einseitig an einer längsseitigen Fläche, der Anschlagstruktur 110b, an der Rahmeneinheit 66b anliegt.

Wenn der von dem Wellenaustritt abgewandte Endbereich des Elektromotors 60b nicht durch eine stirnseitige Wand, der Anschlagstruktur 110b, abgestützt werden kann, können Anschlagrippen oder andere Formelemente an den Anlageflächen 108b, 116b vorgesehen sein, die die Positionierung ermöglichen. Die Anlageflächen 108b, 116b sind der Form des Elektromotors 60b angepasst. Die Antriebszone 104b kann so ausgestaltet sein, dass die Welle 20b aus dem Gehäuse 14b austreten kann, um mit der Schnittstelle 18b zur Aufsteckbürste 12b verbunden zu werden. Diese offene Ausgestaltung erleichtert die Inline-Montage, erlaubt visuelle Inspektion und verbessert die thermische Entkopplung.

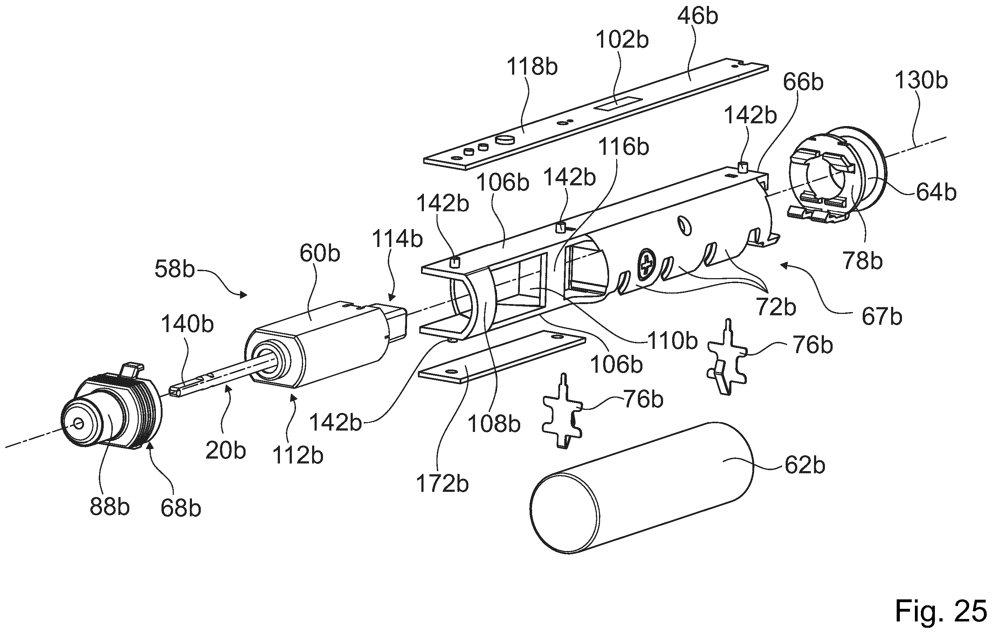

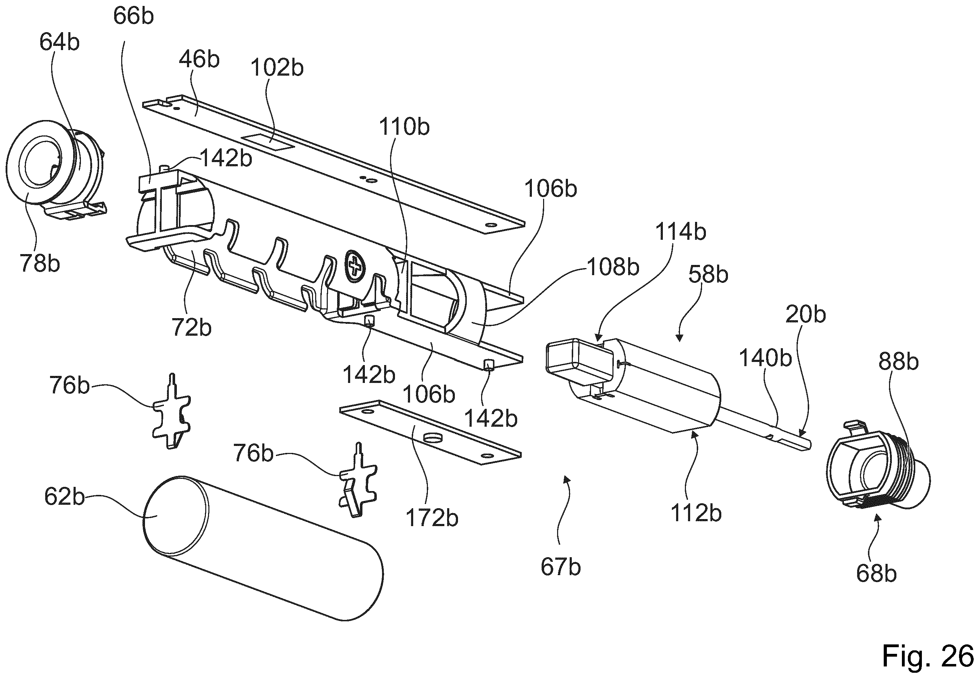

Figuren 25 und 26 zeigen Explosionsansichten der Einschubeinheit 67b. Die Antriebseinheit 58b weist den Elektromotor 60b auf. Der Elektromotor 60b ist so ausgestaltet, dass eine direkte mechanische Kopplung zwischen dem Elektromotor 60b und der Welle 20b besteht.

Der Elektromotor 60b ist für wechselnde Betriebszustände oder gezielte Bewegungsmuster eingerichtet. Der Elektromotor 60b ist derart ausgestaltet, dass er zu einer direkten, getriebelosen Übertragung einer Bewegung auf die Welle 20b eingerichtet ist. Der Elektromotor 60b ist zudem zur Übertragung überlagerter Bewegungen 136b eingerichtet. Der Elektromotor 60b ist zur getriebelosen Übertragung variierender Bewegungen 138b eingerichtet. Der Elektromotor 60b kann so programmiert werden, dass eine bestimmte Bewegungsfrequenz 120b und/oder Amplitude 122b eingehalten wird, auch bei schwankender Last. Es können Bewegungen übertragen werden, die eine Amplituden-Modulation 124b aufweisen. Ferner können Bewegungen übertragen werden, die eine Frequenz-Modulation 126b aufweisen.

Der Elektromotor 60b kann einen Stromverbrauch von 300 mA bis 800 mA aufweisen. Die Nennspannung des Elektromotors 60b liegt im Bereich von 3 V bis 4,2 V, wobei diese der Nennspannung des Energiespeichers 62b entspricht.

Die Antriebseinheit 58b kann so ausgestaltet sein, dass sie eine Einstellbarkeit durch den Benutzer erlaubt. Hierbei ist eine Ausrüstung mit verschiedenen Einstellmitteln vorhanden, die eine Anpassung der Betriebsparameter durch den Benutzer ermöglichen. Die Einstellung kann direkt am Bürstenhandteil 10b vorgenommen werden. Die Einstellmöglichkeit am Bürstenhandteil 10b selbst kann über oder mehrere Schalter 32b erfolgen.

Das elektrische Bürstenhandteil 10b weist die Recheneinheit 102b auf, welche zur Ansteuerung der Antriebseinheit 58b zur Realisierung verschiedener Drehwinkel und/oder Drehgeschwindigkeiten ausgelegt ist. Die Printplatte 46b kann reversibel oder irreversibel montiert sein. Reversible Befestigungen sind durch Hinterschnitte oder Rastnasen 142b an der Rahmeneinheit 66b realisiert. Alternativ kann eine Klemmung oder Nietung der Printplatte 46b an der Rahmeneinheit 66b eingesetzt sein. Die Printplatte 46b dient der elektrischen Verbindung von Komponenten wie Recheneinheit 102b, Energieversorgung und Signalverarbeitung. Auf der Printplatte 46b befinden sich typischerweise Leitungen, Widerstände, LEDs, Steuereinheiten, Schalter 32b, Displays sowie Kommunikationsschnittstellen wie beispielsweise NFC- oder Bluetooth-Schnittstellen.

Der Drehwinkel und/oder die Drehgeschwindigkeit der Antriebseinheit 58b ist stufenlos über die Recheneinheit 102b einstellbar. Die Recheneinheit 102b kann so ausgestaltet sein, dass sie eine stufenlose Einstellung des Drehwinkels und/oder der Drehgeschwindigkeit der Antriebseinheit 58b erlaubt. Sie kann beispielsweise geeignete Signalprofile generieren, etwa durch digitale Regelalgorithmen, pulsweitenmodulierte Signale oder variable Taktfrequenzen, mit denen die Steuerung des Elektromotors 60b in Echtzeit erfolgt. Die stufenlose Ansteuerung kann nutzergesteuert, sensorbasiert oder programmabhängig erfolgen. Die elektronische Umsetzung der stufenlosen Steuerung erfolgt innerhalb der auf einer oder mehreren Printplatten 46b, 172b integrierten Recheneinheit 102b. Die elektrische Verbindung erfolgt über auf der Printplatte 46b, 172b angeordnete Leitungsbahnen, Steckverbindungen oder Lötstellen, die in Fertigungsrichtung ausgerichtet sind. Das elektrische Bürstenhandteil 10b weist eine Bedieneinheit 44b und eine mit der Bedieneinheit 44b gekoppelte Recheneinheit 102b auf, welche zur Ansteuerung der Antriebseinheit 58b zur Realisierung von mindestens zwei verschiedenen Bewegungsmustern ausgelegt ist, wobei die Bewegungsmuster über die Bedieneinheit 44b einstellbar sind. Das Bürstenhandteil 10b weist eine Bedieneinheit 44b auf, die dem Benutzer eine direkte Eingabe von Steuerbefehlen ermöglicht. Über die Bedieneinheit 44b sind zwei unterschiedliche Bewegungsmuster einstellbar. Diese können entweder durch wiederholtes Betätigen der Bedieneinheit 44b, durch mehrstufige Schaltung oder durch eine Menüführung ausgewählt werden.

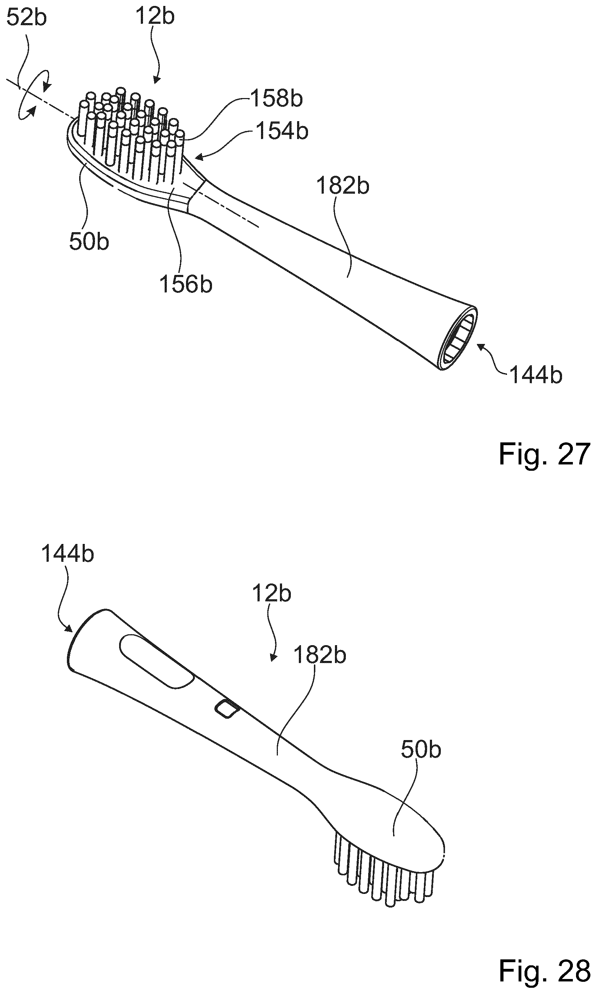

Figuren 27 und 28 zeigen eine alternative Ausführungsform einer Aufsteckbürste 12b (vgl. Figuren 13 und 14). Die elektrische Zahnbürste mit dem elektrischen Bürstenhandteil 10b weist die Aufsteckbürste 12b auf. Diese weist einen Bürstenkopf 50b auf, wobei eine Rotationsachse 52b des Bürstenkopfs 50b bzw. der ganzen Aufsteckbürste 12b im Wesentlichen parallel zur Drehachse 54b der Welle 20b verläuft. Die Aufsteckbürste 12b weist eine Schnittstellenaufnahme 144b auf.

Die Aufsteckbürste 12b ist direkt auf die Welle 20b montiert, aufgesteckt und auswechselbar. Ihre einzige Verbindung zum Bürstenhandteil 10b erfolgt über die Welle 20b. Die Welle 20b und somit die gesamte Antriebseinheit 58b tragen ihr Gewicht, die Aufsteckbürste 12b ist 1:1 mit der Antriebseinheit 58b gekoppelt. Die durch das Bürstenhandteil 10b bewegte Masse entspricht bei einem um die Längsrichtung des Bürstenhandteils 10b bewegten Bürstenkopf 50b mit einem Borstenfeld 154b der Masse der gesamten Aufsteckbürste 12b. Die Aufsteckbürste 12b mit einem Bürstenkopf 50b mit einem Borstenfeld 154b mit einer Rotationsachse 52b der oszillierenden Bewegung im Wesentlichen parallel zur Längsrichtung des Bürstenhandteils 10b ist aus einer Hartkomponente aufgebaut und kann beispielsweise aus Polypropylen bestehen. Der Einsatz von Weichkomponenten 30b kann sowohl zur Ausformung von Reinigungselementen im Bürstenkopf 50b als auch als Schutzschicht um das Aufsteckbürstengehäuse 182b dienen, um ein Stoßen des Körpers gegen die Zähne des Benutzers zu dämpfen. Der Körper der Aufsteckbürste 12b mit einer Rotationsachse 52b im Wesentlichen parallel zur Längsrichtung des Bürstenhandteils 10b kann durch ein Spritzgießverfahren hergestellt sein. Die Schnittstellenaufnahme 144b kann in einem Schritt mit dem Aufsteckbürstengehäuse 182b im Spritzgießverfahren hergestellt sein. Alternativ bzw. vorzugsweise wird die Schnittstellenaufnahme 144b als separates Teil hergestellt, welches in das Aufsteckbürstengehäuse 182b montiert wird.

Bei der Sonic--Anwendung entspricht die Auslenkung des Bürstenkopfs 50b einem Drehwinkel der Welle 20b. Die Bewegungsfrequenz 120b des Bürstenkopfs 50b entspricht der Bewegungsfrequenz 120b der Welle 20b. Der Bürstenkopf 50b ist mit der Welle 20b direkt oder über eine spielfreie Kupplung drehfest verbunden. Daraus ergibt sich eine 1:1-Übertragung der Bewegungscharakteristik: Der Bürstenkopf 50b führt dieselbe Bewegung wie die Welle 20b aus. Diese Bewegung kann mit geringer Amplitude 122b (z. B. wenige Grad) bei hoher Bewegungsfrequenz 120b (z. B. 150-370 Hz) erfolgen.

Die Recheneinheit 102b ermöglicht Bewegungsparameter wie Bewegungsfrequenz 120b, Dauer oder Frequenzmodulation 126b direkt auf die Welle 20b anzuwenden und dadurch eine präzise Steuerung der Bürstenkopfdynamik.

Die Figuren 29 bis 34 zeigen verschiedene Ausführungsbeispiele unterschiedlicher Steuerungen der Antriebseinheit 58a; 58b in unterschiedlichen Ansichten und gelten entsprechend für beide Ausführungsvarianten. In den Abbildungen ist in der horizontalen Richtung (x-Achse) die Zeitkomponente dargestellt, während in der vertikalen Richtung (y-Achse) die Auslenkung des Bürstenkopfs dargestellt ist.

Es können verschiedene Ansteuerungen eines Elektromotors 60a; 60b verwendet werden, welche verschiedene Bewegungsformen der Welle 20a; 20b erzeugen. Diese lassen sich in uniforme Bewegungen 134a; 134b, überlagerte Bewegungen 136a; 136b sowie variierende Bewegungen 138a; 138b unterteilen.

Uniforme Bewegungen 134a; 134b sind regelmäßige, gleichbleibende Bewegungen.

Bei überlagerten Bewegungen 136a; 136b wird eine uniforme Bewegung 134a; 134b mit einer weiteren Bewegung 164a; 164b überlagert. Ein Beispiel hierfür ist, dass eine langsame Bewegung mit einem maximalen Auslenkwinkel von 40° mit einer schnellen Bewegung mit einem maximalen Auslenkwinkel von z. B. 8°, kombiniert wird. Dadurch ergibt sich eine komplexe Bewegung mit mehreren Komponenten.

Auch variierende Bewegungen 138a; 138b (veränderliche Bewegungen) sind möglich. Hierbei ändern sich Bewegungsmuster dynamisch, etwa durch sich ändernde Bewegungsfrequenzen 120a; 120b und/oder sich ändernde Amplituden 122a; 122b bzw. Auslenkwinkel.

Bei einer Amplituden-Modulation 124a; 124b können verschieden große Amplituden 122a; 122b realisiert werden. Ein Beispiel ist eine regelmäßige Sinusbewegung mit unterschiedlichen Amplituden 122a; 122b, also variierender Auslenkung bei gleichbleibender Frequenz. Bei einer Frequenz-Modulation 126a; 126b kann der Bewegungsablauf mit verschiedenen Drehzahlen erfolgen, was einer Frequenzänderung entspricht. Ein Beispiel ist eine Sinusbewegung mit gleichbleibender Amplitude 122a; 122b, jedoch mit unterschiedlichem Nulldurchgangs-Abstand, also variierender zeitlicher Dichte der Schwingung. (In den Figuren 30 bis 32 sind exemplarisch verschiedene Bewegungsfrequenzen 120a; 120b der überlagerten Bewegungen 136a; 136b dargestellt.) Es können niedrig- und hochfrequente Bewegungen überlagert werden, um unterschiedliche Reinigungseffekte zu erzielen.

Das Bürstenhandteil 10a; 10b kann einstellbare Parameter aufweisen, welche eine gezielte Steuerung der Bewegungscharakteristik der Welle 20a; 20b erlauben. Hierbei sind die Drehgeschwindigkeit insbesondere die Bewegungsfrequenz 120a; 120b sowie der Drehwinkel insbesondere die Amplitude 122a; 122b der Welle 20a; 20b regelbar. Die Bewegungsfrequenz (Drehgeschwindigkeit) 120a; 120b der Welle 20a; 20b kann individuell angepasst werden. Die Frequenz kann zwischen 2,2 Hz und 7 Hz liegen, um eine sanfte, aber wirksame oszillierende Bewegung 128a; 128b zu erzielen. Für die überlagerte Nebenbewegung kann ein Frequenzbereich von 120 Hz bis 160 Hz gewählt werden, was eine mikrooszillierende Überlagerung der Hauptbewegung erlaubt. Die Drehwinkelverstellung der Welle 20a; 20b ist ebenfalls parametrierbar und unterstützt verschiedene Reinigungsprofile. Die Hauptbewegung kann einen Drehwinkel aus der Nulllage pro Seite von 15° bis 45° umfassen. Für die überlagerte Bewegung 136a; 136b ist ein separater Drehwinkelbereich aus der Nulllage pro Seite von 5° bis 30° vorgesehen.

Programme bzw. Modi können als Kombinationen aus Bewegungsfrequenz 120a; 120b, Amplitude 122a; 122b und deren zeitlicher Abfolge definiert sein. Dabei können uniforme Bewegungen 134a; 134b, überlagerte Bewegungen 136a; 136b sowie variierende Bewegungen 138a; 138b einzeln oder kombiniert ausgeführt werden.

Figuren 29 bis 34 zeigen verschiedene Ansteuerungen des Elektromors 60a; 60b. Die Antriebseinheit 58a; 58b weist aus der Nulllage in beide Richtungen jeweils einen Auslenkungswinkel von 15° bis 45° auf, kann einen Bereich von 25° bis 35° abdecken. Die Antriebseinheit 58a; 58b ist so ausgelegt, dass sie eine Schwenkbewegung oder eine Pendelbewegung um eine definierte Mittelstellung ermöglicht. Die Antriebseinheit 58a; 58b ist so ausgestaltet, dass sie aus einer mittleren Ruhelage in beide Drehrichtungen auslenkbar ist. Der maximale Auslenkungswinkel liegt zwischen 15° und 45°, bezogen auf die Nulllage. Die Auslenkung kann kontinuierlich sinusförmig oder diskret stufenweise erfolgen.

Die Antriebseinheit 58a; 58b kann eine Frequenz von 1,5 Hz bis 300 Hz aufweisen. Die Antriebseinheit 58a; 58b kann bei einer federlosen Ausgestaltung eine Frequenz von 1,5 Hz bis 300 Hz aufweisen. Die Frequenz bezeichnet die Anzahl der vollständigen Hin-und-Her-Bewegungszyklen pro Sekunde. In einem Betriebszustand kann die Antriebseinheit 58a; 58b eine Frequenz von 80 Hz bis 140 Hz erreichen. In einem weiteren Betriebszustand kann die Frequenz zwischen 100 Hz und 260 Hz liegen. In einer Ausführung im oszillierenden Modus kann die Frequenz 80 Hz bis 140 Hz betragen. Bei einer Auslegung für Sonic-Anwendungen kann die Frequenz zwischen 100 Hz und 260 Hz liegen.

Ferner ist eine Ausführung des Elektromotors 60a; 60b mit einem Rückstellelement, beispielsweise einer Rückstellfeder, und/oder einem funktionsgleichen Bauteil zur Rückstellung und/oder einem Lastausgleich ausgestatteten Servomotor denkbar. In dieser Ausführung mit Rückstellelement kann der Elektromotor 60b eine Frequenz von 150 Hz bis 370 Hz aufweisen, vorzugsweise zwischen 220 Hz und 340 Hz. Der Elektromotor 60b mit Rückstellelement und/oder einem funktionsgleichen Bauteil ist ebenfalls dazu eingerichtet, überlagerte Oszillationsbewegungen 128a; 128b bereitzustellen. Die Antriebseinheit 58a; 58b erlaubt in dieser Konfiguration Betriebsmodi wie "Clean" mit 260 Hz oder "Sensitive" mit 330 Hz.

Die Figur 29 zeigt ein Bewegungsmuster einer uniformen Bewegung 134a; 134b. Uniforme Bewegungen 134a; 134b sind regelmäßige, gleichbleibende Bewegungen. Ein Beispiel für eine uniforme Bewegung 134a; 134b ist eine Sinus-Schwingung 160a; 160b, bei der der Bewegungsverlauf stetig periodisch verläuft. Alternativ kann auch eine Rechteck-Schwingung als uniforme Bewegung eingesetzt werden, bei der sich zwei feste Amplituden in definierten Intervallen abwechseln.

Die Figuren 30 bis 32 zeigen überlagerte Bewegungen 136a; 136b mit unterschiedlichen Wellenlängen. Bei überlagerten Bewegungen 136a; 136b wird eine uniforme Bewegung 134a; 134b mit einer weiteren Bewegung 164a; 164b überlagert. Ein Beispiel hierfür ist, dass eine langsame Bewegung mit einem 40°-Winkel mit einer schnellen Bewegung mit kleinem Winkel, z. B. 8°, kombiniert wird. Dadurch ergibt sich eine komplexe Bewegung mit mehreren Bewegungs-Komponenten. In den Figuren sind exemplarisch verschiedene Frequenzen der uniformen Bewegung 134a; 136b und der weiteren Bewegungen 136a; 136b (der Überlagerungen) dargestellt. Es können niedrig- und hochfrequente Bewegungen überlagert werden, um unterschiedliche Reinigungseffekte zu erzielen.

Die Antriebseinheit ist in einem Betriebszustand zur Erzeugung einer überlagerten Schwingbewegung ausgelegt. Die Welle 20a; 20b führt dabei nicht nur eine einfache gleichmäßige Bewegung aus, sondern es ist eine primäre uniforme Bewegung 134a; 134b mit einer weiteren Bewegung 164a; 164b überlagert. Die überlagerte Bewegung 164a; 164b kann beispielsweise durch Superposition einer hochfrequenten Oszillation auf eine langsamere Hauptbewegung realisiert sein. Die Hauptbewegung kann dabei eine oszillierende Rotation mit niedriger Frequenz und größerem Drehwinkel darstellen, während die überlagerte Bewegung eine hochfrequente Schwingung mit geringer Amplitude ist. Beide Bewegungsanteile wirken gemeinsam auf die Welle 20a; 20b der Schnittstelle 18a; 18b zur Aufsteckbürste 12a; 12b, wodurch ein kombiniertes Bewegungsmuster erzeugt wird.

Die Ansteuerung der überlagerten Bewegung 136a; 136b kann über die Recheneinheit 102a; 102b erfolgen, welche entsprechende Steuersignale an die Antriebseinheit 58a; 58b ausgibt. Dabei kann die überlagerte Bewegung 136a; 136b dauerhaft, zyklisch oder abschnittsweise innerhalb eines Reinigungsprogramms zugeschaltet werden. Die Erzeugung der überlagerten Bewegung 136a; 136b kann entweder durch gezielte Variation des Stromsignals, durch gepulste Ansteuerung oder über eine elektronische Taktung mit zwei Frequenzkomponenten erfolgen. Der Betriebszustand ist als Teil eines vordefinierten Bewegungsmusters innerhalb eines wählbaren Reinigungsmodus hinterlegt, kann aber alternativ auch durch Sensorik oder Benutzereingabe über die Bedieneinheit 44a; 44b aktiviert werden.

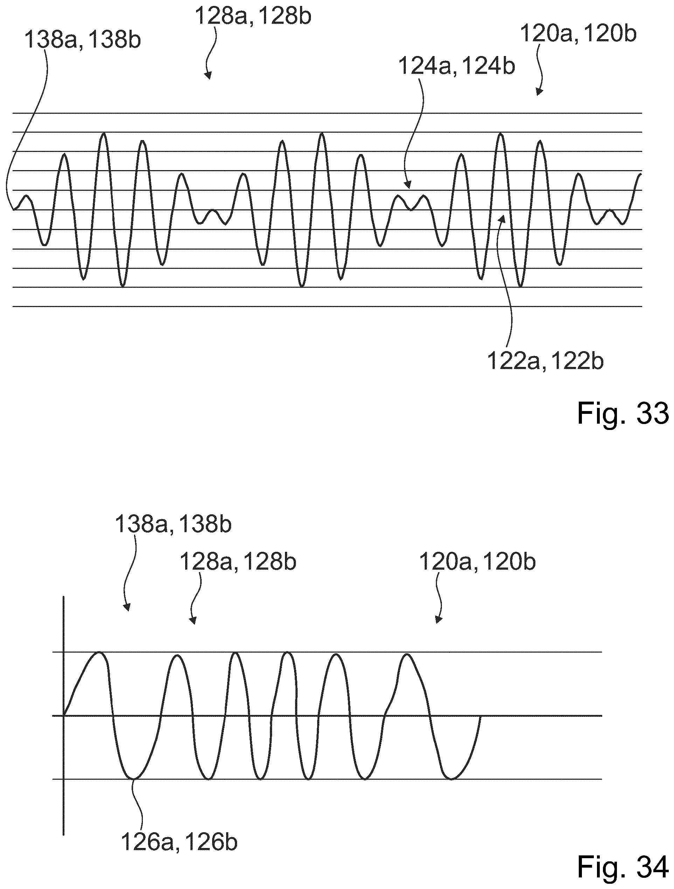

Die Figuren 33 und 34 zeigen variierende Bewegungen 138a; 138b. Hierbei ändern sich Bewegungsmuster dynamisch, etwa durch sich ändernde Frequenzen und/oder sich ändernde Auslenkungen/Amplituden. Bei einer Amplituden-Modulation 124a; 124b können verschieden große Auslenkungen realisiert werden. Ein Beispiel ist eine regelmäßige sinusförmige Bewegung mit unterschiedlichen Amplituden, also variierender Auslenkung bei gleichbleibender Frequenz. Bei einer Frequenz-Modulation 126a; 126b kann der Bewegungsablauf mit verschiedenen Drehzahlen erfolgen, was einer Frequenzänderung entspricht. Ein Beispiel ist eine sinusförmige Bewegung mit gleichbleibender Amplitude, jedoch mit unterschiedlichem Nulldurchgangs-Abstand, also variierender zeitlicher Dichte der Schwingung.

### Bezugszeichenliste

- 10: Bürstenhandteil
- 12: Aufsteckbürste
- 14: Gehäuse
- 18: Schnittstelle
- 20: Welle
- 22: Deckel
- 24: Griffbereich
- 28: Hartkomponente
- 30: Weichkomponente
- 32: Schalter
- 36: Bajonett-Verschluss
- 38: Vertiefung / Vorsprung
- 40: Dichteinheit
- 44: Bedieneinheit
- 46: Printplatte
- 48: Gehäusedurchbruch
- 50: Bürstenkopf
- 52: Rotationsachse
- 54: Drehachse
- 56: Zapfen
- 58: Antriebseinheit
- 60: Elektromotor
- 62: Energiespeicher
- 64: Ladespule
- 66: Rahmeneinheit
- 67: Einschubeinheit
- 68: Dichteinheit
- 70: Vorsprung
- 72: Klemmrippe
- 74: Anschlagelement
- 76: Kontaktblech
- 78: Spulenträger
- 82: Balgdichtung
- 84: O-Ring
- 86: Dichtkappe
- 88: Dichtkappe
- 90: Print-Zone
- 92: Print-Zone
- 94: Montagering
- 96: Nut
- 98: Kamm
- 102: Recheneinheit
- 104: Antriebszone
- 106: Wandstruktur
- 108: Anlagefläche
- 110: Anschlagstruktur
- 112: Elektromotorbereich
- 114: Elektromotorbereich
- 116: Anlagefläche
- 118: Steuerelektronik
- 120: Bewegungsfrequenz
- 122: Amplitude
- 124: Amplituden-Modulation
- 126: Frequenz-Modulation
- 128: oszillierende Bewegung
- 130: Längsachse der Rahmeneinheit
- 134: uniforme Bewegung
- 136: überlagerte Bewegung
- 138: variierende Bewegung
- 140: Metallwelle
- 142: Rastnase
- 144: Schnittstellenaufnahme
- 146: Aufnahmebereich
- 148: Festlegeelement
- 150: Antriebswelle
- 152: Lagerpin
- 154: Borstenfeld
- 156: Borstenverankerungsfläche
- 158: Pflegeborsten
- 160: Sinus-Schwingung
- 164: weitere Bewegung
- 166: Endbereich
- 168: Endbereich
- 170: O-Ring
- 172: Printplatte
- 174: Anzeigeelement
- 176: Akkuzone
- 178: Ladespulenzone
- 180: Service-Zone
- 182: Aufsteckbürstengehäuse

## Patentansprüche

1. Elektrisches Bürstenhandteil (10a; 10b), insbesondere Zahnbürstenhandteil, mit zumindest einer Schnittstelle (18a; 18b) zu einer Kopplung mit einer Aufsteckbürste (12a; 12b), mit zumindest einem Gehäuse (14a; 14b), mit zumindest einer in dem Gehäuse (14a; 14b) aufgenommenen Einschubeinheit (67a; 67b) mit einer Antriebseinheit (58a; 58b) zu einem Antrieb der Aufsteckbürste (12a; 12b), welche zumindest einen Elektromotor (60a; 60b) umfasst, mit zumindest einem Energiespeicher (62a; 62b) zu einer Versorgung der Antriebseinheit (58a; 58b) mit Energie, und mit der Schnittstelle (18a; 18b), welche eine Welle (20a; 20b) mit einer Drehachse (54a; 54b) aufweist, welche sich zumindest im Wesentlichen parallel zu einer Haupterstreckungsrichtung des Gehäuses (14a; 14b) erstreckt,
**dadurch gekennzeichnet, dass**
die Antriebseinheit (58a; 58b), insbesondere der Elektromotor (60a; 60b) der Antriebseinheit (58a; 58b), zu einem direkten Antrieb der Welle (20a; 20b) der Schnittstelle (18a; 18b) vorgesehen ist.

2. Elektrisches Bürstenhandteil (10a; 10b) nach Anspruch 1,
**dadurch gekennzeichnet, dass**
die Antriebseinheit (58a; 58b), insbesondere der Elektromotor (60a; 60b), zu einer direkten Erzeugung einer oszillierenden Bewegung (128a; 128b) der Welle (20a; 20b) vorgesehen ist, wobei eine Bewegung der Welle (20a; 20b) dazu vorgesehen ist, genau eine oszillierende Hin-und-Her-Bewegung (128a; 128b) des Bürstenkopfs (50a; 50b) zu erzeugen.

3. Elektrisches Bürstenhandteil (10a; 10b) nach einem der vorhergehenden Ansprüche,
**gekennzeichnet durch**
die zumindest eine, in dem Gehäuse (14a; 14b) angeordnete, insbesondere einstückig ausgeführte, Einschubeinheit (67a, 67b), insbesondere eine Rahmeneinheit (66a; 66b), welche zumindest teilweise die Antriebseinheit (58a; 58b) und den Energiespeicher (62a; 62b) aufnimmt.

4. Elektrisches Bürstenhandteil (10a; 10b) nach Anspruch 1 oder 3,
**dadurch gekennzeichnet, dass**
der Elektromotor (60a; 60b) der Antriebseinheit (58a; 58b) von einem Schwinganker-Elektromotor, einem bipolaren Elektromotor (60a; 60b), oder einem Servomotor, gebildet ist.

5. Elektrisches Bürstenhandteil (10a; 10b) nach einem der vorhergehenden Ansprüche,
**dadurch gekennzeichnet, dass**
die Antriebseinheit (58a; 58b) von einem bürstenlosen Elektromotor (60a; 60b) gebildet ist.

6. Elektrisches Bürstenhandteil (10a; 10b) nach einem der vorhergehenden Ansprüche,
**dadurch gekennzeichnet, dass**
die Welle (20a; 20b) von einer Metallwelle (140a; 140b) gebildet ist.

7. Elektrisches Bürstenhandteil (10a) nach einem der vorhergehenden Ansprüche, **dadurch gekennzeichnet, dass**
die Schnittstelle (18a) zumindest einen drehfest mit dem Gehäuse (14a) verbundenen Zapfen (56a), durch welchen sich die Welle (20a) erstreckt, aufweist, wobei der Zapfen (56a) dazu vorgesehen ist, zumindest zu einem Großteil drehfest in der Aufsteckbürste (12a) aufgenommen zu werden.

8. Elektrisches Bürstenhandteil (10a; 10b) nach einem der vorhergehenden Ansprüche,
**gekennzeichnet durch**
zumindest eine Recheneinheit (102a; 102b), welche zu einer Ansteuerung der Antriebseinheit (58a; 58b) zu einer Realisierung verschiedener Drehwinkel und/oder Drehgeschwindigkeit vorgesehen ist und mittels deren Anpassung, insbesondere Veränderung, entsprechende Bewegungsmuster vorgesehen sind.

9. Elektrisches Bürstenhandteil (10a; 10b) nach Anspruch 8,
**dadurch gekennzeichnet, dass**
der Drehwinkel und/oder die Drehgeschwindigkeit der Antriebseinheit (58a; 58b) stufenlos über die Recheneinheit (102a; 102b) einstellbar ist.

10. Elektrisches Bürstenhandteil (10a; 10b) nach einem der vorhergehenden Ansprüche,
**gekennzeichnet durch**
zumindest eine Bedieneinheit (44a; 44b) und zumindest eine mit der Bedieneinheit (44a; 44b) gekoppelte Recheneinheit (102a; 102b), welche zu einer Ansteuerung der Antriebseinheit (58a; 58b) zu einer Realisierung zumindest zweier verschiedener Bewegungsmuster vorgesehen ist, wobei die Bewegungsmuster über die Bedieneinheit (44a; 44b) einstellbar sind.

11. Elektrisches Bürstenhandteil (10a; 10b) nach einem der vorhergehenden Ansprüche,
**dadurch gekennzeichnet, dass**
die Antriebseinheit (58a; 58b) in zumindest einem Betriebszustand zu einer Erzeugung einer überlagerten Bewegung (136a; 136b) eingerichtet ist.

12. Elektrisches Bürstenhandteil (10a; 10b) nach einem der vorhergehenden Ansprüche,
**dadurch gekennzeichnet, dass**
die Antriebseinheit (58a; 58b), insbesondere die Welle (20a; 20b), aus der Nulllage in beide Richtungen jeweils einen Auslenkungswinkel von 3° bis 45°, vorzugsweise von 4° bis 25°, aufweist.

13. Elektrisches Bürstenhandteil (10a; 10b) nach einem der vorhergehenden Ansprüche,
**dadurch gekennzeichnet, dass**
die Antriebseinheit (58a; 58b) frei von einem Rückstellelement ausgebildet ist.

14. Elektrisches Bürstenhandteil (10a; 10b) nach zumindest einem der Ansprüche 1 bis 12,
**dadurch gekennzeichnet, dass**
die Antriebseinheit (58a; 58b) zumindest ein Rückstellelement aufweist.

15. Elektrisches Bürstenhandteil (10a; 10b) nach einem der vorhergehenden Ansprüche,
**dadurch gekennzeichnet, dass**
die Antriebseinheit (58a; 58b), insbesondere die Welle (20a; 20b), eine oszillierende Bewegung (128a; 128b) mit einer Frequenz von 1,5 Hz bis 370 Hz aufweist.

16. Elektrisches Bürstenhandteil (10a; 10b) nach einem der Ansprüche 1 bis 14, **dadurch gekennzeichnet, dass**
die Antriebseinheit (58a; 58b) mit einem Rückstellelement eine oszillierende Bewegung (128a; 128b) mit einer Frequenz von 150 Hz bis 370 Hz, vorzugsweise von 220 Hz bis 340 Hz, aufweist.

17. Elektrisches Bürstenhandteil (10a; 10b) nach Anspruch 16,
**dadurch gekennzeichnet, dass**
die oszillierende Bewegung (128a; 128b) in einem ersten Reinigungsmodus eine Frequenz zwischen 240 Hz und 280 Hz aufweist.

18. Elektrisches Bürstenhandteil (10a; 10b) zumindest nach Anspruch 16, **dadurch gekennzeichnet, dass**
die oszillierende Bewegung (128a; 128b) in einem zweiten Reinigungsmodus eine Frequenz zwischen 310 Hz und 340 Hz aufweist.

19. Elektrische Zahnbürste mit einem elektrischen Bürstenhandteil (10a) nach einem der vorhergehenden Ansprüche und mit einer Aufsteckbürste (12a), **dadurch gekennzeichnet, dass**
die Aufsteckbürste (12a) einen drehbar gelagerten Bürstenkopf (50a) aufweist, wobei eine Rotationsachse (52a) des Bürstenkopfs (50a) im Wesentlichen senkrecht zur Welle (20a) der Schnittstelle (18a) verläuft.

20. Elektrische Zahnbürste nach Anspruch 19,
**dadurch gekennzeichnet, dass**
die Aufsteckbürste (12a) eine Antriebswelle (150a) aufweist, welche in einem mit dem elektrischen Bürstenhandteil (10a) verbundenen Zustand drehfest mit der Welle (20a) der Antriebseinheit (58a; 58b), insbesondere dem Elektromotor (60a; 60b), verbunden ist.

21. Elektrische Zahnbürste nach Anspruch 20,
**dadurch gekennzeichnet, dass**
die Antriebswelle (150a) der Aufsteckbürste (12a) in einem Betrieb dazu vorgesehen ist, den Bürstenkopf (50a) oszillierend anzutreiben.

22. Verfahren zur Herstellung des elektrischen Bürstenhandteils (10a; 10b) nach einem der Ansprüche 1 bis 18.
